# EUROPEAN PATENT SPECIFICATION

(11) **EP 0 926 534 B1**
(45) Date of publication and mention of the grant of the patent: **09.08.2006**
(21) Application number: 98310722.8
(22) Date of filing: 24.12.1998
(51) Int. Cl.: G02F 1/1335, G02B 5/30, C09K 19/00, G02F 1/139, G02F 1/133

(54) **Liquid crystal displays**
Flüssigkristallanzeigen
Affichages à cristal liquide

(30) Priority: 26.12.1997 JP 36075197; 26.12.1997 JP 36075297
(43) Date of publication of application: 30.06.1999
(73) Proprietor: Nippon Mitsubishi Oil Corporation, Tokyo (JP)
(72) Inventor: Yoda, Eiji, Yokohama-shi, Kanagawa (JP); Numao, Yosuke, Yokohama-shi, Kanagawa (JP); Toyooka, Takehiro, Yokohama-shi, Kanagawa (JP)
(74) Representative: Ritter, Stephen David

(56) References cited:
- EP-A- 0 871 059
- EP-A- 0 881 522
- US-A- 5 578 243
- US-A- 5 583 679

## Description

### Field of the Invention

The present invention relates to twisted nematic liquid crystal displays with improvements in viewing angle characteristics of display contrast, gray scale characteristics, and nominal color.

### Background of the Invention

Active-drive twisted nematic liquid crystal displays (abbreviated hereinafter to TN-LCDs) using TFT elements or MIM elements have widely spread as displays for note personal computers, portable TV sets, portable network terminals etc. by virtue of their pictures comparable to CRT when viewed from the front, in addition to characteristics inherent in LCDs, such as thin thickness, light weight, and low-energy consumption. However, with respect to conventional TN-LCDs, the problem of viewing angle i.e. change in nominal colors when viewed diagonally or reduction in indication contrast is essentially inevitable due to the refractive anisotropy in liquid crystalline molecules, so there is strong demand for their improvements, and various attempts have been made therefor.

There are the following proposals, developments and attempts: a method of dividing one image element and then changing the voltage applied to each image element at constant rate (half tone gray scale method), a method of dividing one image element and then changing the direction of liquid crystal molecules raising in each image element (domain division method) , a method of applying a traverse electric field to liquid crystals (IPS method), a method of driving vertically oriented liquid crystals (VA liquid crystal method), and a method of combining a bend orientation cell with an optical compensation plate (OCB method).

These methods achieve certain effects, but orientation films, electrodes and liquid crystalline orientation should be changed so that it is necessary to establish production techniques and install additional production facilities therefor, thus making production difficult and resulting in high costs.

On one hand, there is a method of widening a viewing angle by integrating an optical compensation film in conventional TN-LCD without changing the structure of TN-LCD. This method requires neither improvement nor installation of facilities for producing TN-LCDs, thus being superior in costs and advantageous in easy usability, so this method attracts attention and there are many proposals.

The reason for the problem of the viewing angle in TN-LCD in the normally white (NW) mode lies in the orientation of liquid crystals in the cell when indicated in black by application of voltage. In this case, the liquid crystals are oriented nearly perpendicularly to exhibit optically positive uniaxial anisotropy. Accordingly, it is proposed that a film exhibiting optically negative uniaxial anisotropy is used as an optical compensation film for widening a viewing angle in order to compensate for the positive uniaxial anisotropy when indicated in black on the liquid crystal cell. Further, in the view of the fact that even when indicated in black, the orientation of liquid crystals in a cell is tilted or parallel to the interface of the cell in the vicinity of the interface of an orientation film, it is also proposed that a negative uniaxial film with a tilted optical axis is used in compensation to improve the effect of widening the viewing angle.

For example, JP 4-349424A and JP 6-250166A propose an optical compensation film using a cholesteric film with a tilted spiral axis as well as LCD using the same. However, the cholesteric film with a tilted spiral axis is difficult to produce, and actually these patent applications do not contain any description of a method for providing such a spiral axis. Further, JP 5-249547A and JP 6-33197A propose LCD using a negative uniaxial anisotropy compensator with a tilted optical axis, and as a specific embodiment a multi-layer thin film compensator is used. Further, JP 7-146409A and JP 8-5837A propose an optical compensation film with discotic liquid crystals oriented to be tilted as a negative uniaxial anisotropy compensation film with a tilted optical axis, as well as LCD using the same. However, the discotic liquid crystals have a complex chemical structure and requires cumbersome procedures for synthesis. In addition, they are low-molecular liquid crystals, so their formation into films requires complex processes such as photo-crosslinkage and involves difficulty in industrial process, thus resulting in high costs.

As another form of the compensation film, there is proposed an orientation film using a liquid crystalline polymer with positive uniaxial anisotropy. For example, JP 7-140326A proposes an LCD compensation film consisting of a liquid crystalline polymer film with twisted tilt orientation, and this film is used for widening the viewing angle of LCD. Also, EP 0 881 522 provides a twisted nematic liquid crystal device with a wide viewing angle, which contains at least one specific compensating film essentially constituted of a liquid crystal polymer with optically positive uniaxial anisotropy, the liquid crystal polymer having a hybrid orientation which has been fixed in the liquid crystalline state. Furthermore, US 5583679 discloses a twisted nematic liquid crystal display with improved viewing angle comprising a compensation film made from a liquid crystalline polymer with optically negative uniaxial anisotropy, wherein a nematic hybrid orientation has been fixed in the liquid crystalline state. However, simultaneous introduction of twisted orientation and tilt orientation is industrially not easy. As analogous techniques, JP 7-198942A and JP 7-181324A also propose a viewing angle compensation plate consisting of a film in which nematic liquid crystalline polymers are oriented such that their optical axes intersect the plate face. However, in this case too, the compensation film having the optical axis simply tilted is used, so it cannot be the that the effect of widening the viewing angle is adequate.

### Objects of the Invention

The object of the invention is to solve the above problem and in particular to provide twisted nematic liquid crystal displays with higher contrast and wider viewing angles than ever by combination of a specific twisted nematic liquid crystal cell with a nematic hybrid orientation compensation film.

### Summary of the Invention

That is, the present invention, in the first aspect, resides in a twisted nematic liquid crystal display comprising at least one compensation film formed substantially from a liquid crystalline polymer exhibiting optically positive uniaxial anisotropy, wherein nematic hybrid orientation formed by the liquid crystalline polymer in a liquid crystalline state has been fixed; a twisted nematic liquid crystal cell constituted of a pair of transparent substrates equipped with electrodes and nematic liquid crystals sandwiched between the substrates, two polarizing plates arranged above and below the liquid crystal cell; and a driving system for applying a driving voltage to the twisted nematic liquid crystal cell; characterised in that the liquid cystalline polymer exhibits optically positive uniaxial anisotropy, and the driving system is adapted, in use, to apply a driving voltage to the twisted nematic liquid crystal cell when indicated in white, such that the tilt angle of the nematic liquid crystal molecule constituting the liquid crystal cell is in the range of 10 to 30°.

The present invention, in a second aspect, provides a twisted nematic liquid crystal display, comprising at least one compensation film formed substantially from a liquid crystalline polymer exhibiting optically positive uniaxial anisotropy, wherein nematic hybrid orientation formed by the liquid crystalline polymer in a liquid crystalline state has been fixed, a twisted nematic liquid crystal cell constituted of a pair of transparent substrates equipped with electrodes and nematic liquid crystals sandwiched between the substrates, two polarizing plates arranged up and down on the liquid crystal cell, and a driving system; wherein the product (Δnd) of the refractive anisotropy (Δn) of the nematic liquid crystals constituting the liquid crystal cell, multiplied by the thickness (d) of the liquid crystal layer in the liquid crystal cell, is in the range of 200 nm to 500 nm.

The present invention further provides a method for driving a twisted nematic liquid crystal display, comprising: at least one compensation film formed substantially from a liquid crystalline polymer, wherein nematic hybrid orientation formed by the liquid crystalline polymer in a liquid crystalline state has been fixed; a twisted nematic liquid crystal cell constituted of a pair of transparent substrates equipped with electrodes and nematic liquid crystals sandwiched between the substrates, two polarizing plates arranged above and below the liquid crystal cell; and a driving system for applying a driving voltage to the twisted nematic liquid crystal cell; said method comprising applying a driving voltage to the twisted nematic liquid crystal cell, characterised in that when the cell is indicated in white, the driving voltage is set such that the tilt angle of the nematic liquid crystal molecule constituting the liquid crystal cell is in the range of 10 to 30°, and in that the liquid crystalline polymer exhibits optically positive uniaxial anisotropy.

### Brief Description of the Drawings

Fig. 1 is a generalized drawing of the tilt direction in the present invention.
Fig. 2 is a generalized drawing of the pre-tilt direction in the present invention.
Fig. 3 is a drawing showing the arrangement of the optical measurement system used for measuring the tilt angle of the compensation film.
Fig. 4 shows the relationship of the axial direction with the sample and the polarizing plate in the optical measurement system used for measuring the tilt angle of the compensation film.
Fig. 5 shows the relationship between the apparent retardation value and the tilt angle of the sample in the Reference Example 1.
Fig. 6 shows the relationship between the thickness of the film and the apparent retardation value in the front of the compensation film after immersion in the Reference Example 1.
Fig. 7 is a generalized drawing of the orientation structure of the compensation film.
Fig. 8 shows the axial arrangement of each optical element in Examples 1 and 2.
Fig. 9 shows the iso-contrast curve in Example 1.
Fig. 10 shows the iso-contrast curve in Example 2.
Fig. 11 shows the iso-contrast curve in Comparative Example 1.
Fig. 12 is a generalized drawing of the twisted nematic liquid crystal cell when indicated in white, wherein 1, 1' are electrodes; 2, 2' are transparent substrates; 3, 3' are compensation films; 4, 4' are polarizing plates; 5 is a nematic liquid crystal molecule; 6 is a driving twisted nematic liquid crystal cell; and 7 is a central part of the liquid crystal cell in the thickness direction.
Fig. 13 is a drawing showing the arrangement of the optical measurement system used for measuring the tilt angle of the liquid crystal molecule present in the center in the thickness direction of the twisted nematic liquid crystal cell in Reference Example 2.
Fig. 14 shows the relationship of the axial direction with the sample and the polarizing plate in the optical measurement system used for measuring the tilt angle of the liquid crystal molecule present in the center in the thickness direction of the twisted nematic liquid crystal cell in Reference Example 2.
Fig. 15 shows the relationship among the transmittance measured by tilting along the long axis of the liquid crystal molecule present in the center in the thickness direction of the driving twisted nematic liquid crystal cell under application of voltage, the tilt of the sample, and the transmittance determined by calculation.
Fig. 16 shows the axial arrangement of each optical element in Examples 3 and 4.
Fig. 17 shows left, right, upper, and lower (upper direction: positive in viewing angle) tone characteristics in Example 3.
Fig. 18 shows left, right, upper, and lower (upper direction: positive in viewing angle) tone characteristics in Example 4.
Fig. 19 shows left, right, upper, and lower (upper direction: positive in viewing angle) tone characteristics in Comparative Example 2.
Fig. 20 shows left, right, upper, and lower (upper direction: positive in viewing angle) tone characteristics in Comparative Example 3.
Fig. 21 shows left, right, upper, and lower (upper direction: positive in viewing angle) tone characteristics in Comparative Example 4.
Fig. 22 shows left, right, upper, and lower (upper direction: positive in viewing angle) tone characteristics in Comparative Example 5.

### Detailed Description of the Invention

Hereinafter, the present invention is described in more detail.

The twisted nematic liquid crystal cell (abbreviated hereinafter to TN liquid crystal cell) used in the present invention is classified in terms of driving system into the simple matrix system and the active matrix system using electrodes such as TFT (thin film transistor) electrodes, MIM (metal insulator metal, and TFD; thin film diode) electrodes as active elements. The present invention can demonstrate a significant effect on any driving system of TN liquid crystal cell.

For the TN liquid crystal cell used in the present invention in the first aspect, the value of And expressed as the product of the refractive anisotropy (Δn) of the liquid crystal cell, multiplied by the thickness (d) of the liquid crystal layer in the liquid crystal cell, is in the range of usually 200 nm to 500 nm, preferably 250 nm to 470 nm, more preferably 300 nm to 450 nm, most preferably 300 nm to 400 nm. In the case of more than 500 nm, there is the possibility that the effect of the TN liquid crystal cell on the improvement of viewing angles upon combination with the compensation film described below may become inadequate and the response rate may be decreased. On the other hand, in the case of less than 200 nm, the TN liquid crystal cell when combined with the compensation film has the effect of improving viewing angles, but there is the possibility that a reduction in brightness and in contrast on the front may occur.

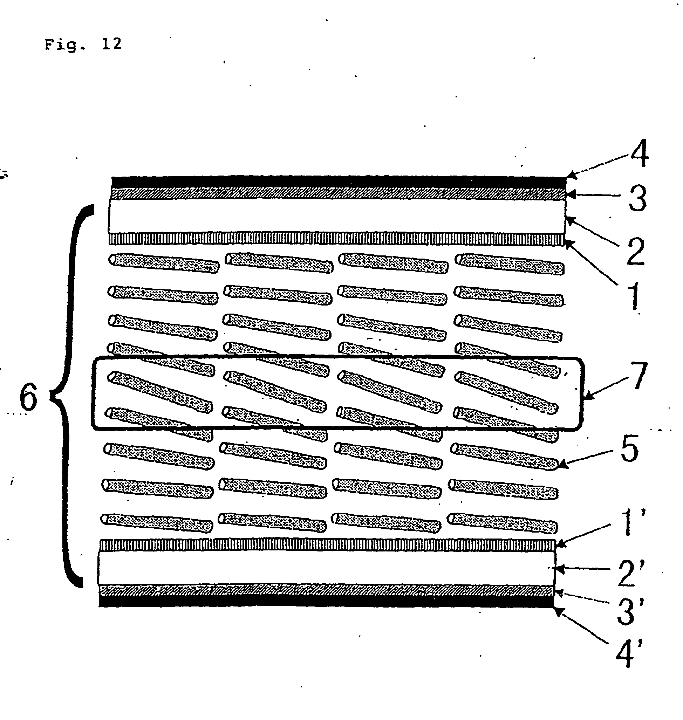

The driving voltage of the TN liquid crystalline cell used in the present invention in the second aspect is characterized in that the tilt angle of the nematic liquid crystal molecule in the liquid crystal cell when indicated in white is set at a predetermined value. The tilt angle of the nematic liquid crystal molecule in the present invention is the tilt angle of the nematic liquid crystal molecule present in the center (portion (7) surrounded by the solid line in Fig. 12) in the thickness direction of the liquid crystal cell.

Generally, in the TN liquid crystal cell in the normally white mode, the tilt angle of the nematic liquid crystal molecule present in the center in the thickness direction of the cell when voltage is not applied is almost the same as the pre-tilt angle in the interface of the cell substrate, or is smaller than the pre-tilt angle due to the effect of a chiral agent added for stabilization of the twist structure. Further, the driving voltage for indication in white is always set at voltage not causing any change in the orientational structure of the nematic liquid crystal when voltage or electricity is not applied.

Unlike the driving voltage set as described above, the driving voltage of the TN liquid crystal cell used in the present invention when indicated in white is set such that the tilt angle of the nematic liquid crystal molecule present in the center in the thickness direction of the liquid crystal cell is in the range of usually 10 to 30° , preferably 15 to 25° as the absolute value. If the TN liquid crystal cell having driving voltage set such that the tilt angle exceeds 30° is used in combination with the compensation film described below, there is the effect of improving viewing angles, but there is the possibility that a reduction in brightness and in contrast on the front may occur. If the TN liquid crystal cell having driving voltage set such that the tilt angle is less than 10° is used, there is the possibility that the effect of improving viewing angles may be inadequate even by combination with the compensation film.

The driving voltage for setting the above tilt angle in the range of 10 to 30° varies depending on the elastic constant of the nematic liquid crystal constituting the TN liquid crystal cell and on the cell gap, twist angle, pre-tilt angle etc. of the cell, and is usually in the range of 0.1 to 2.3 V, preferably 0.3 to 2.1 V as the absolute value. If the set driving voltage is outside of the above range, there is the possibility that the desired tilt angle cannot be obtained. If it is combined with the compensation film described below, there is the possibility that the effect of improving viewing angle may be inadequate.

In the present invention, the method of applying the driving voltage is not particularly limited. Usually, the method of applying voltage includes a method of directly applying voltage from an outer driving circuit to an electrode inside the cell substrate and a method of applying voltage by switching of a 2-terminal non-linear element or a 3-terminal active element arranged in the electrode. The 2-terminal non-linear element includes that utilizing a non-linear type with a volume using a ferroelectric body, diode showing a non-linear type of electrical resistance, MIM (metal insulator metal), barrister etc. The 3-terminal active element includes TFT (thin film transistor) formed on a cell substrate, MOS (metal-oxide semiconductor) array, SOS (silicon on sapphire) etc. In another method, the TN liquid crystal cell is provided outside with a discharge cell and the voltage generated by - discharge is applied to the liquid crystal cell. In the present invention, any of the above methods can be used.

In the TN liquid crystal cell used in the present invention, the product (Δnd) of the refractive anisotropy (Δn) of the nematic liquid crystals in the liquid crystal cell, multiplied by the thickness (d) of the liquid crystal layer in the liquid crystal cell, is preferably in the range of 200 nm to 500 nm. In the case of more than 500 nm, there is the possibility that the effect of the TN liquid crystal cell on the improvement of viewing angles upon combination with the compensation film described below may become inadequate and the response rate may be decreased. On the other hand, in the case of less than 300 nm, the TN liquid crystal cell when combined with the compensation film has the effect of improving viewing angles, but there is the possibility that a reduction in brightness and in contrast on the front may occur.

In the first and second aspects, it is preferable for the TN liquid crystal cell that the liquid crystalline molecules are previously given pre-tilt angles in order to reduce orientation defects in the nematic liquid crystalline molecules. The pre-tilt angles are usually 5° or less.

Further, the long axes of nematic liquid crystals in the TN liquid crystal cell are usually twisted at about 90° between the upper and lower substrates. With no voltage applied to the liquid crystal cell, incident straight polarized light goes out after twisted at 90° due to its optical rotation. Upon application of voltage to the liquid crystal cell, the long axes of the liquid crystalline molecules are oriented in the direction of the electric field, thus loosing the optical rotation. Accordingly, the twist angle of the TN liquid crystal cell used in the present invention is in the range of usually 70 to 110° , preferably 85 to 95° in order to secure this adequate effect of polarization. The direction of twisting of liquid crystalline molecules in the liquid crystal cell may be an either left or right direction.

Now, the compensation film used in the present invention is described. This film consists of a liquid crystalline polymer exhibiting optically positive uniaxial anisotropy, specifically ① liquid crystalline polymer exhibiting optically positive uniaxial anisotropy or ② liquid crystalline polymer composition containing at least one liquid crystalline polymer exhibiting optically positive uniaxial anisotropy, and the film is formed by fixing the nematic hybrid orientation formed by the liquid crystal polymer or the liquid crystalline polymer composition in a liquid crystalline state.

The compensation film is a film having nematic hybrid orientation fixed in it, so the directors of the liquid crystalline polymers possess different angles in every place in the thickness direction of the film. Accordingly, the compensation film, when viewed as the structure of the film, does not have any optical axis.

The upper and lower faces of the compensation film having such nematic hybrid orientation fixed in it are not optically equivalent. Accordingly, if the compensation film is arranged in the TN liquid crystal cell described above, the effect of widening viewing angles is different to some degrees depending on which face is arranged in the side of the liquid crystal cell. In the present invention, an adequate effect of widening viewing angles can be obtained regardless of which face is arranged, but it is particularly desired that out of the upper and lower faces of the compensation film, a face having a smaller angle between the director of the liquid crystalline polymer and the plane of the film is arranged to be closest to the liquid crystal cell.

Now, various parameters of the compensation film used in the present invention are described.

First, the thickness of the compensation film is in the range of usually 0.1 to 20 µm, preferably 0.2 to 10 µm, more preferably 0.3 to 5 µm, If the thickness of the film is less than 0.1 µm, an adequate effect may not be obtained for compensation. If the thickness of the film exceeds 20 µm, the display may be indicated with unnecessary color.

Now, an apparent retardation value in the face when viewed from the direction of a normal line of the compensation film is described. In the film with nematic hybrid.orientation, the refractive index (referred to hereinafter as "ne") in a direction parallel to the director is different from the refractive index (referred to hereinafter as "no") in a direction perpendicular to the director. Assuming that the value obtained by subtracting "no" from "ne" is an apparent double refractive index, the apparent retardation value is given by the product of the apparent double refractive index and the absolute thickness of the film. This apparent retardation value can be easily obtained by polarization optical measurement such as ellipsometry etc. The apparent retardation value of the compensation film is in the range of usually 5 to 500 nm, preferably 10 to 300 nm, more preferably 15 to 150 nm for monochromatic light at 550 nm. If the apparent value is less than 5 nm, there is the possibility that an adequate effect of widening viewing angles may not be obtained. On the other hand, in the case of more than 500 nm, there is the possibility that unnecessary coloration may occur in the display when viewed diagonally.

Now, the angles of the directors in the upper and lower interfaces of the compensation film are described. The angle of the director in the vicinity of the upper or lower interface of the film is in the range of usually 60 to 90° , preferably 80 to 90° as the absolute value, and the angle of the director in the opposite side is in the range of usually 0 to 50° , preferably 0 to 30° as the absolute value.

Now, the average tilt angle of the compensation film is described.

In the present invention, the average tilt angle is defined as the mean angle between the director of the liquid crystalline polymer in the direction of the film thickness and the plane of the substrate. The average tilt angle can be determined by use of the crystal rotation method. The average tilt angle of the compensation film used in the present invention is in the range of usually 10 to 60° , preferably 20 to 50° . If the average tilt angle is outside of the above range, there is the possibility that an adequate effect of widening viewing angles may not be obtained.

The compensation film used in the present invention is not particularly limited insofar as it has the above liquid crystalline polymer substantially formed therein, has the nematic hybrid orientation of the liquid crystalline polymer, and has the above parameters.

The compensation film used in the liquid crystal display of the invention is described in more detail. The liquid crystal polymer forming the compensation film is specifically a homeotropic orientation liquid crystalline polymer, more specifically a homeotropic orientation liquid crystalline polymer or a liquid crystalline polymer composition containing at least one kind of the polymer.

As used herein, the homeotropic orientation refers to a state where the director of the liquid crystal is oriented approximately perpendicularly to the plane of the substrate. This homeotropic orientation liquid crystalline polymer is an essential component for realizing the nematic hybrid orientation formed by the compensation film used in the present invention.

Whether the liquid crystalline polymer has homeotropic orientation or not is judged by forming a film of the liquid crystalline polymer on a substrate and examining its orientation. The substrate which can be used for this judgement is not particularly limited, and examples are glass substrates, specifically optical glasses such as soda glass, potassium glass, borosilicate glass, crown glass, flint glass etc., plastic films or sheets thermostable at the liquid crystal temperature of the liquid crystalline polymer, specifically polyethylene terephthalate, polyethylene naphthalate, polyphenylene oxide, polyimide, polyamide imide, polyether imide, polyamide, polyether ketone, polyether ether ketone, polyketone sulfide, polyether sulfone etc. The substrates enumerated above are used after their surfaces are cleaned with acid, alcohol, detergents without conducting surface treatment such as silicon treatment.

The homeotropic orientation liquid crystalline polymer used in the present invention is defined as that forming homeotropic orientation in a film on one of the above-exemplified substrates at a temperature at which the liquid crystalline polymer is in the form of liquid crystal. However, depending on the type and the composition of the liquid crystalline polymer, a certain polymer is oriented in a homeotropic fashion specifically in the vicinity of a liquid crystal-isotropic phase transition point. Accordingly, temperatures lower by 15 °C, preferably by 20 °C, than the liquid crystal-isotropic phase transition point are preferably used.

Examples of the homeotropic orientation liquid crystalline polymer are:
① liquid crystalline polymer having an aromatic group having a bulky substituent group, an aromatic group having a long-chain alkyl group, an aromatic group having a fluorine atom, etc., in a structural unit constituting a main chain of the liquid crystalline polymer; and
② liquid crystalline polymer having a monofunctional structural unit derived from a monoalcohol, a monocarboxylic acid etc. having a C3 to C20 long-chain alkyl group or a C2 to C20 long-chain fluoroalkyl group at one or both terminals of the liquid crystalline polymer chain.

The monofunctional structural unit used in the liquid crystalline polymer in item ② above refers to a structure in which a monomer having one functional group corresponding to a functional group possessed by a di-functional monomer used for formation of a polycondensate as the liquid crystalline polymer has been integrated in the molecule of the polymer such as liquid crystalline polyester etc. by allowing it to be present at the time of production of the polymer (during polymerization reaction or after polymerization reaction), and usually the monomer is integrated in one or both terminals of the molecule of the polymer. Accordingly, the number of the monofunctional structural unit(s) in the polymer molecule is usually 1 to 2 per molecules.

Typical examples of the monofunctional structural unit are expressed in the following formulas:

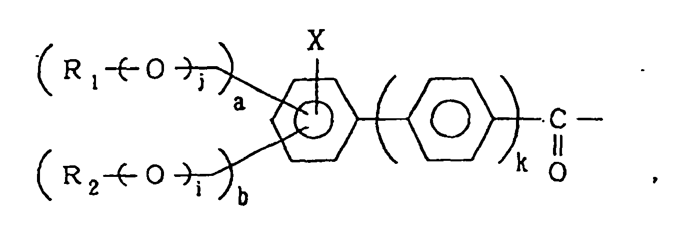

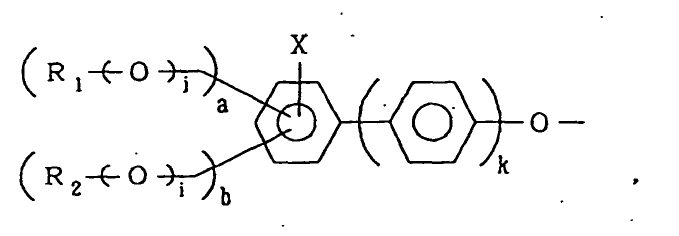

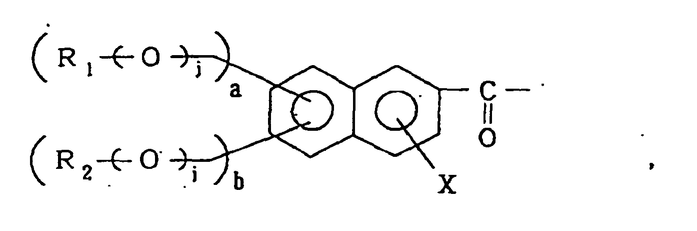

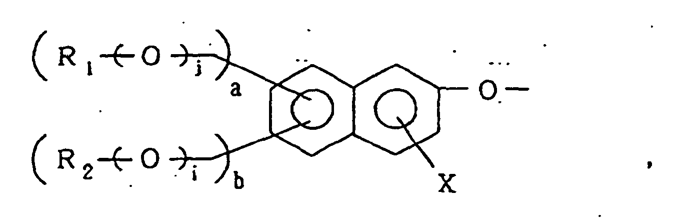

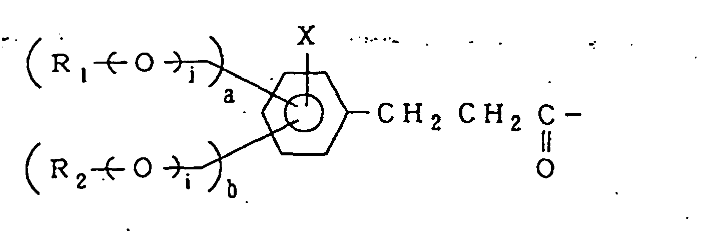

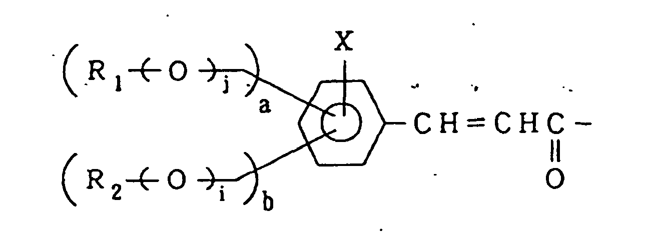

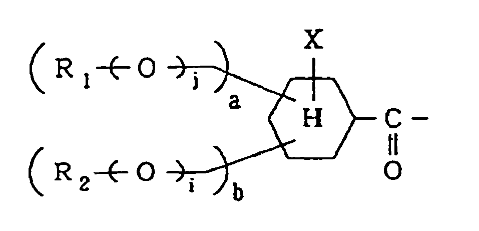

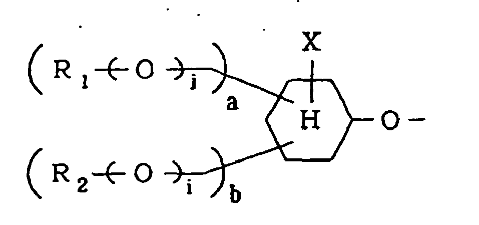

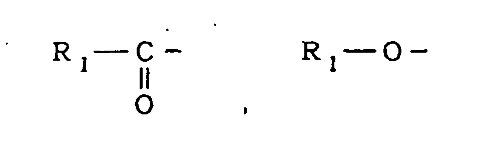

In the general formulas described above, R₁ and R₂ may be the same or different; R₁ and R₂ each represent a long-chain C₍₃₋₂₀₎ alkyl or a long-chain C₍₂₋₂₀₎ fluoroalkyl group; preferable examples of which include
CH₃CH₂CH₂-, CH₃CH (CH₃)CH₂- ,
C(CH₃)₃-, (CH₃)₂CH-, CH₃(CH₂)₃-, C₅H₁₁-,
C₉H₁₉- , C₆H₁₃-, C₈H₁₇- , C₇H₁₅-, C₁₀H₂₁-,
C₁₂H₂₅-, C₁₄H₂₉- , C₁₈H₃₇- , C₁₆H₃₃-, C₂₀H₄₁-,
CF₃CH₂-, CF₃CF₂ - , (CF₃)₂CF- ,
(CF₃)₂CF(CF₂)₂-, C₆F₁₃- , C₈F₁₇- ,
CF₃(CF₂)₃CH₂CH₂-, (CF₃)₂CF(CF₂)₈- ,
CHF₂CF₂CH₂- , CF₃ CH₂ CH₂- ,
(CF₃)₂CF (CF₂)₈CH₂CH₂ -,
CF₃(CF₂)₇CH₂CH₂-, H (CF₂)₄CH₂-,
CF₃(CF₂)₉ CH₂CH₂-, CF₃(CF₂)₃(CH₂)₆-,
CF₃ CF₂(CH₂)₆-, CHF₂ CF₂CH₂-,
CF₃(CF₂)₅CH₂CH₂-, H (CF₂)₆CH₂-,
H (CF₂)₄CH₂-, H (CF₂)₈CH₂ -,
and the like; X represents halogen such as fluorine and chlorine or the like; i is 0 or 1; j is 0 or 1; k is 0 or 1; a is 0 or 1, b is 0 or 1, provided a + b ≠ 0.

Preferable examples of R₁ and R₂ include the following groups.

Preferable examples of the monofunctional structural unit produced from the monohydric alcohol, monocarboxylic acid and a functional derivative of these compounds include the following units,

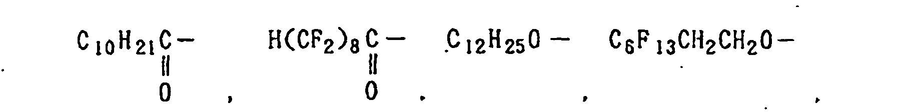

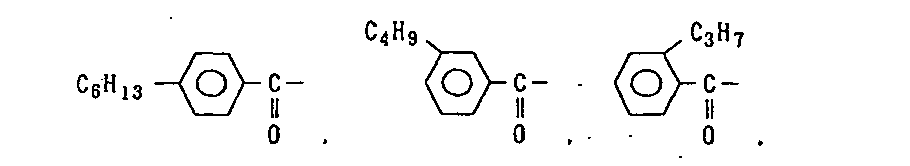

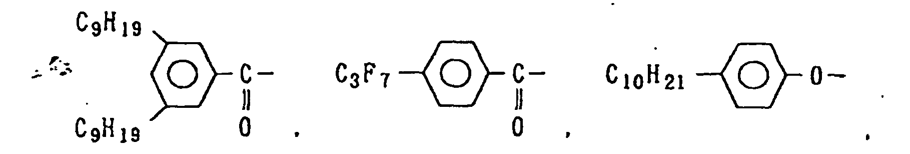

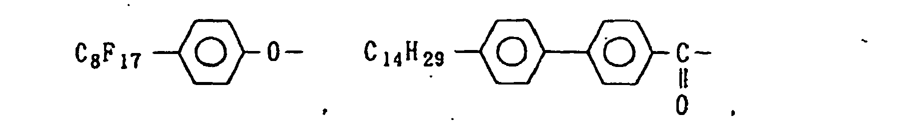

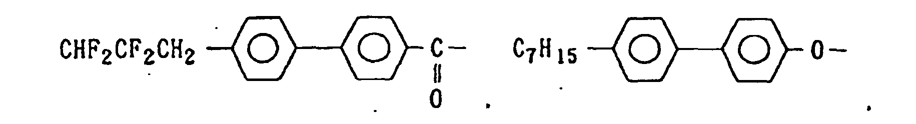

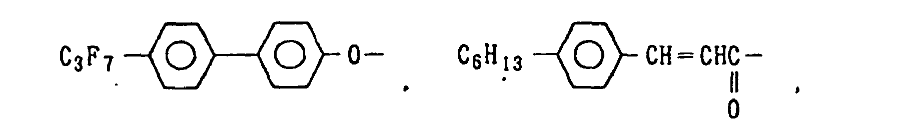

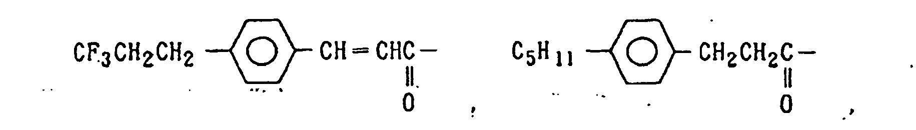

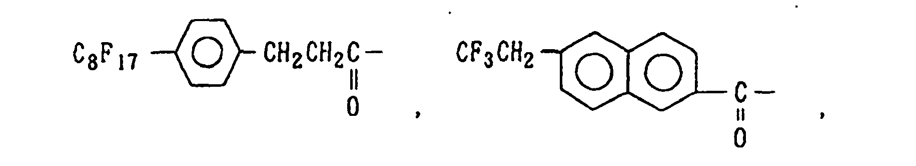

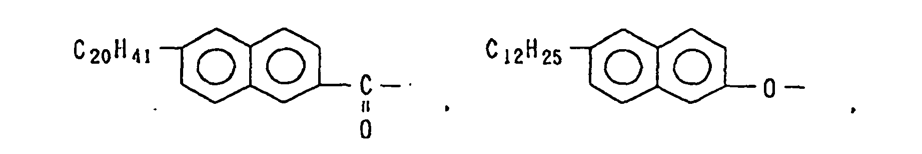

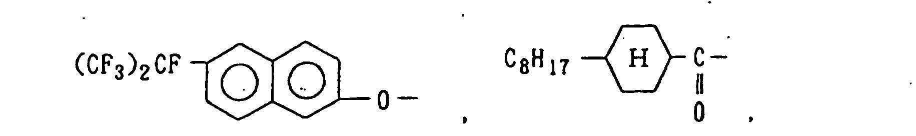

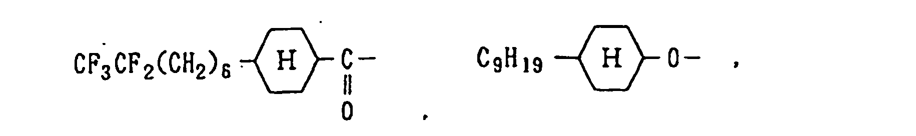

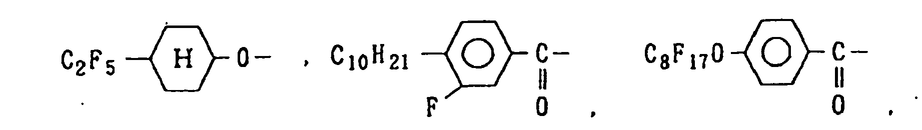

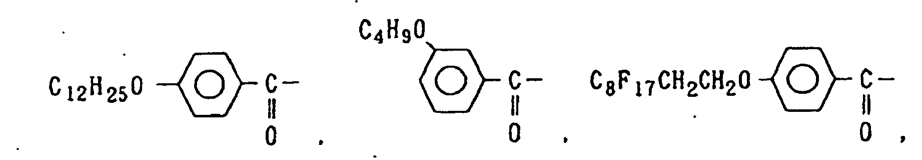

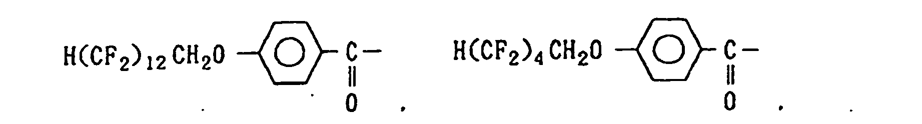

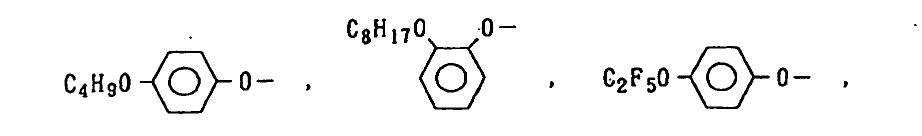

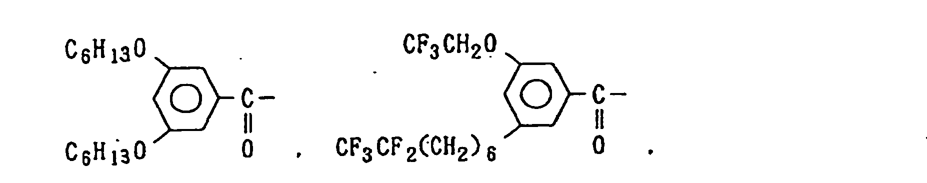

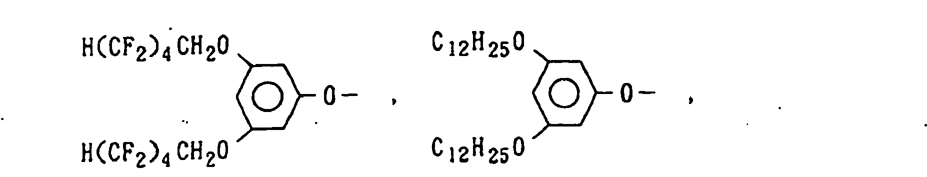

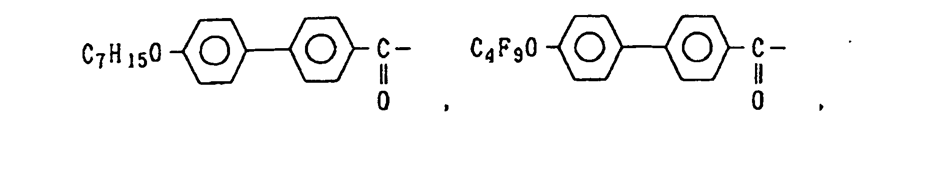

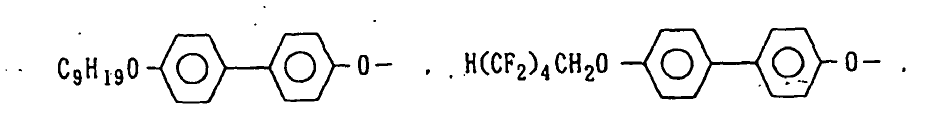

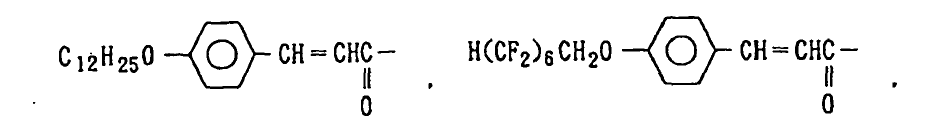

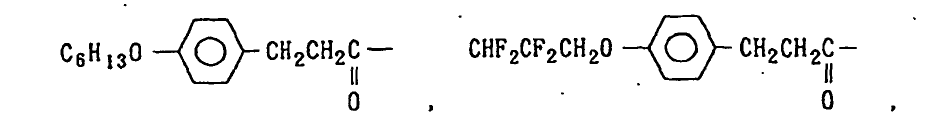

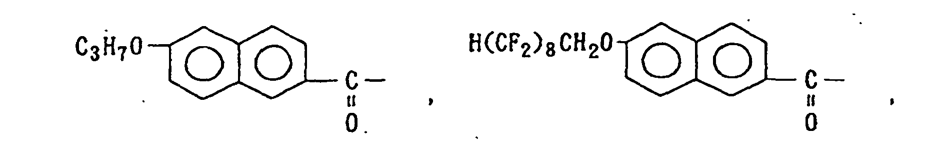

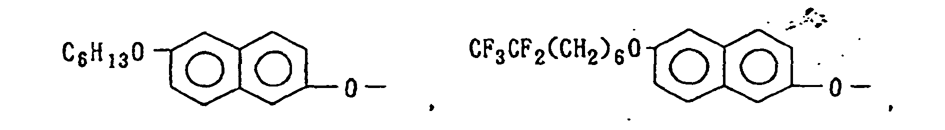

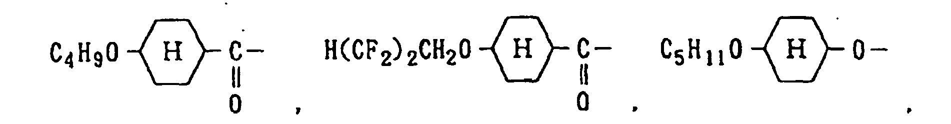

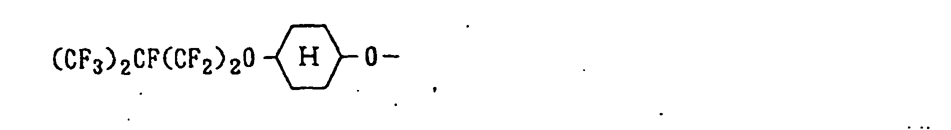

One or two units selected from the above-described monofunctional structural units constitute one end or both ends of a polymer chain. In the case where the polymer chain has the structural units at both ends of the chain, the structural units do not need to be the same.

Typical examples of the liquid crystalline polymer are main chain type liquid crystalline polymers such as polyesters, polyimides, polyamides, polycarbonates and polyester-imides which meet the above conditions ① and/or ②. Among them, liquid crystalline polyesters are preferable in terms of, for example, ease in synthesis, ease in making films and stability of the physical properties of the films obtained. Generally, the main chain of the liquid crystalline polyester comprises bifunctional structural units, such as dicarboxylic acid units, diol units and oxycarboxylic acid units, and also polyfunctional structural units other than the bifunctional structural units.

The liquid crystalline polyester preferably used for preparing the compensating film in the present invention are those having an ortho-substituted aromatic unit in the main chain.

Examples of these structural units include a catechol unit, a salicylic acid unit, a phthalic acid unit, a 2,3-naphthalenediol unit, a 2,3-naphthalenedicarboxylic acid unit and any of the foregoing units having a substituent on the benzene ring; 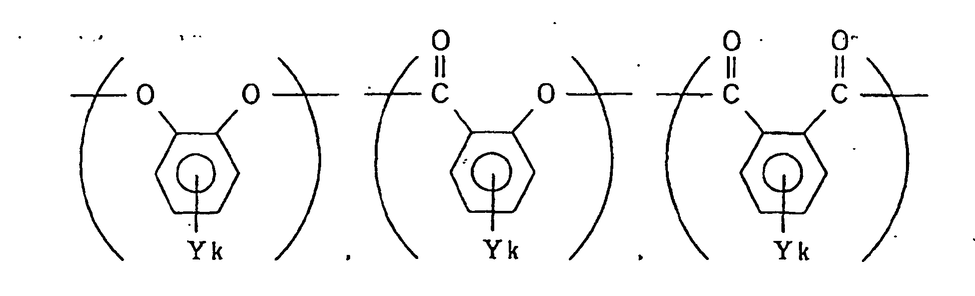 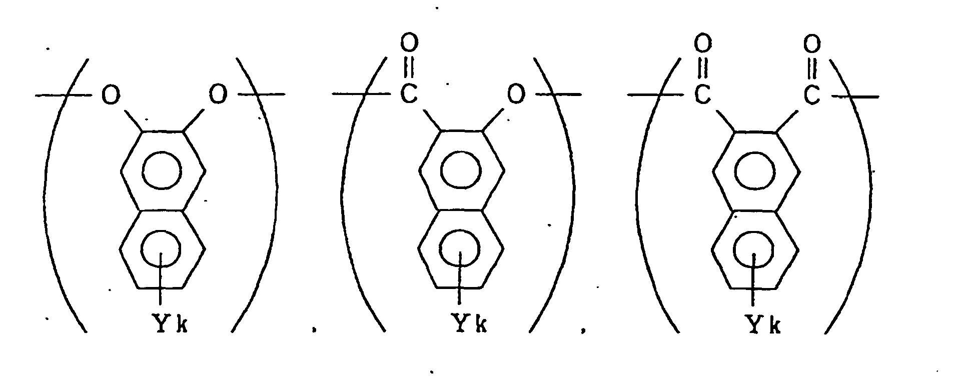 where Y is selected from the group consisting of hydrogen, halogen such as Cl and Br, methyl, ethyl, methoxy, ethoxy and phenyl groups; and κ is 0 to 2.

Examples of the structure of the liquid crystalline polyester which exhibits a homeotropic orientation and which satisfies the above conditions ① and ② are given below.

Those satisfying the condition ① : 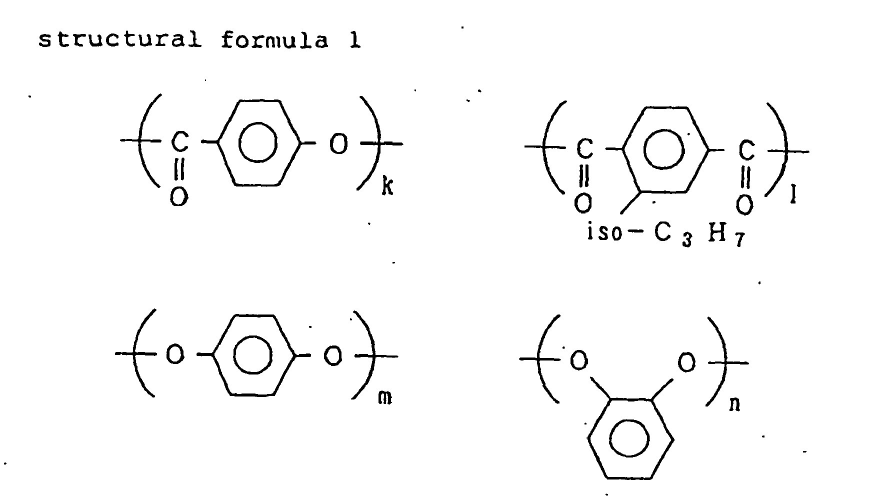 where 1=m+n, k/l=20/10~0/10, preferably 15/10~0/10, n/m=100/0~20/80, preferably 98/2~30/70, and k, l, m and n represent, respectively, a molar ratio. 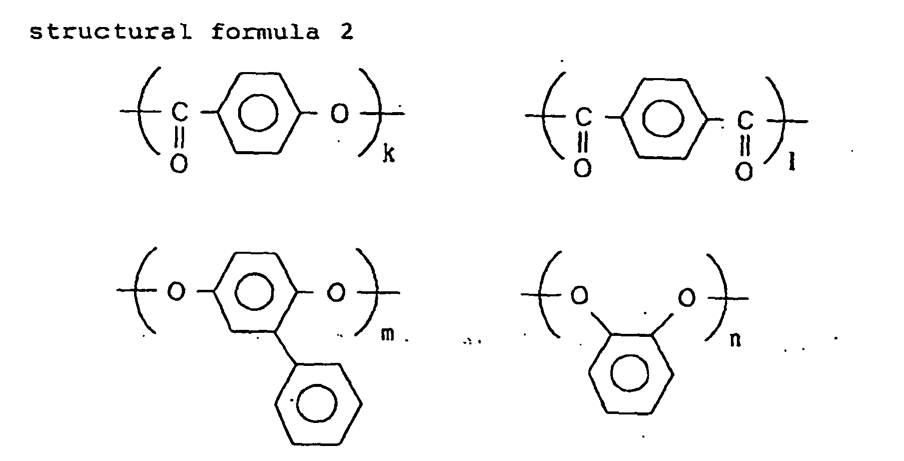 where l=m+n, k/l=20/10~0/10, preferably 15/10~0/10, m/n=100/0~1/99, preferably 90/10~2/98, and k, l, m and n represent, respectively, a molar ratio. 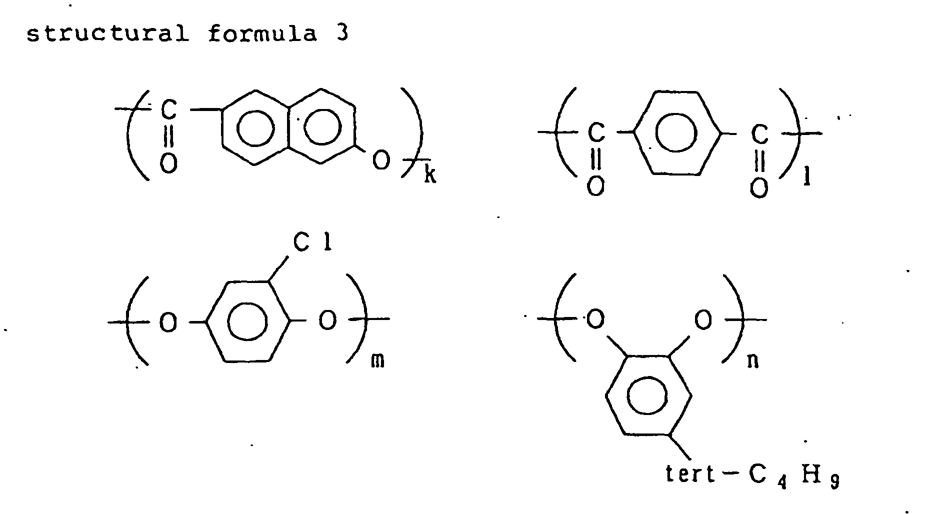 where l=m+n, k/l=20/10~0/10, preferably 15/10~0/10, n/m=100/0~1/99, preferably 90/10~2/98, and k, l, m and n represent, respectively, a molar ratio. 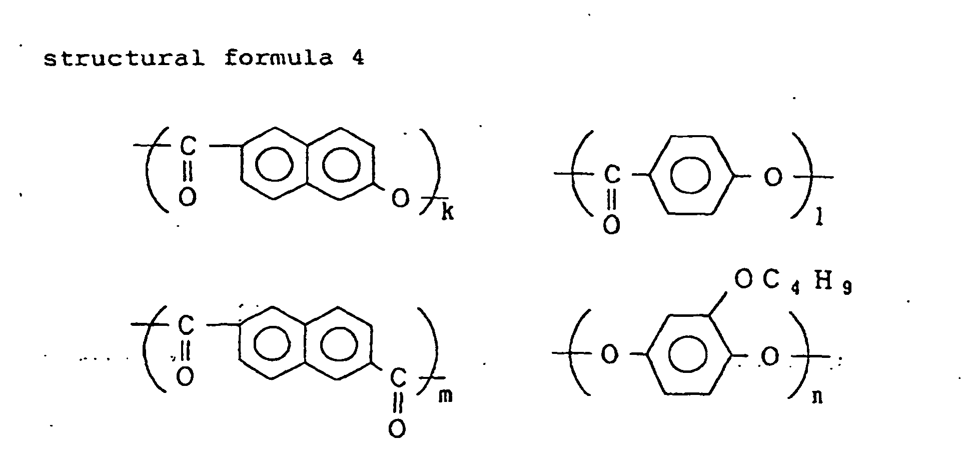 where m=n, (k+l)/m=20/10~2/10, preferably 15/10~5/10, k/l=100/0~0/100, preferably 95/5~5/95, and k, l, m and n represent, respectively, a molar ratio. 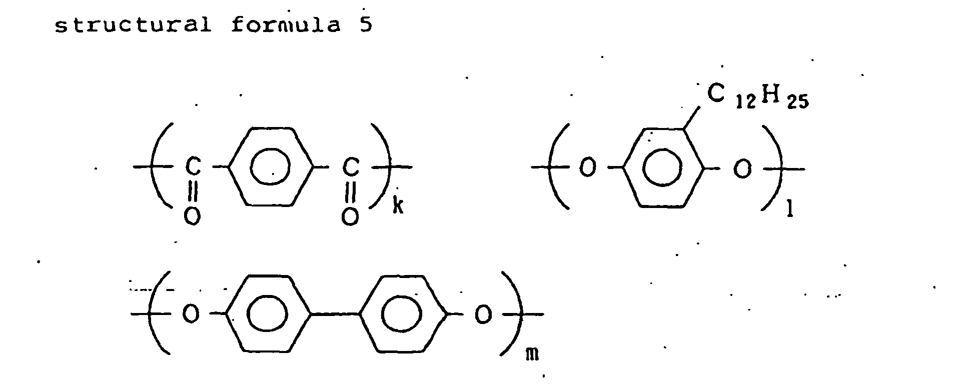 where k=l+m, l/m=100/0 ~ 1/99, preferably 90/10~2/98 and k, l and m represent, respectively, a molar ratio. 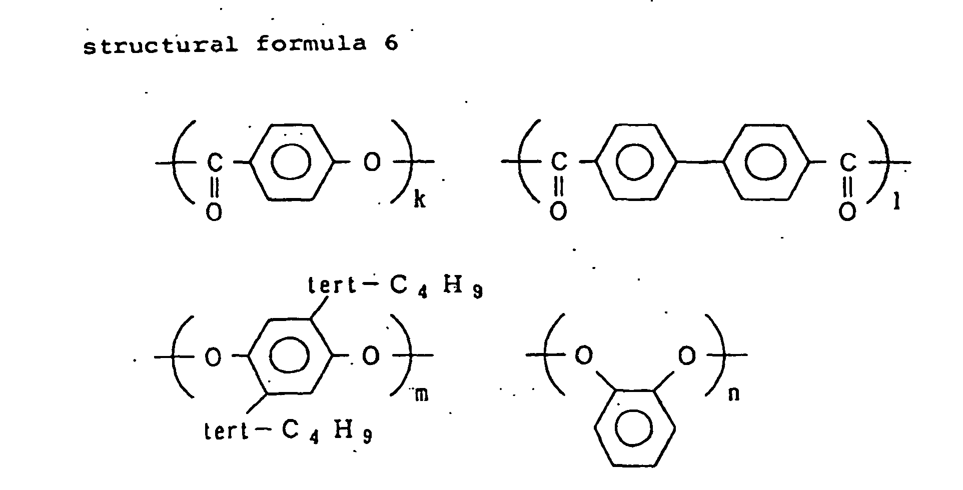 where l=m+n, k/l=20/10~0/10, preferably 15/10~0/10, m/n=100/0~1/99, preferably 90/10~2/98, and k, l, m and n represent, respectively, a molar ratio. 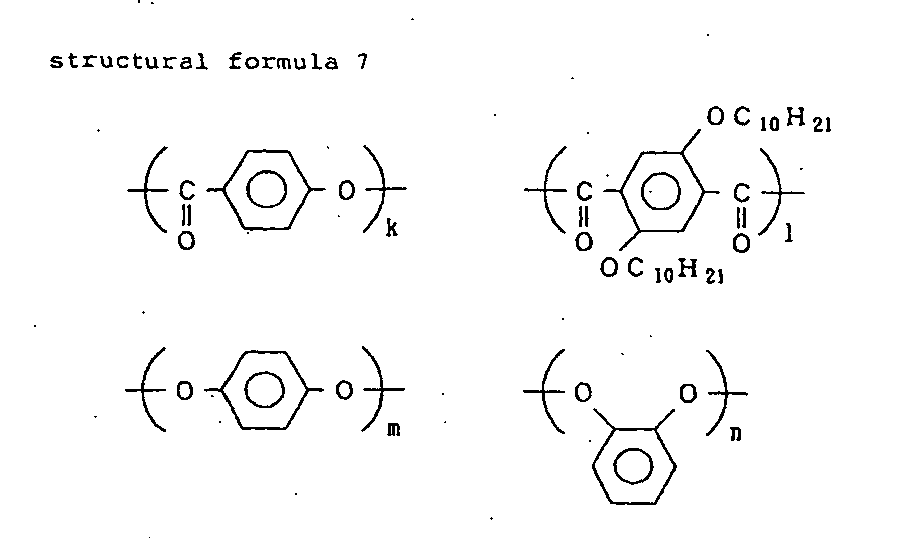 where l=m+n, k/l=20/10~ 0/10, preferably 15/10~0/10, m/n=100/0~0/100, preferably 95/5~5/95, and k, l, m and n represent, respectively, a molar ratio. 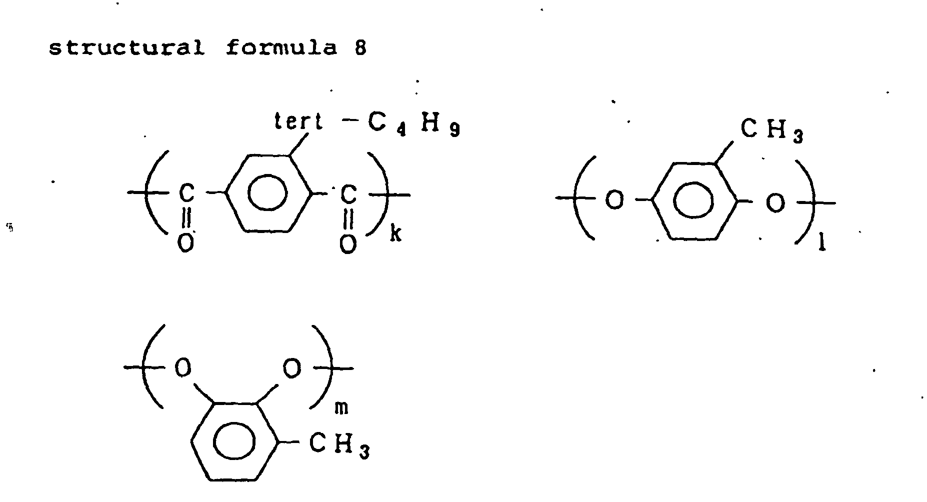 where k=l+m, l/m=100/0~0/100, preferably 95/5~5/95, and k, l, and m represent, respectively, a molar ratio. 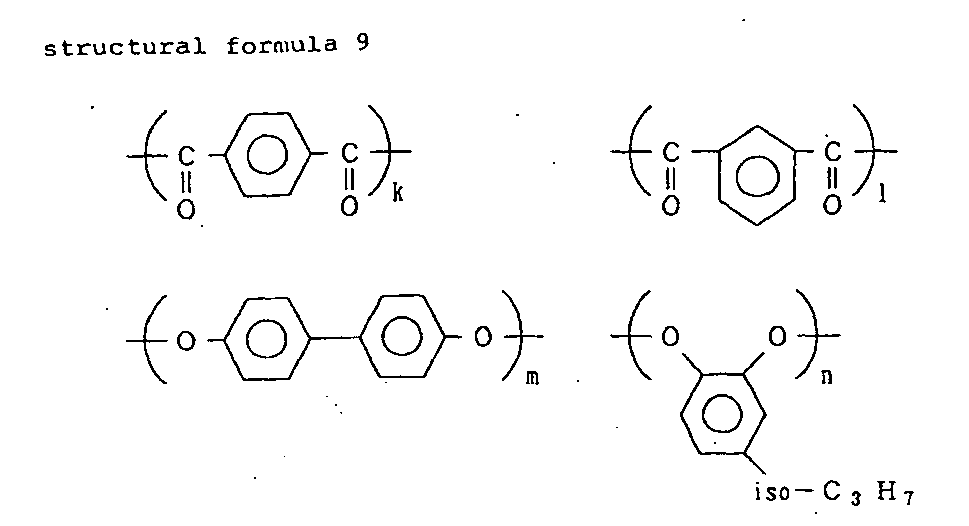 where k+l=m+n, k/l=100/0~0/100, preferably 95/5~5/95, n/m=100/0~1/99, preferably 90/10~2/98, and k, l, m and n represent, respectively, a molar ratio. 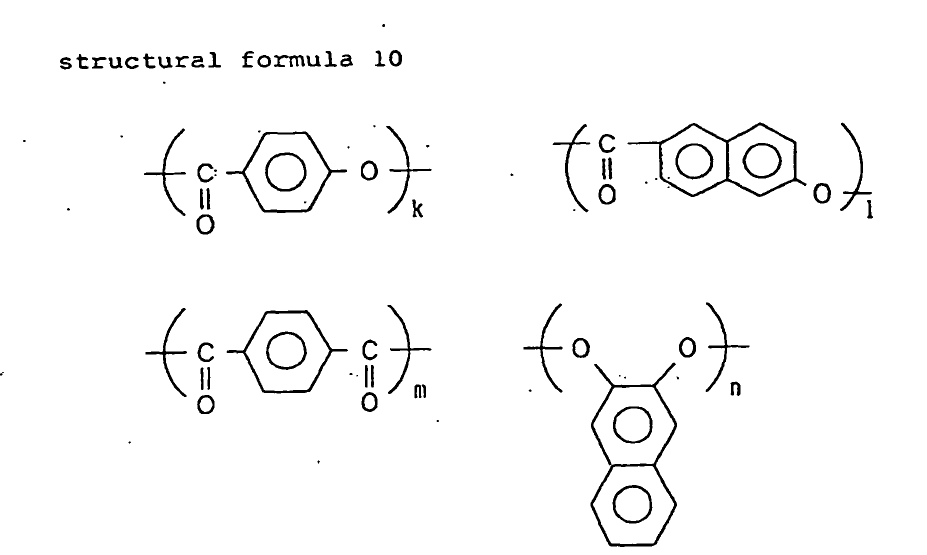 where m=n, (k+l)/m=20/10~2/10, preferably 5/10~5/10, and k, l, m and n represent, respectively, a molar ratio. 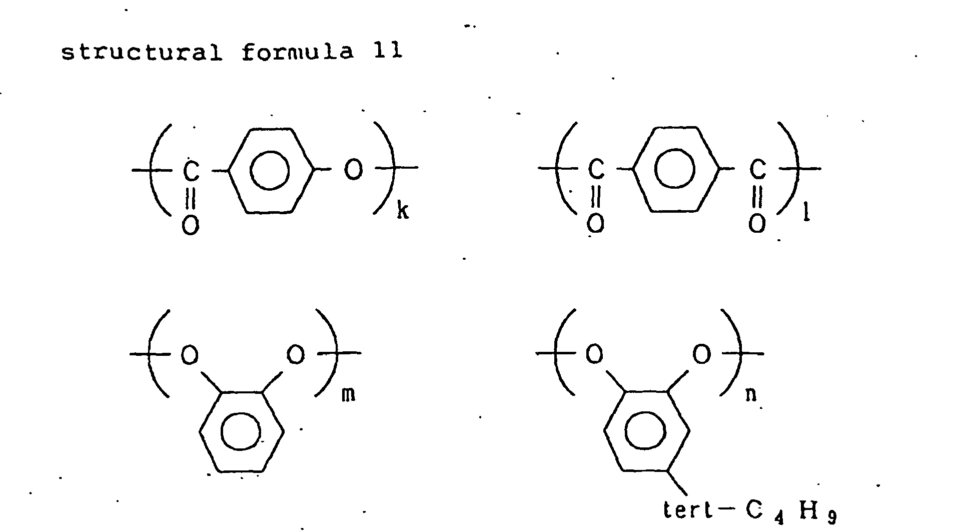 where l=m+n, k/l=20/10~0/10, preferably 15/10~0/10, n/m=100/0~1/99, preferably 90/10~2/98, and k, l, m and n represent, respectively, a molar ratio. 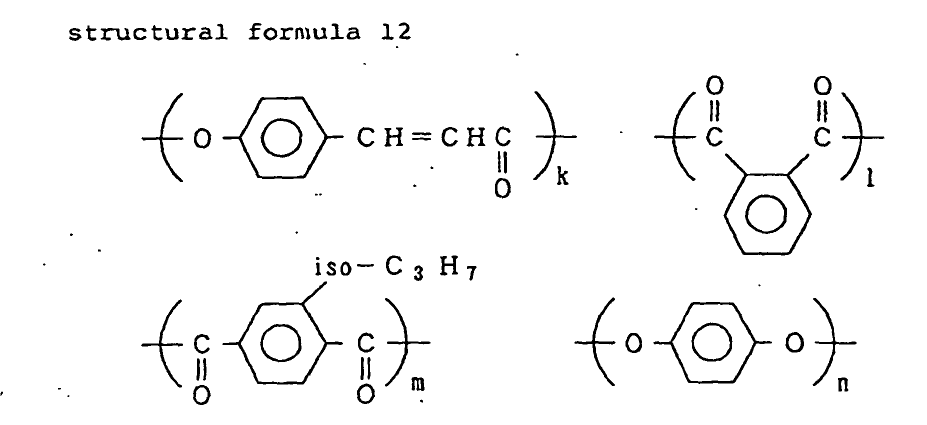 where n=m+l, k/n=20/10~0/10, preferably 15/10~0/10, m/l=100/0~1/99, preferably 90/10~2/98, and k, l, m and n represent, respectively, a molar ratio. 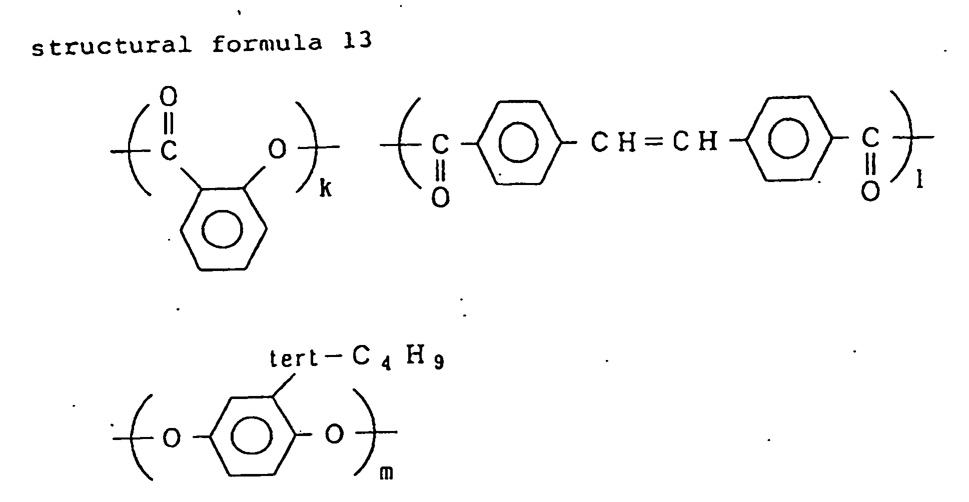 where l=m, k/l=20/10~0/10, preferably 15/10~0/10, and k, l and m represent, respectively, a molar ratio. 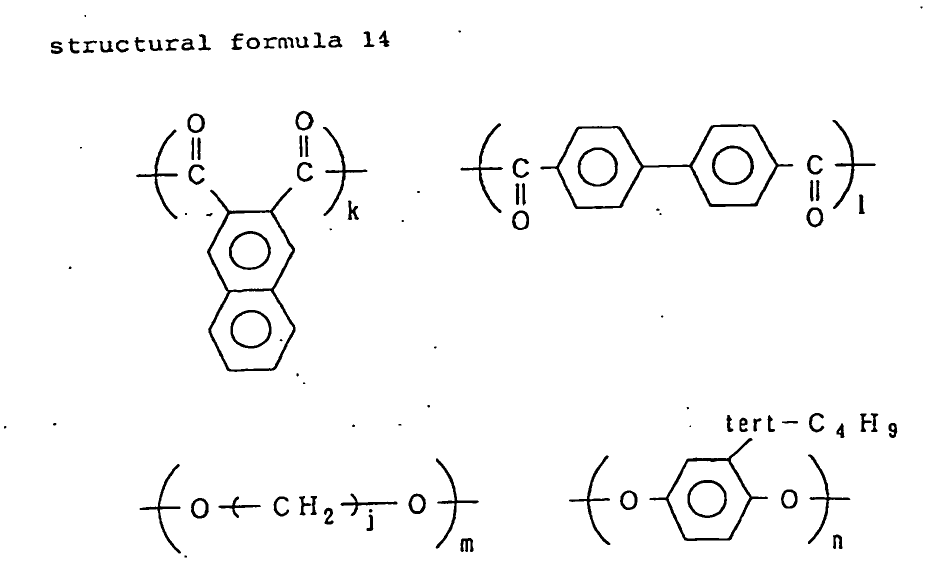 where k+l=m+n, k/l=100/0~0/100, preferably 95/5~5/95, m/n=100/0~0/100, preferably 95/5~5/95, and k, l, m and n represent, respectively, a molar ratio, and j is an integer of 2-12. 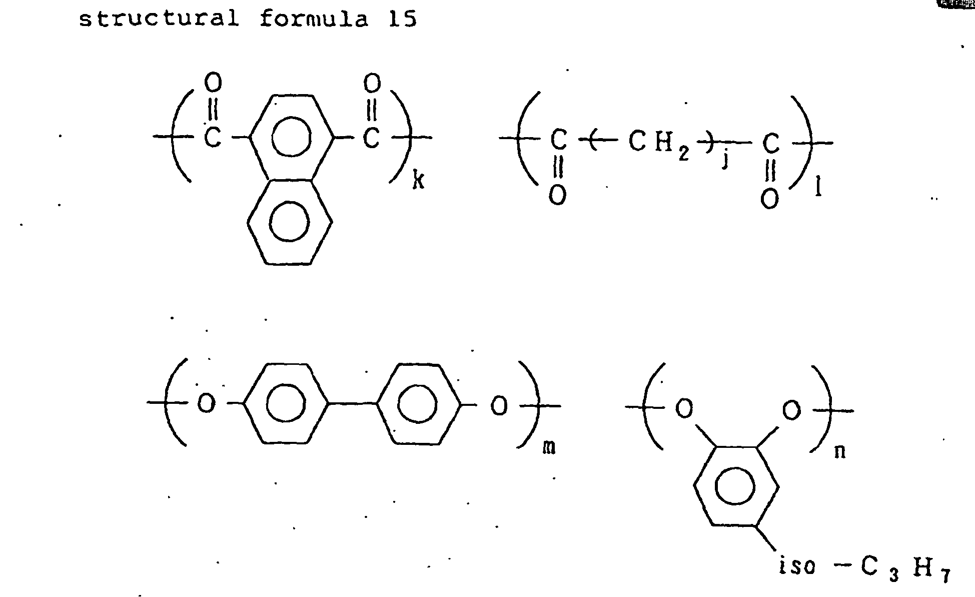 where k+l=m+n, k/l=100/0~0/100, preferably 95/5~5/95, m/n=100/0~0/100, preferably 95/5~5/95, and k, l, m and n represent, respectively, a molar ratio, and j is an integer of 2~12. 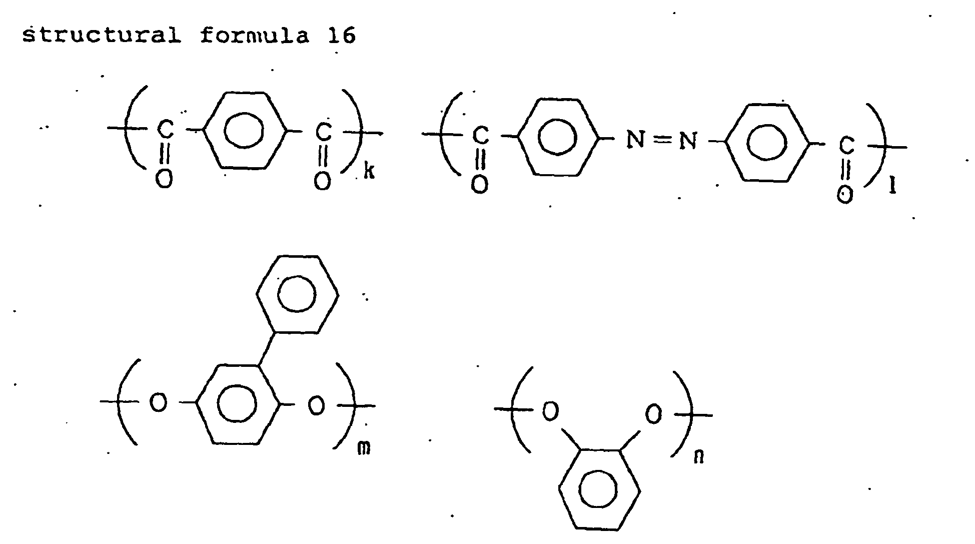 where k+l=m+n, k/l=100/0~0/100, preferably 95/5~5/95, m/n=100/0~1/99, preferably 90/10~2/98, and k, l, m and n represent, respectively, a molar ratio. 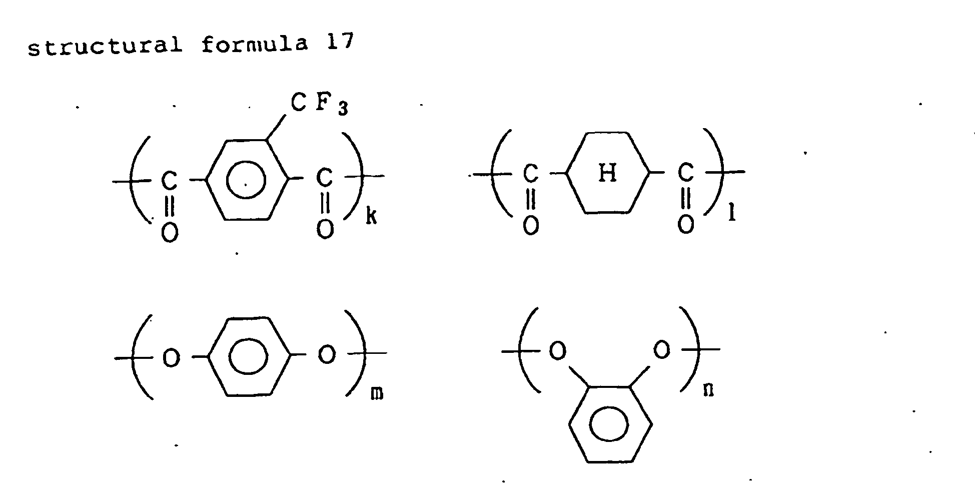 where k+l=m+n, k/l=100/0~1/99, preferably 90/10~2/98, m/n=100/0~0/100, preferably 95/5~5/95, and k, l, m and n represent, respectively, a molar ratio. 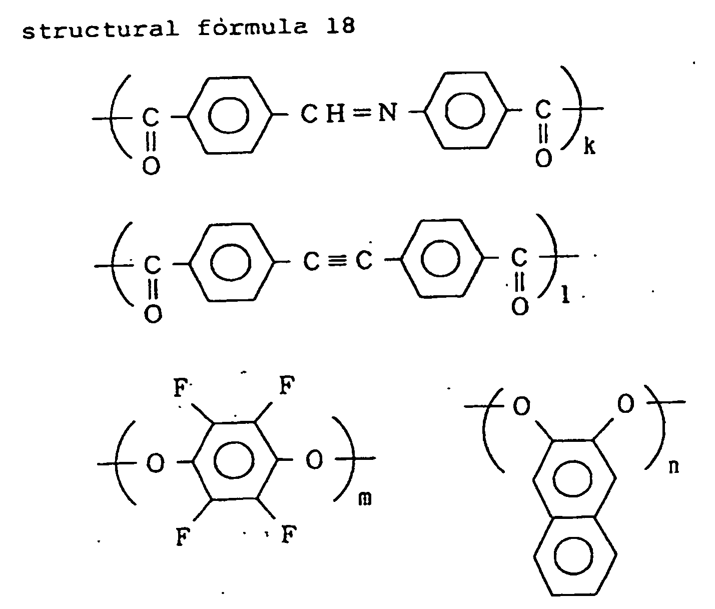 where k+l=m+n, k/l=100/0~0/100, preferably 95/5~5/95, m/n=100/0~1/99, preferably 90/10~2/98, and k, l, m and n represent, respectively, a molar ratio. 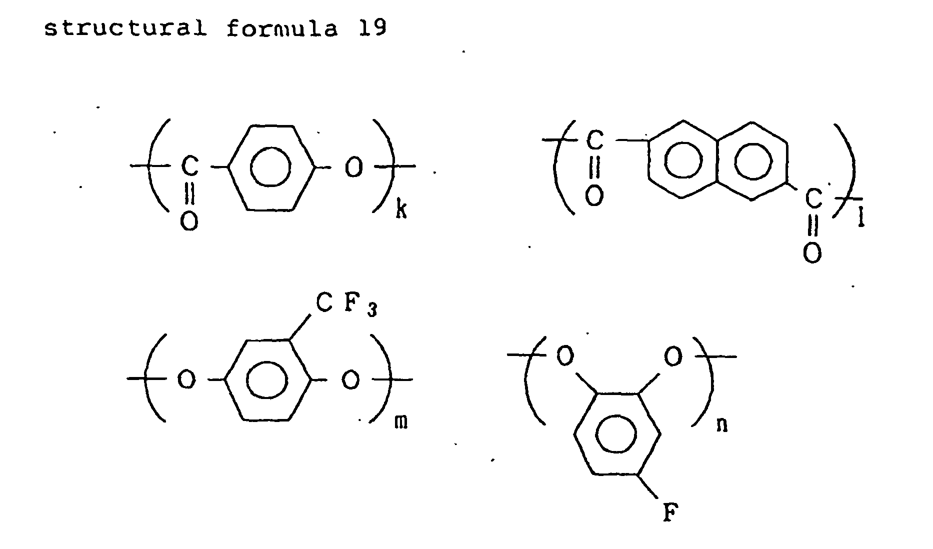 where l=m+n, k/l=20/10~0/10, preferably 15/10~0/10, m/n=100/0~0/100, preferably 95/5~5/95, and k, l, m and n represent, respectively, a molar ratio. 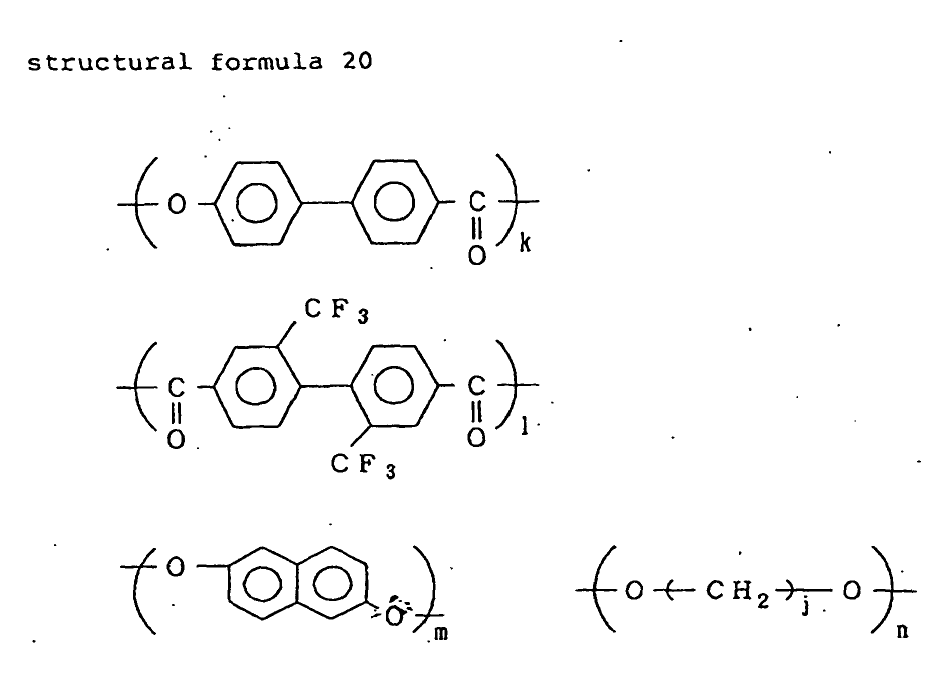 where l=m+n, k/l=20/10~0/10, preferably 15/10~0/10, m/n=100/0~0/100, preferably 95/5~5/95, and k, l, m and n represent, respectively, a molar ratio, and j is an integer of 2~12. 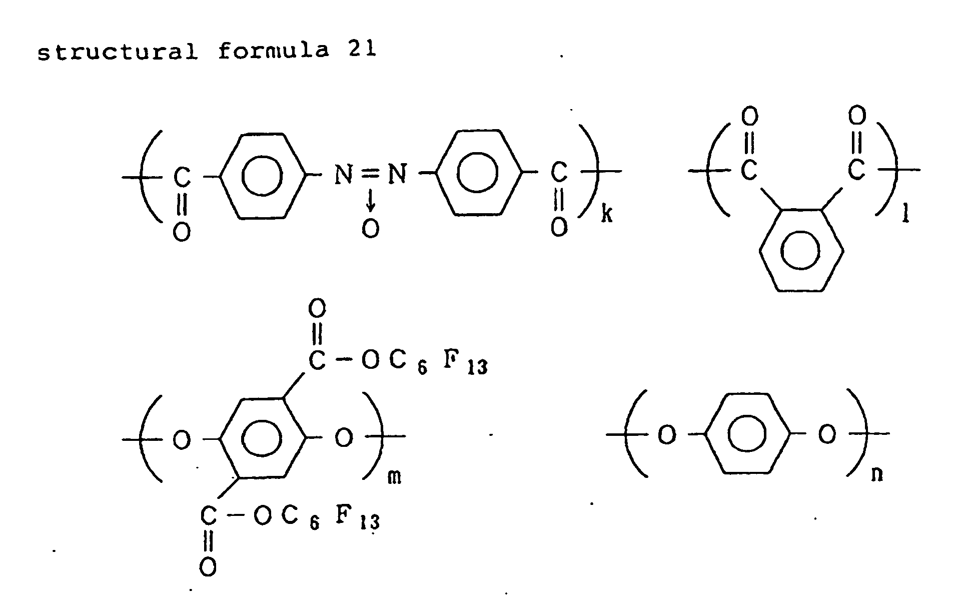 where k+l=m+n, k/l=100/0~0/100, preferably 95/5~5/95, m/n=100/0~1/99, preferably 90/10~2/98, and k, l, m and n represent, respectively, a molar ratio.

Those satisfying the condition ② : 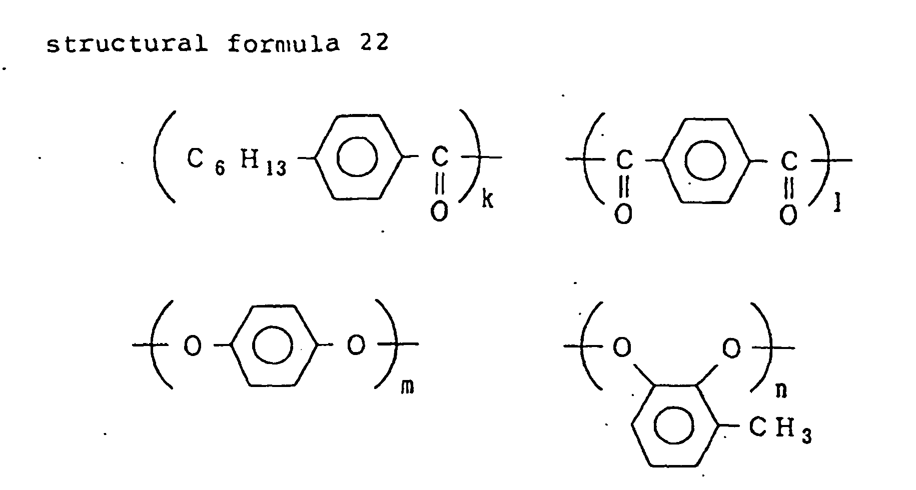 where m+n=k/2+l
k/l=80/60~2/99, preferably 40/80~10/95
m/n=100/0~0/100, preferably 95/5~5/95, and k, l, m and n represent, respectively, a molar ratio. 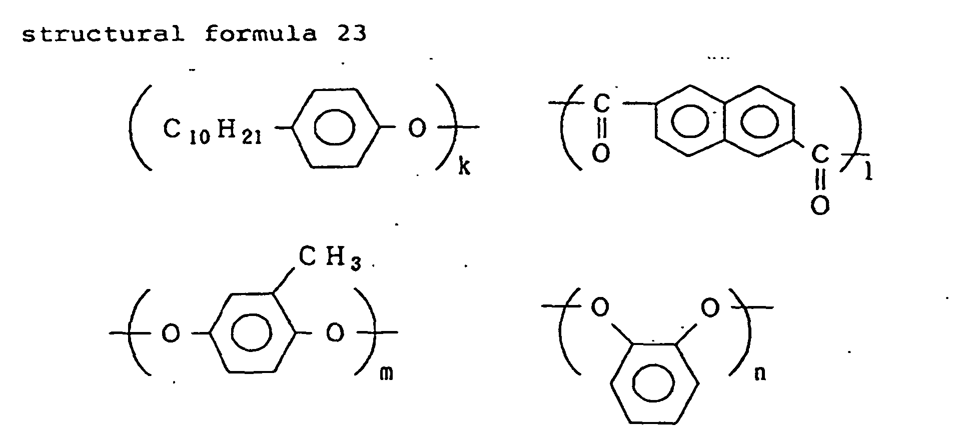 where l=k/2+m+n
k/(m+n)=80/60~2/99, preferably 40/80~10/95 m/n=100/0~0/100, preferably 95/5~5/95, and k, l, m and n represent, respectively, a molar ratio. 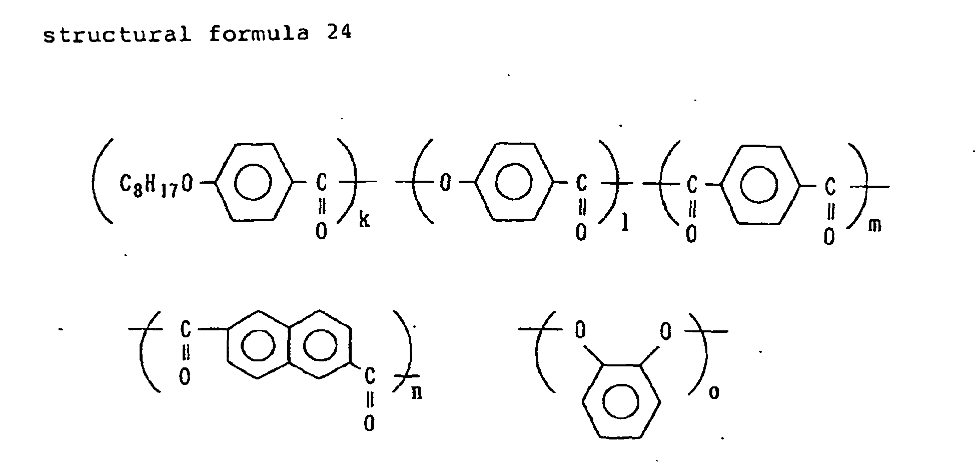 where o=k/2+m+n
k/(m+n)=80/60~2/99, preferably 40/80~10/95 m/n=100/0~0/100, preferably 95/5~5/95,
l/o=20/10~0/10, preferably 15/10~5/10,
and k, l, m, n and o represent, respectively, a molar ratio. 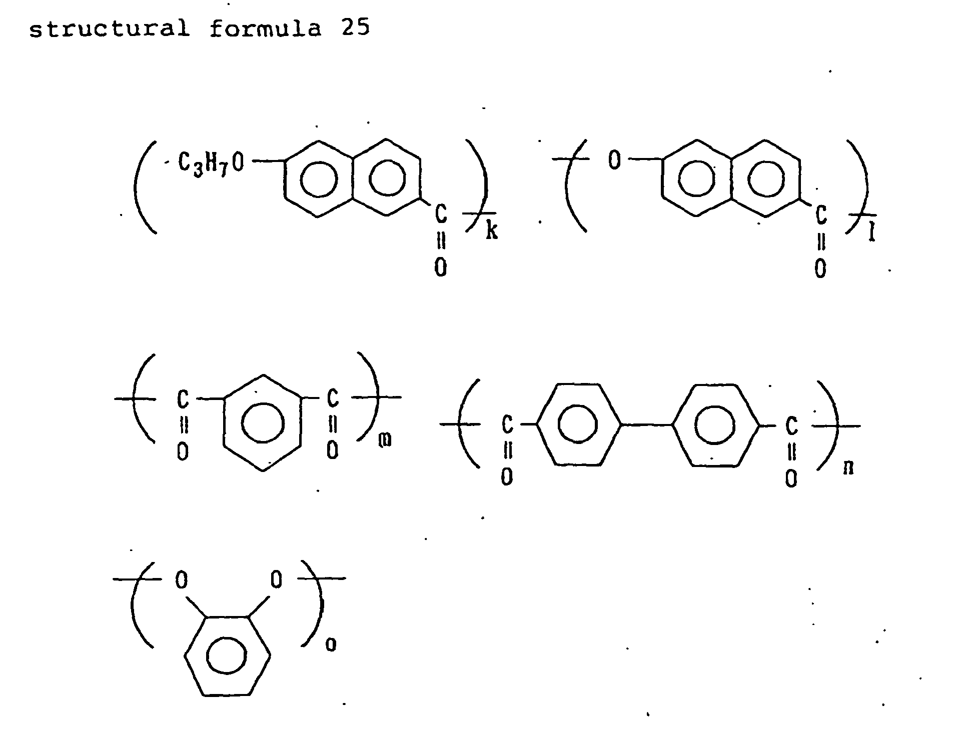 where o=k/2+m+n
k/(m+n)=80/60~2/99, preferably 40/80 ~ 10/95
m/n=100/0~0/100, preferably 95/5~5/95, l/o=20/10~0/10, preferably 15/10~5/10,
and k, l, m, n and o represent, respectively, a molar ratio. 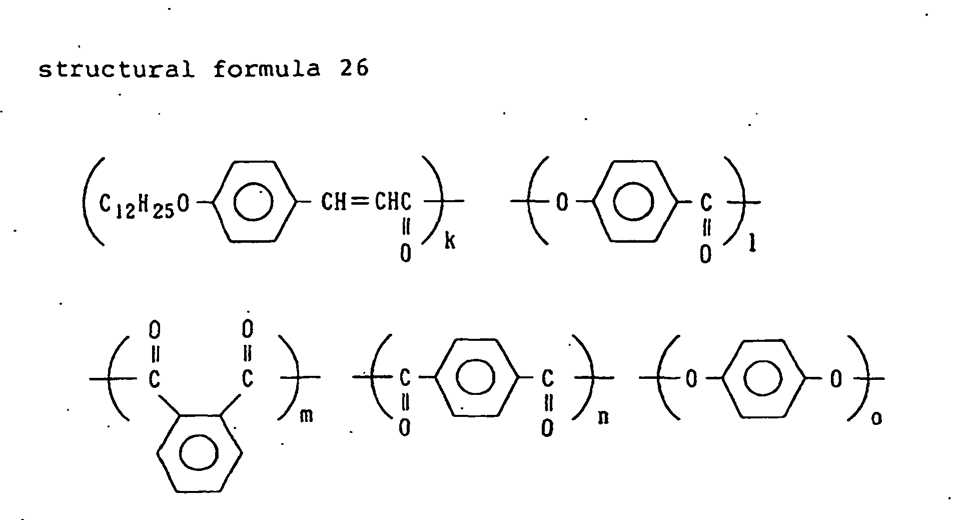 where o=k/2+m+n
k/(m+n)=80/60~2/99, preferably 40/80~10/95 m/n=100/0~0/100, preferably 95/5~5/95,
l/o=20/10~0/10, preferably 15/10~5/10,
and k, l, m, n and o represent, respectively, a molar ratio. 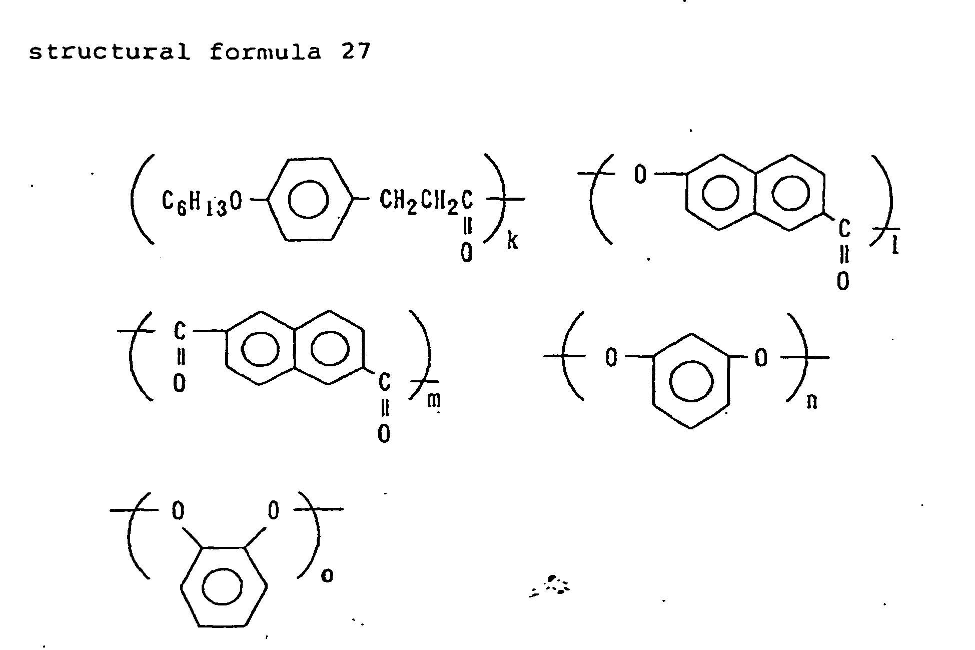 where n+o=k/2+m
k/m=80/60~2/99, preferably 40/80~10/95 n/o=100/0~0/100, preferably 95/5~5/95, l/(n+o)=20/10~0/10, preferably 15/10~5/10,
and k, l, m, n and o represent, respectively, a molar ratio. 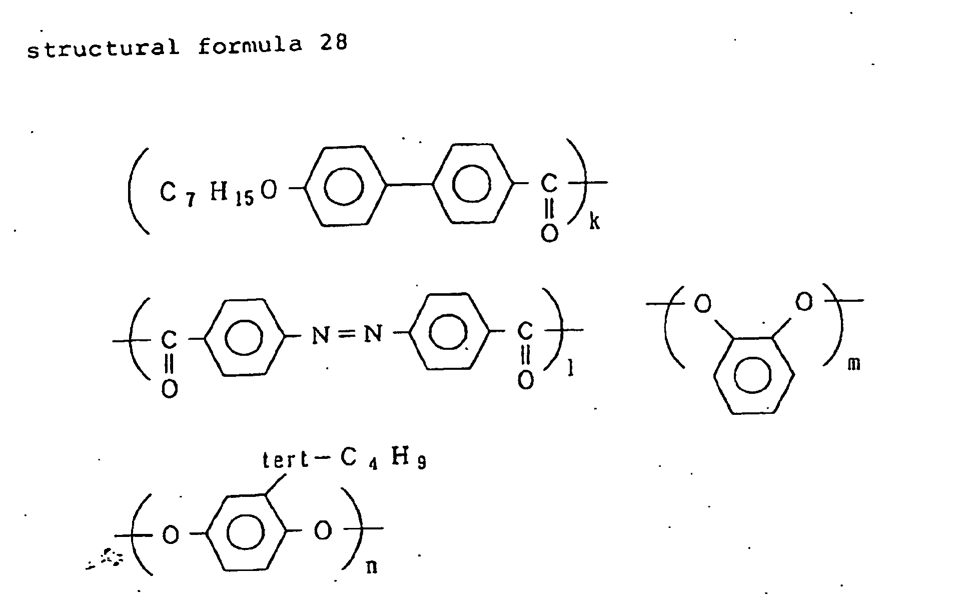 where m+n=k/2+1
k/l=80/60~2/99, preferably 40/80~10/95
m/n=100/0~0/100, preferably 95/5~5/95, and k, l, m and n represent, respectively, a molar ratio. 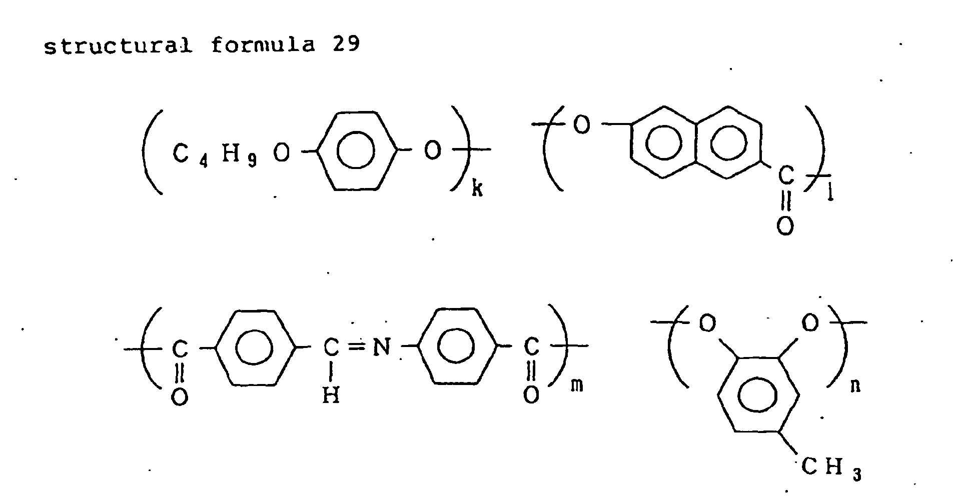 where m=k/2+n
k/n=80/60~2/99, preferably 40/80~10/95
l/m=20/10~0/10, preferably 15/10~15/10, and k, l, m and n represent, respectively, a molar ratio. 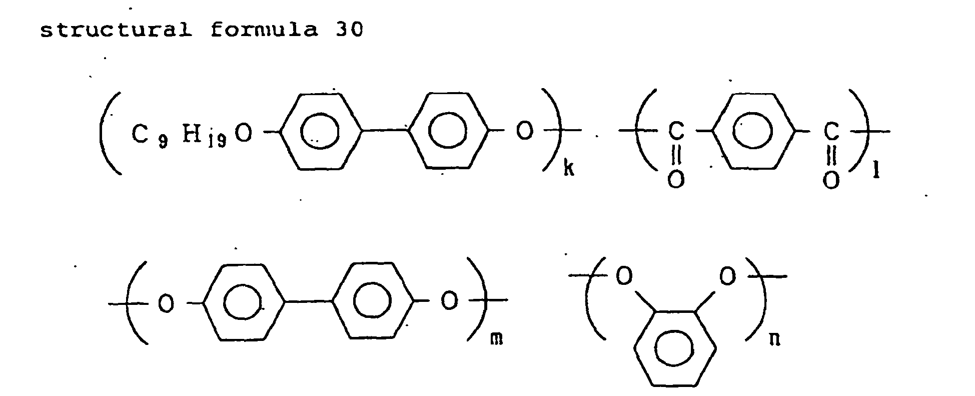 where l=k/2+m+n
k/(m+n)=80/60~2/99, preferably 40/80~10/95 m/n=100/0~0/100, preferably 95/5~5/95, and k, l, m and n represent, respectively, a molar ratio. 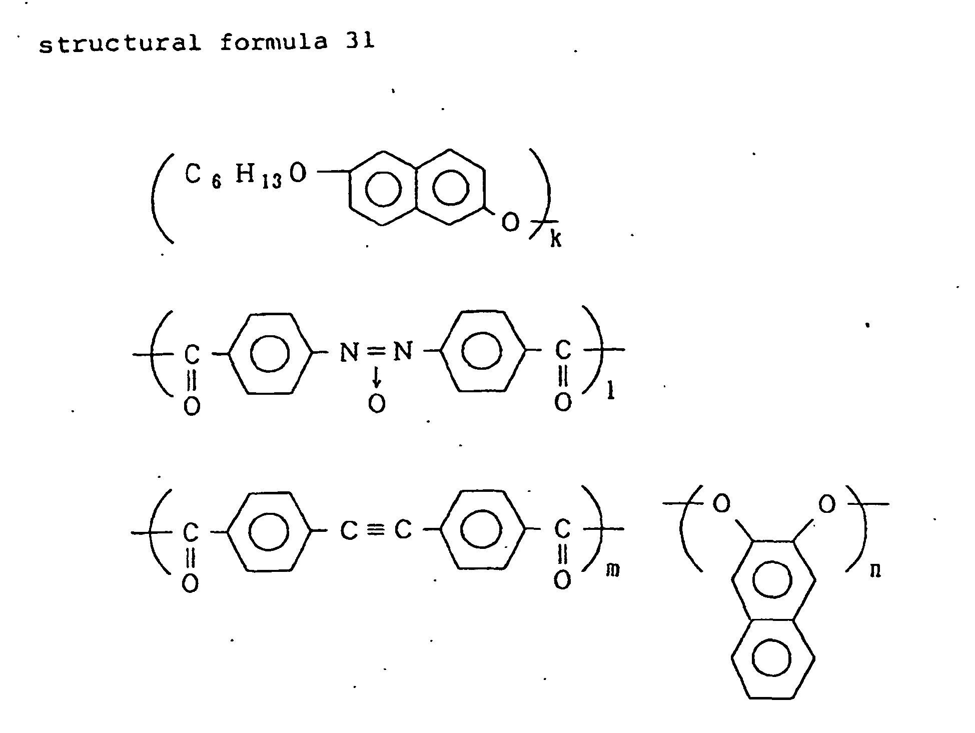 where l+m=k/2+n
k/n=80/60~2/99, preferably 40/80~10/95 l/m=100/0~0/100, preferably 95/5~5/95,
and k, l, m and n represent, respectively, a molar ratio. 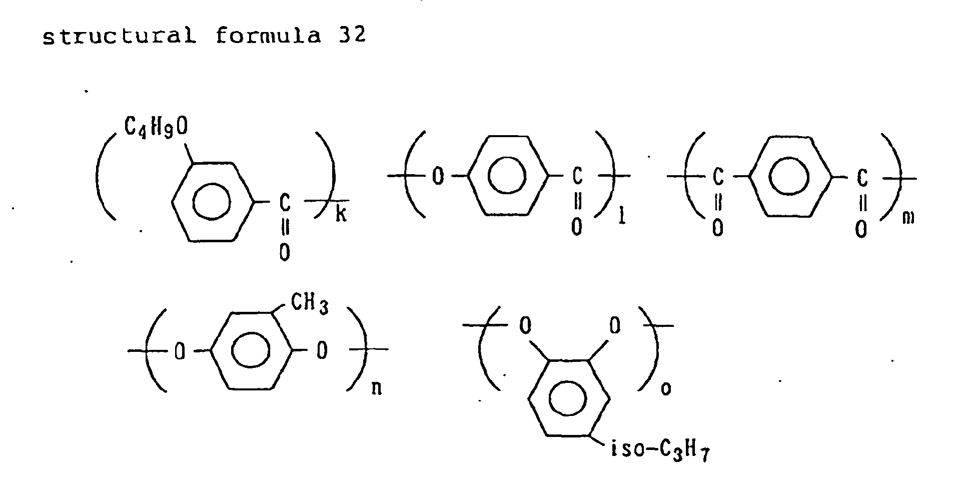 where n+o=k/2+m
k/m=80/60~2/99, preferably 40/80~10/95
n/o=100/0~0/100, preferably 95/5~5/95, l/(n+o)=20/10~0/10, preferably 15/10~5/10,
and k, l, m, n and o represent, respectively, a molar ratio. 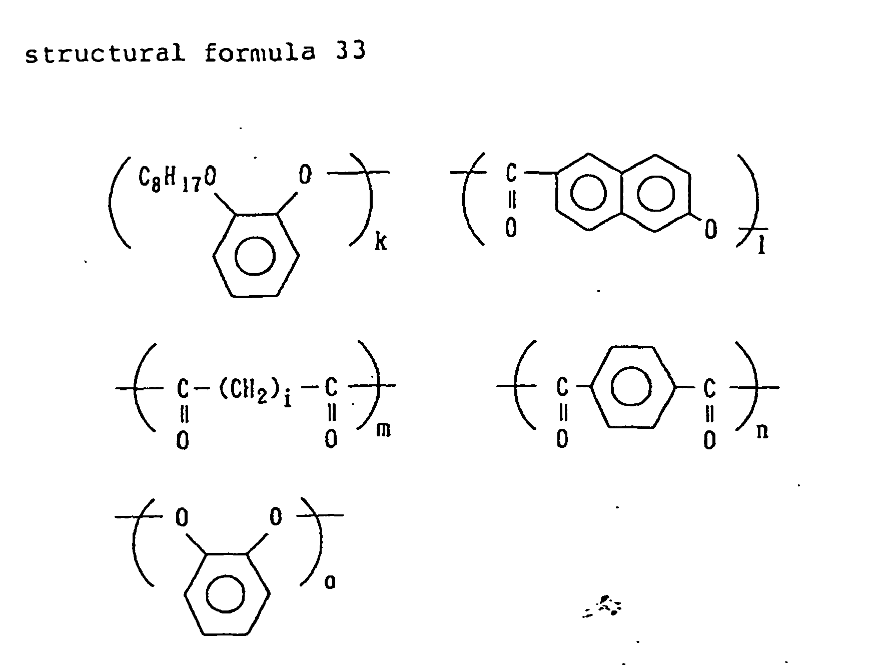 where m+n=k/2+o
k/o=80/60~2/99, preferably 40/80~10/95 m/n=100/0~0/100, preferably 95/5~5/95, l/(m+n)=20/10~0/10, preferably 15/10~5/10,
and i is an integer of 2~12, and k, l, m, n and o represent, respectively, a molar ratio. 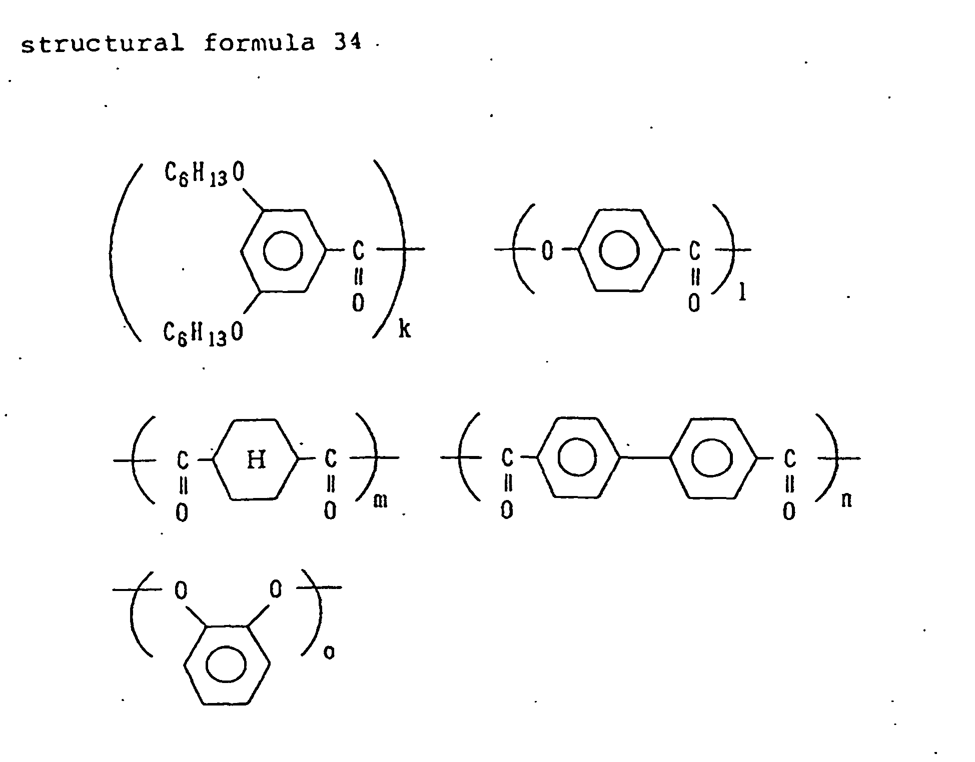 where o=k/2+m+n
k/(m+n)=80/60~2/99, preferably 40/80~10/95 m/n=100/0~0/100, preferably 95/5~5/95, l/o=20/10~0/10, preferably 15/10~1/10,
and k, l, m, n and o represent, respectively, a molar ratio. 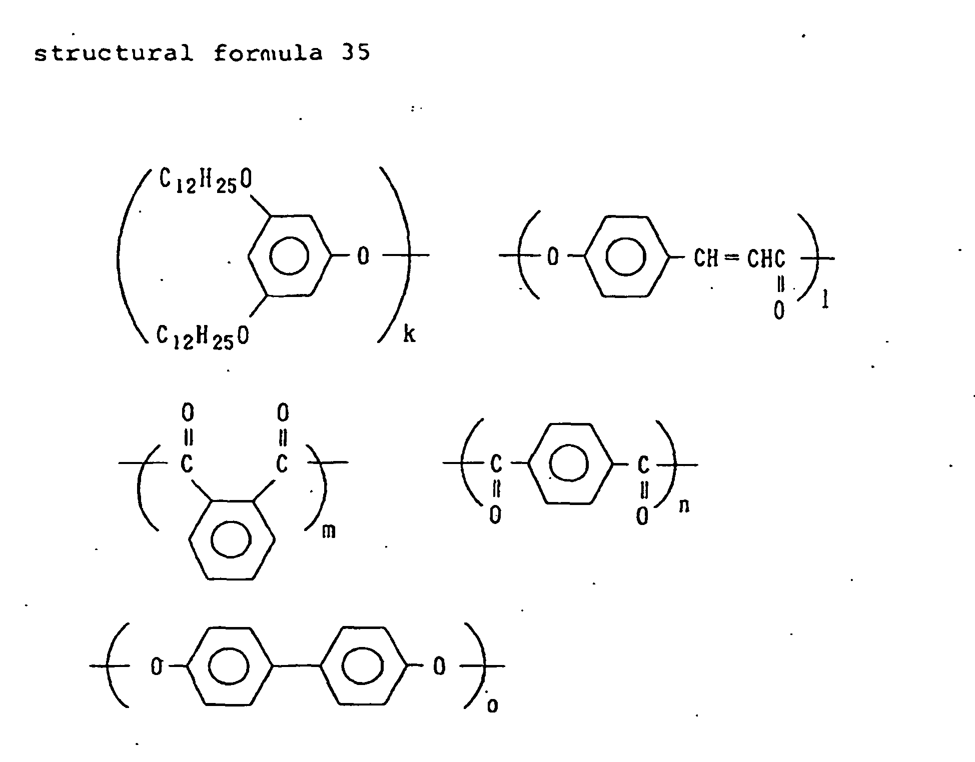 where m+n=k/2+o
k/o=80/60~2/99, preferably 40/80~10/95
m/n=100/0~0/100, preferably 95/5~5/95, l/(m+n)=20/10~0/10, preferably 15/10~5/10,
and k, l, m, n and o represent, respectively, a molar ratio. 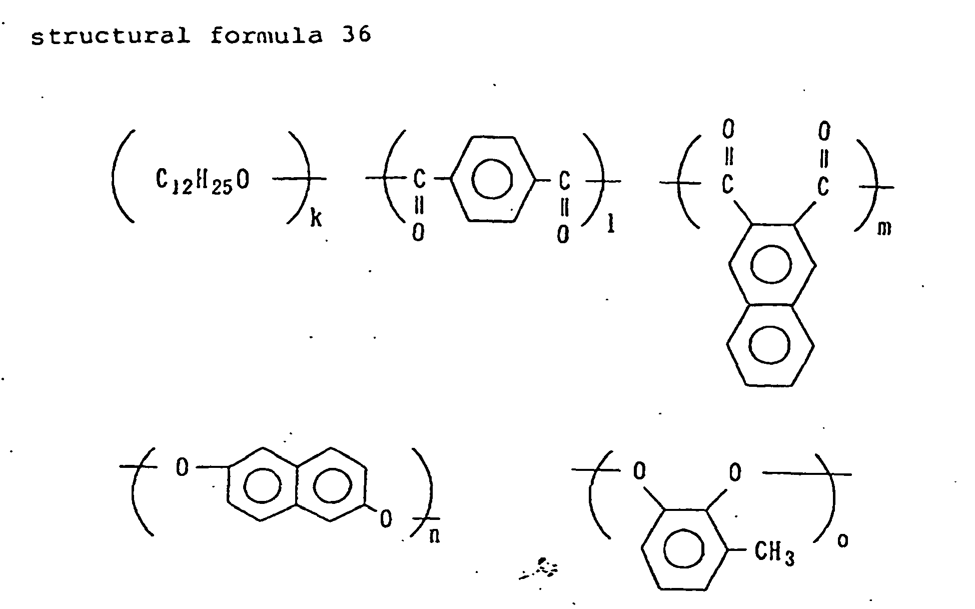 where l+m=k/2+n+o
k/(n+o)=80/60~2/99, preferably 40/80~10/95 l/m=100/0~0/100, preferably 95/5~5/95,
n/o=100/0~0/100, preferably 95/5~5/95,
and k, l, m, n and o represent, respectively, a molar ratio. 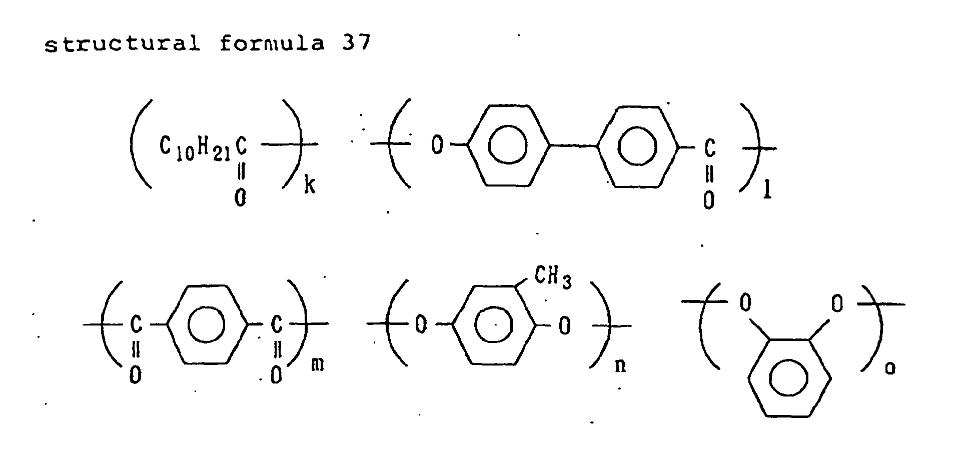 where n+o=κ/2+m
k/m=80/60~2/99, preferably 40/80~10/95 n/o=100/0~0/100, preferably 95/5~5/95,
l/m=20/10~0/10, preferably 15/10~5/10,
and k, l, m, n and o represent, respectively, a molar ratio. 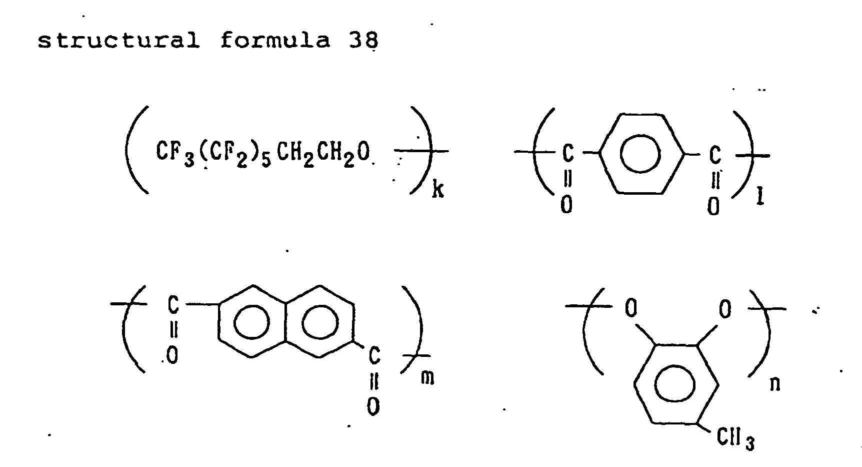 where l+m=k/2+o
k/o=80/60~2/99, preferably 40/80~10/95 l/m=100/0~0/100, preferably 95/5~5/95,
and k, l, m and n represent, respectively, a molar ratio. 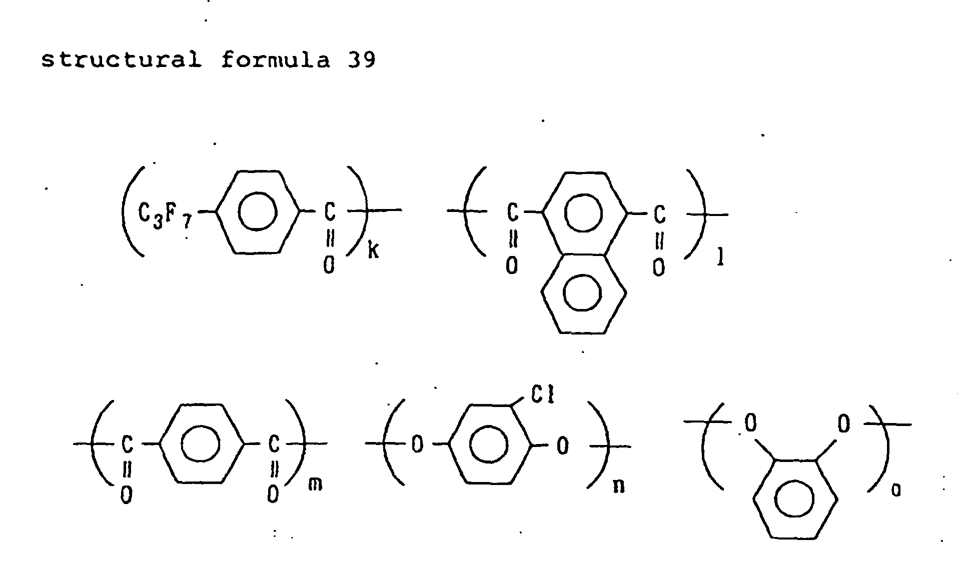 where n+o=k/2+l+m
k/(l+m)=80/60~2/99, preferably 40/80~10/95 l/m=100/0~0/100, preferably 95/5~5/95, n/o=100/0~0/100, preferably 95/5~5/95,
and k, l, m, n and o represent, respectively, a molar ratio. 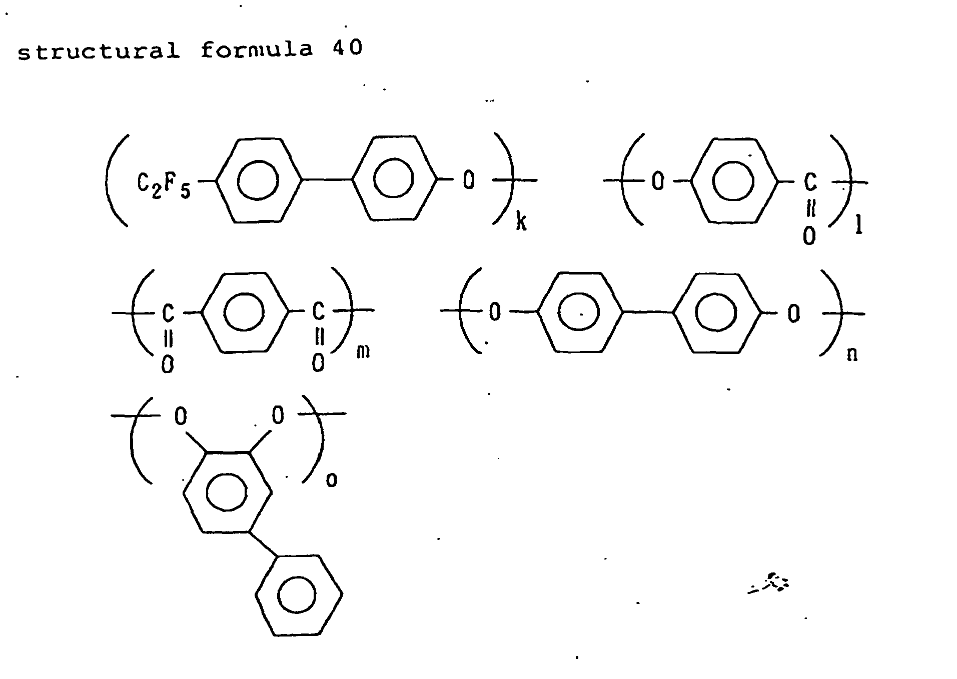 where m=k/2+n+o
k/(n+o)=80/60~2/99, preferably 40/80~10/95 n/o=100/10~0/100, preferably 95/5~5/95,
l/m=20/10~0/10, preferably 15/10~5/10,
and k, l, m, n and o represent, respectively, a molar ratio. 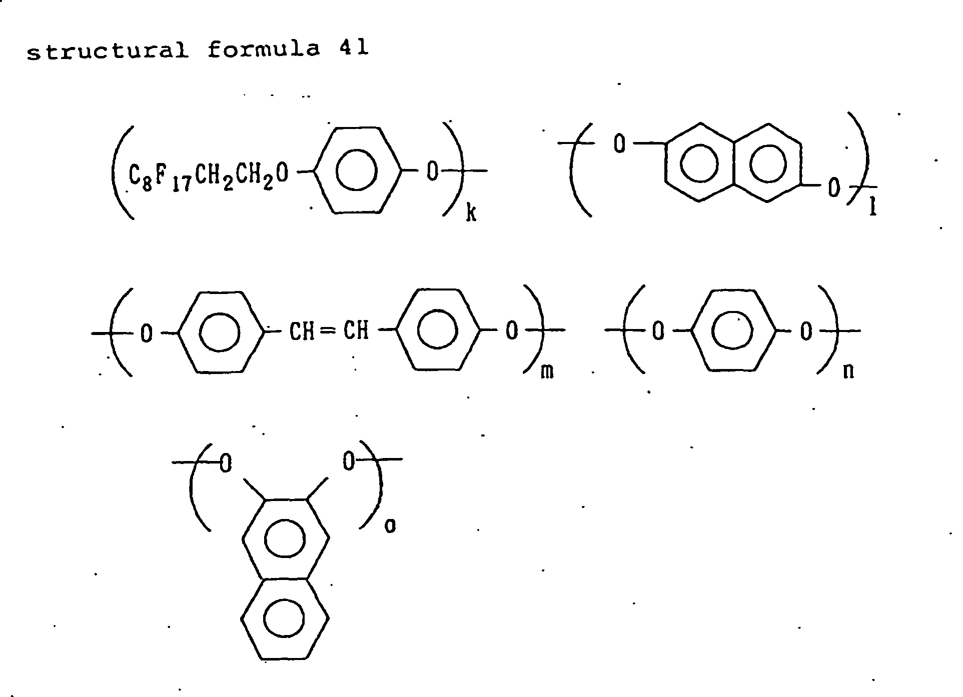 where o=k/2+m+n
k/(m+n)=80/60~2/99, preferably 40/80~10/95 m/n=100/0~0/100, preferably 95/5~5/95, l/m=20/10~0/10, preferably 15/10~5/10,
and k, l, m, n and o represent, respectively, a molar ratio. 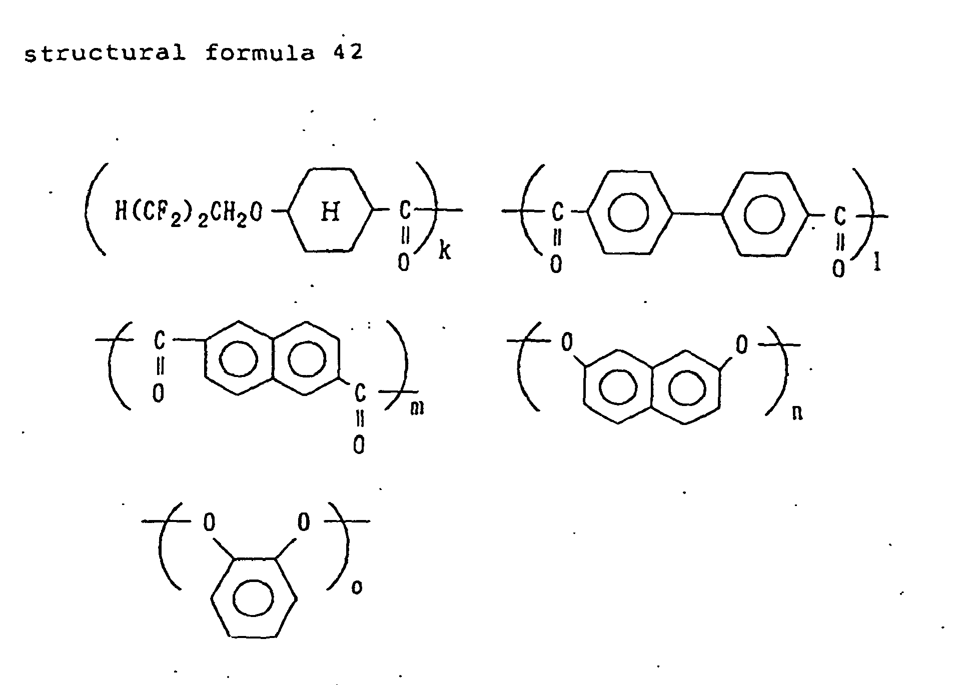 where n+o=k/2+l+m
k/(l+m)=80/60~2/99, preferably 40/80~10/95 l/m=100/0~0/100, preferably 95/5~5/95, n/o=100/0~0/100, preferably 95/5~5/95,
and k, l, m, n and o represent, respectively, a molar ratio. 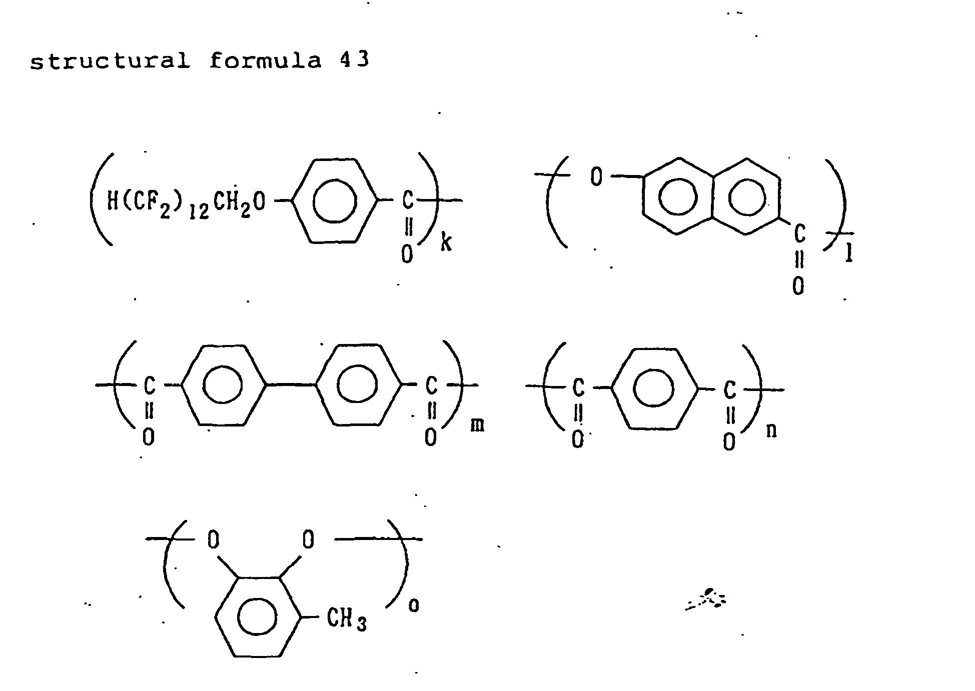 where o=k/2+m+n
k/(m+n)=80/60~2/99, preferably 40/80~10/95 m/n=100/0~0/100, preferably 95/5~5/95, l/o=20/10~0/10, preferably 15/10~5/10,
and k, l, m, n and o represent, respectively, a molar ratio. 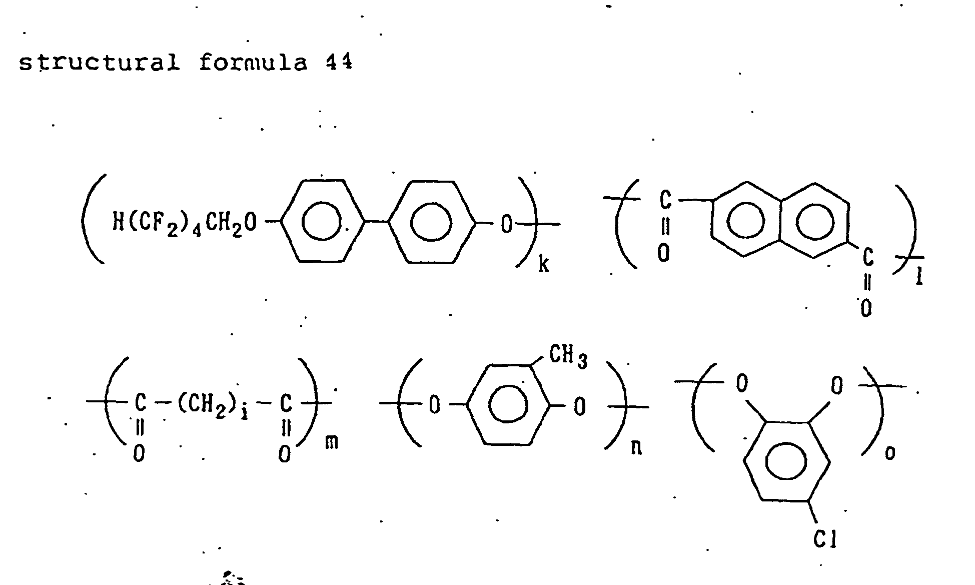 where l+m=k/2+n+o
k/(n+o)=80/60~2/99, preferably 40/80~10/95 l/m=100/0~0/100, preferably 95/5~5/95,
n/o=100/0~0/100, preferably 95/5~5/95,
and i is an integer of 2~12, and k, l, m, n and o represent, respectively, a molar ratio. 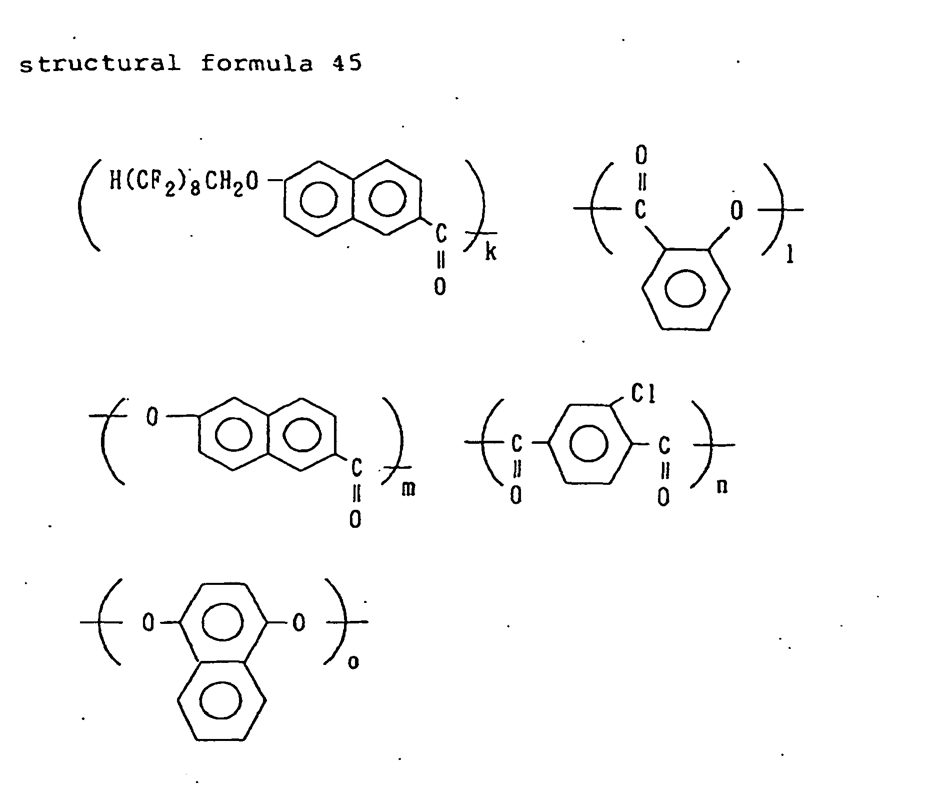 where o=k/2+n
k/n=80/60~2/99, preferably 40/80~10/95 l/m=100/0~0/100, preferably 95/5~5/95, l+m/o=20/10~1/10, preferably 15/10~5/10,
and k, l, m, n and o represent, respectively, a molar ratio. 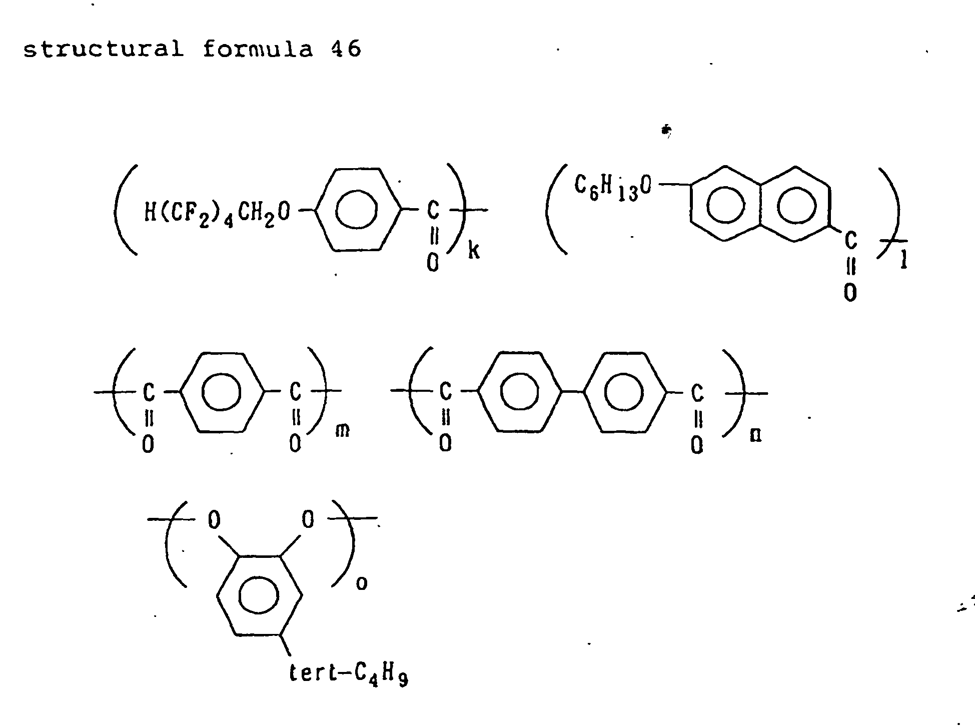 where o=k/2+l/2+m+n
(k+l)/(m+n)=80/60~2/99, preferably 40/80~10/95 k/l=100/0~0/100, preferably 90/10~10/90, m/n=100/0~0/100, preferably 95/5~5/95,
and k, l, m, n and o represent, respectively, a molar ratio. 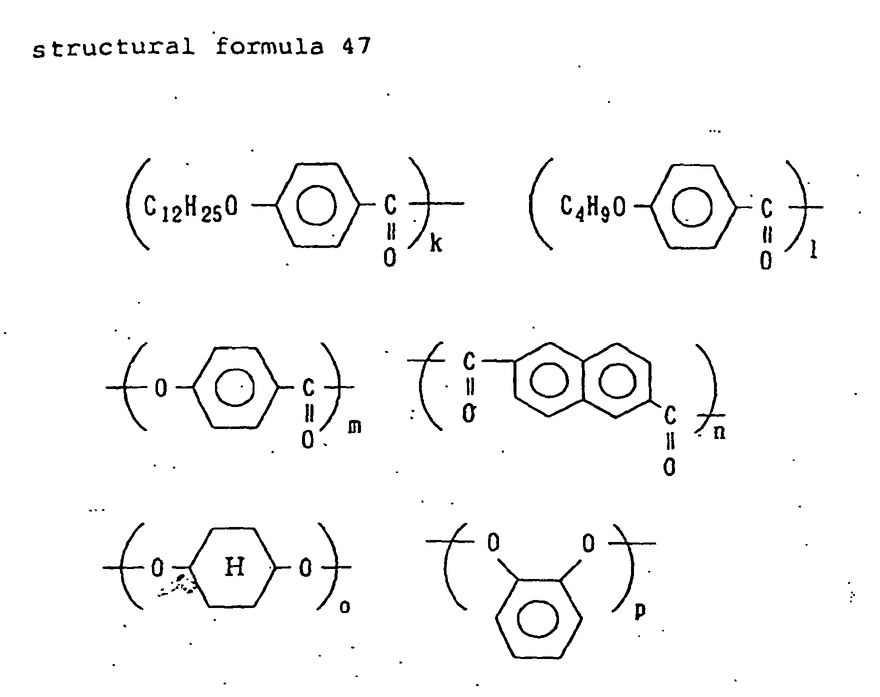 where o+p=k/2+l/2+n
(k+1)/n=80/60~2/99, preferably 40/80~10/95
k/l=100/0~0/100, preferably 90/10~10/90,
o/p=100/0~0/100, preferably 95/5~5/95,
m/n=20/10~0/10, preferably 15/10~5/10,
and k, l, m, n, o and p represent, respectively, a molar ratio.

Further, another liquid crystalline polymer which exhibits a homeotropic orientation is a side chain type liquid crystalline polymer which has, as side chain(s), a unit having a substituent group such as an aromatic group having a bulky substituent, aromatic group having a long chain alkyl group, or aromatic group having fluorine atoms. Examples of the side chain type liquid crystalline polymer include polyacrylates, polymethacrylates, polysiloxanes and polymalonates having the above exemplified side chain(s). Examples of the structure of the side chain type liquid crystalline polymer are given below. 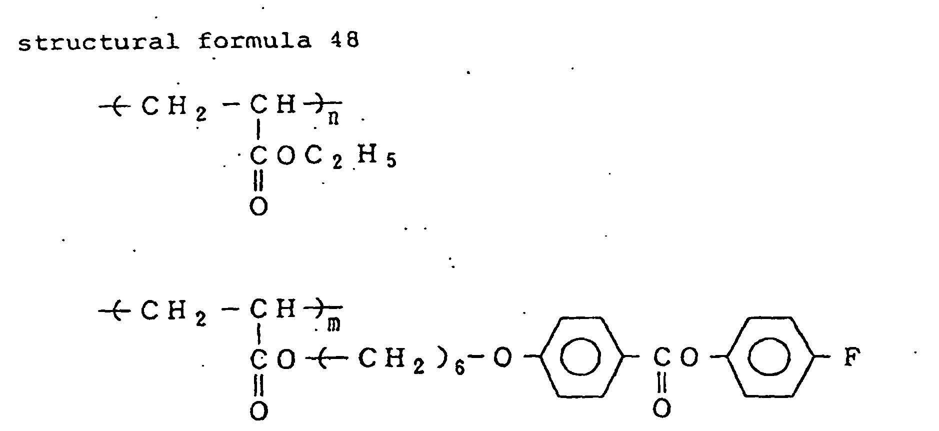 where n/m=80/20~20/80, preferably 75/25~25/75. 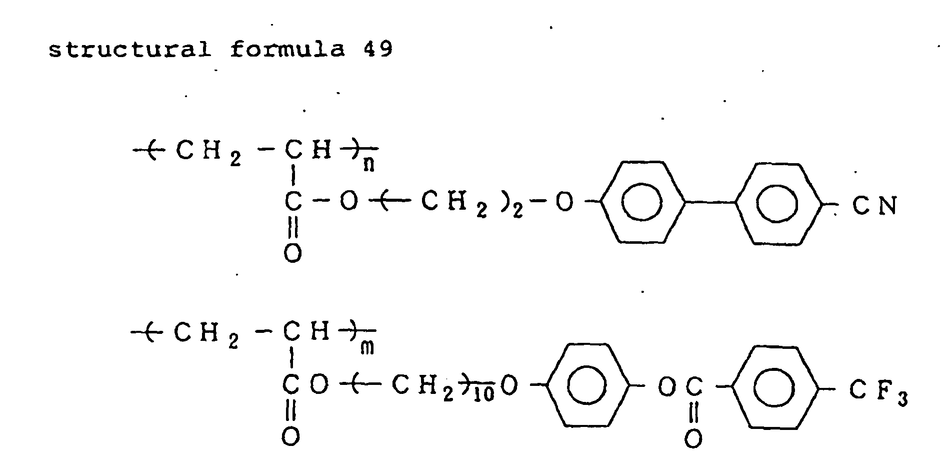 where n/m=80/20~20/80, preferably 75/25~25/75. 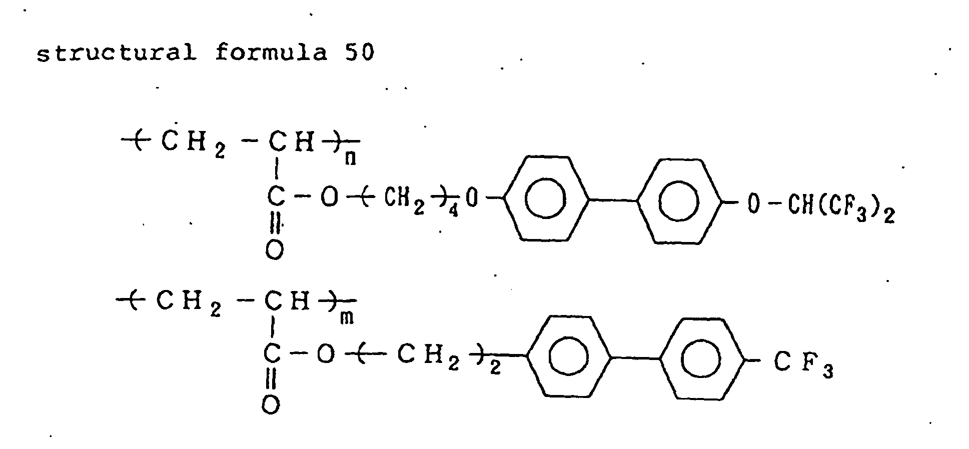 where n/m=80/20~20/80, preferably 75/25~25/75. 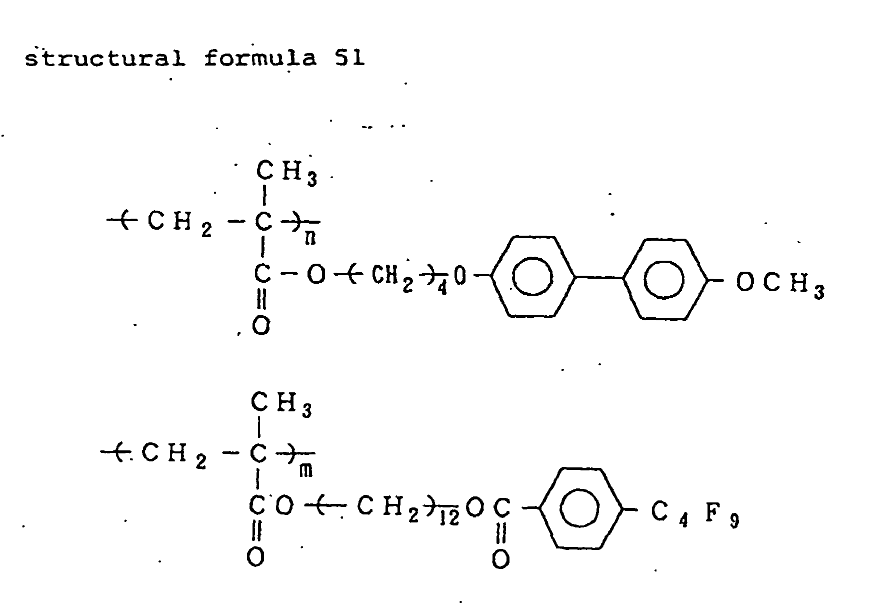 where n/m=80/20~20/80, preferably 75/25~25/75. 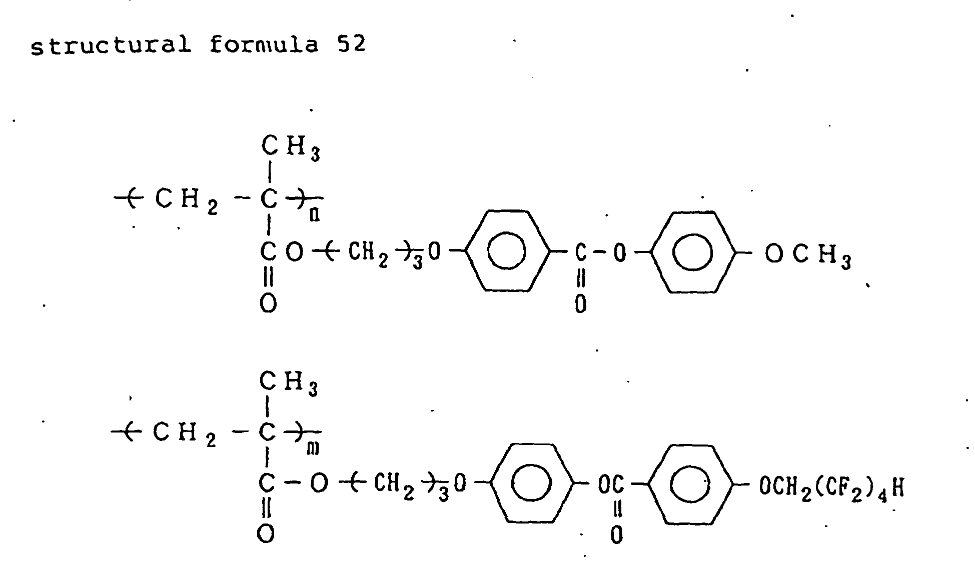 where n/m=80/20~20/80, preferably 75/25~25/75. 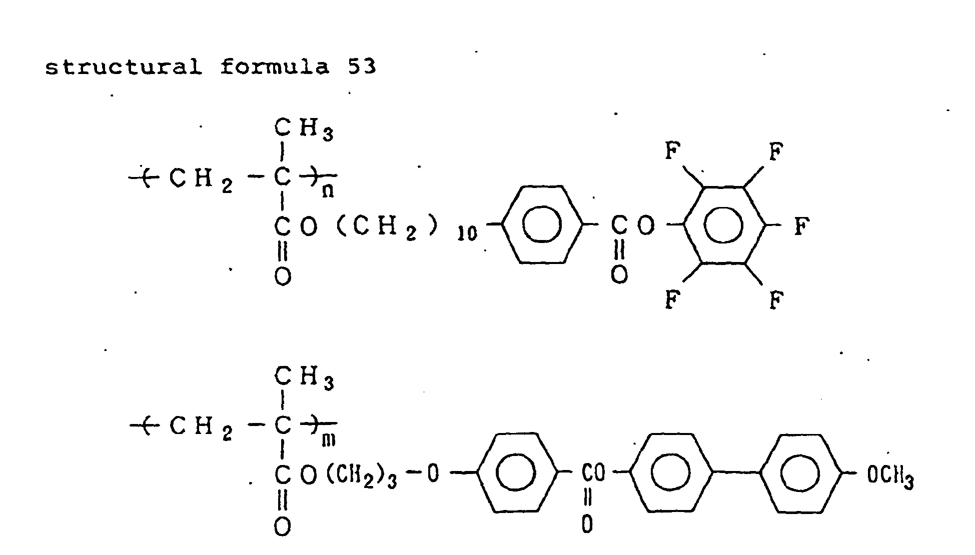 where n/m=80/20~20/80, preferably 75/25~25/75. 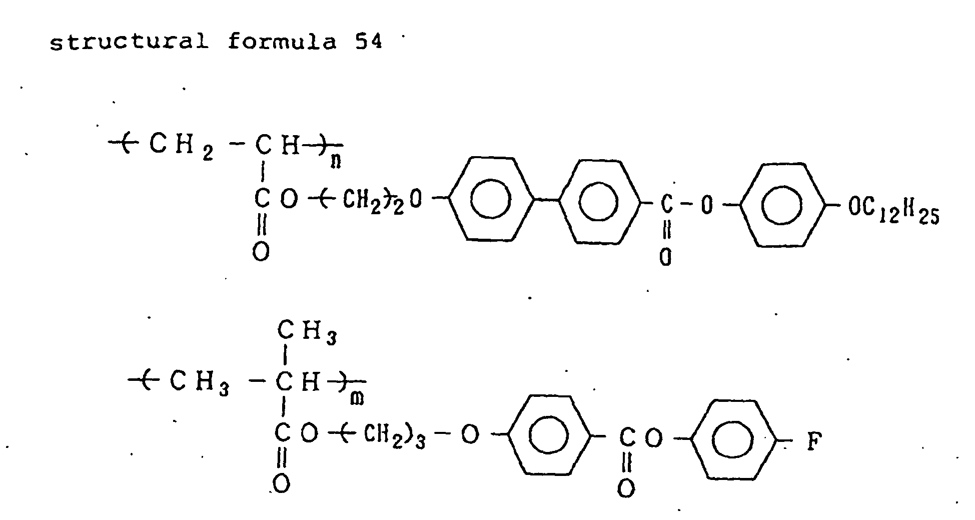 where n/m=80/20~20/80, preferably 75/25~25/75. 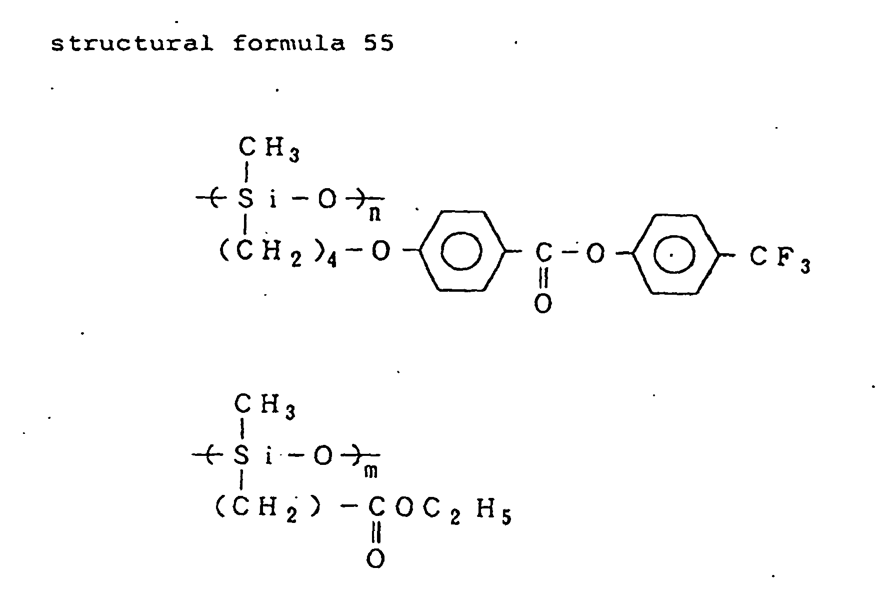 where n/m=80/20~20/80, preferably 75/25~25/75. 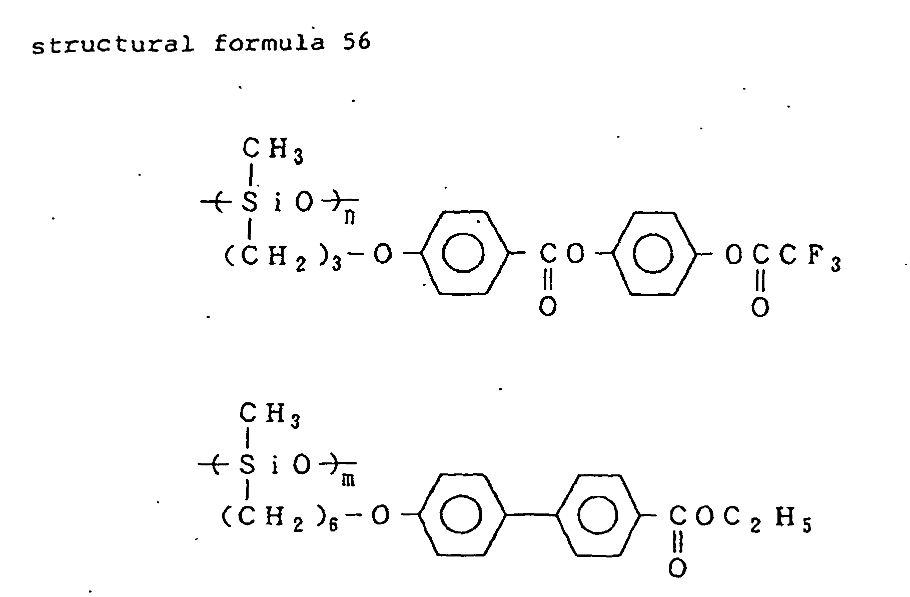 where n/m=80/20~20/80, preferably 75/25~25/75. 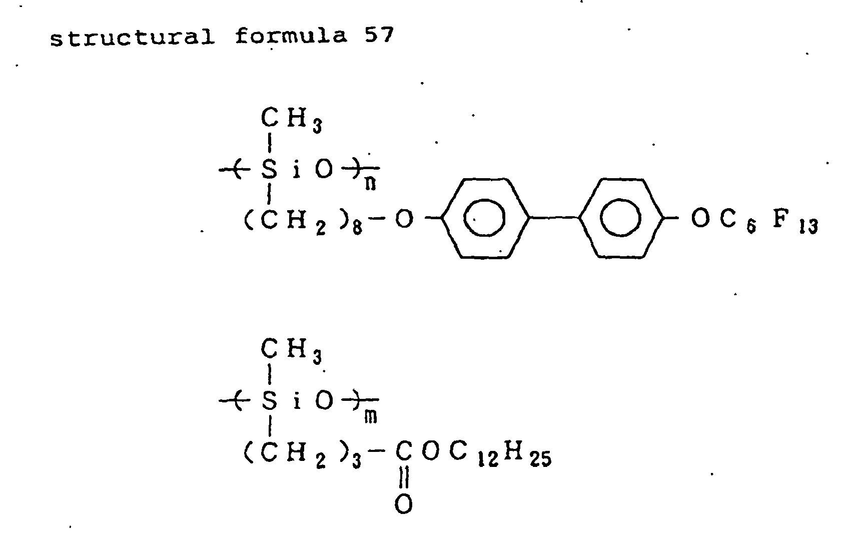 where n/m=80/20~20/80, preferably 75/25~25/75. 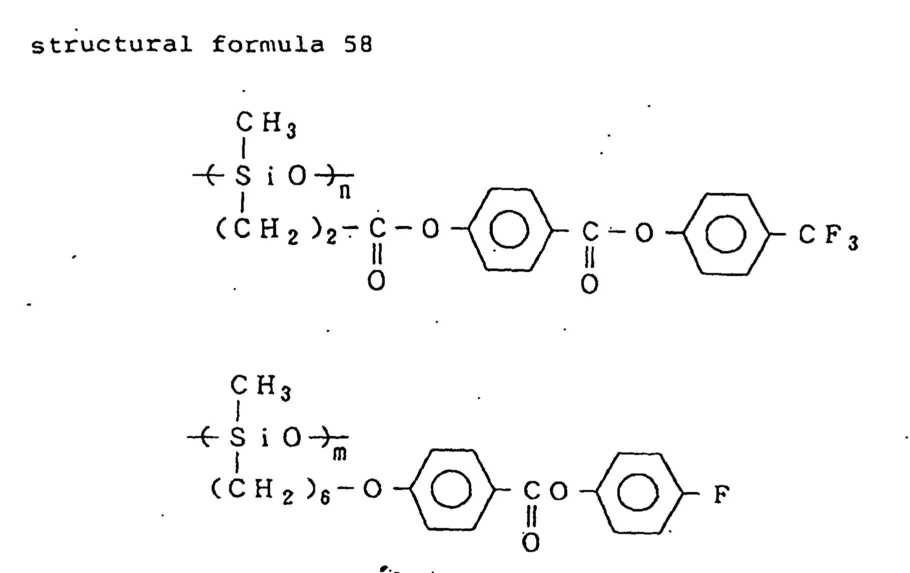 where n/m=80/20~20/80, preferably 75/25~25/75. 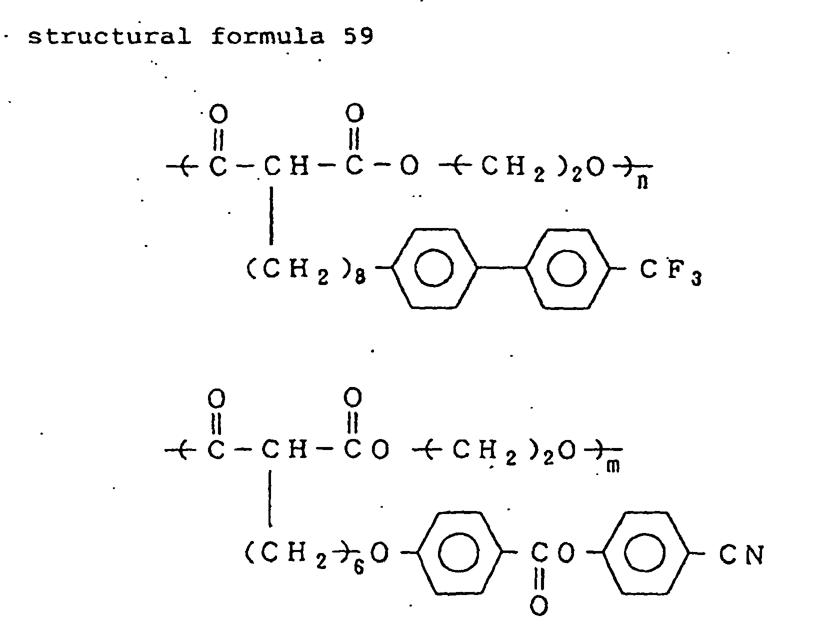 where n/M=80/20~20/80, preferably 75/25~25/75. 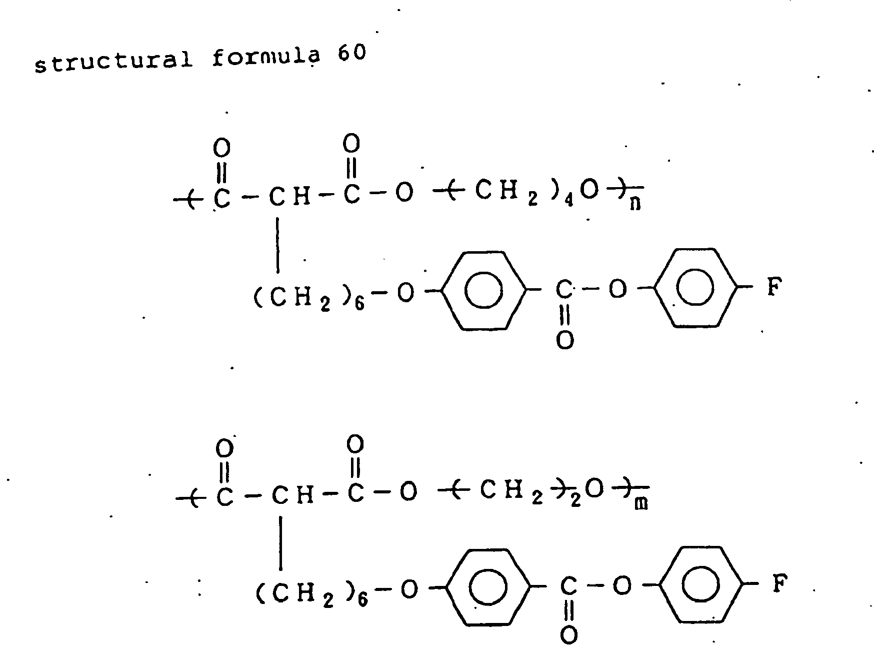 where n/m=80/20~20/80, preferably 75/25~25/75. 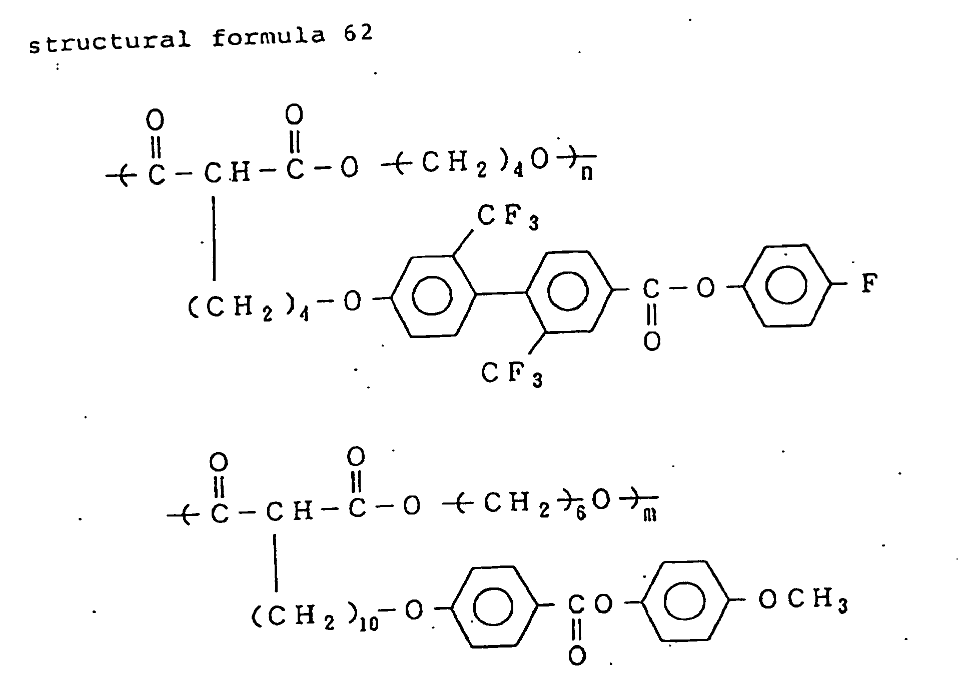 where n/m=80/20~20/80, preferably 75/25~25/75.

Out of the homeotropic orientation liquid crystalline polymers described above, the molecular weight of ① liquid crystalline polymer having an aromatic group having a bulky substituent group, an aromatic group having a long-chain alkyl group, an aromatic group having a fluorine atom, etc., in a structural unit constituting a main chain of the liquid crystalline polymer is usually 0.05 to 2.0, preferably 0.07 to 1.0, in terms of logarithmic viscosity as determined at 30 °C in e.g. a mixed solvent of phenol/tetrachloroethane (ratio of 60/40 by weight). If the logarithmic viscosity is less than 0.05, there is the possibility that the mechanical strength of the resulting compensation film may be lowered. If the logarithmic viscosity is more than 2.0, there is the possibility that homeotropic orientation may be lost. Further, in the case of more than 2.0, there is the possibility that the viscosity of the polymer in a liquid crystalline state tends to be too high, and even if the polymer is oriented in a homeotropic fashion, the time required for the orientation may be too long. Further, there is also the possibility that nematic hybrid orientation cannot be obtained at the time of production of the compensation film as described below in detail.

In the case of ② liquid crystalline polymer having a monofunctional structural unit derived from a compound having one monofunctional site (e.g. such as monoalcohol, monocarboxylic acid) having a C3 to C20 long-chain alkyl group or a C2 to C20 long-chain fluoroalkyl group at one or both terminals of the liquid crystalline polymer chain, the molecular weight is usually 0.04 to 1.5, preferably 0.06 to 1.0, in terms of logarithmic viscosity as determined at 30 °C in a mixed solvent of phenol/tetrachloroethane (ratio of 60/40 by weight). If the logarithmic viscosity is less than 0.04, the mechanical strength of the resulting compensation film may be lowered. If the logarithmic viscosity is more than 1.5, there is the possibility that the homeotropic orientation may be lost. Further, there is the possibility that the viscosity of the polymer in a liquid crystalline state tends to be too high, and even if the polymer is oriented in a homeotropic fashion, the time required for the orientation may be too long. Further, there is also the possibility that nematic hybrid orientation cannot be obtained at the time of production of the compensation film as described below in detail.

In the case of the side chain type liquid crystalline polymer, the weight average molecular weight is in the range of usually 1,000 to 100,000, preferably 3,000 to 50,000, as determined using polystyrene as standard. Further, a molecular weight of less than 1,000 is not preferable because the mechanical strength of the compensation film may be lowered. If the molecular weight is more than 100,000, there is the possibility that homeotropic orientation may be lost. Further, in the case of more than 100,000, there is the possibility that the solubility of the liquid crystalline polymer in a solvent may be decreased, so e.g. the viscosity of the polymer coating solution is rendered too high to prepare an uniform film at the time of production of the compensation film as described below in detail.

The method of synthesizing the above liquid crystalline polymer is not particularly limited. The liquid crystalline polymer can be synthesized by any polymerization method known in the art. By way of example, synthesis of liquid crystalline polyester can be effected by melt polymerization or by an acid chloride method using an acid chloride of a corresponding dicarboxylic acid.

In synthesis of the liquid crystalline polymer, the monofunctional structural unit is subjected to polymerization reaction as monoalcohol, monocarboxylic acid and functional derivatives thereof as described above, specifically acetylated or halogenated compounds. The content of the monofunctional structural unit in the liquid crystalline polymer, specifically in the liquid crystalline polyester is in the range of 2/201 to 80/240 in terms of molar fraction in the constitutional components excluding hydroxycarboxylic acid structural unit. The content is more preferably in the range of 10/205 to 20/220. If the content of the monofunctional structural unit is less than 2/210 (molar fraction), there is the possibility that the liquid crystalline polyester does not exhibit homeotropic orientation. If the content of the monofunctional structural unit is more than 80/240 (molar fraction), there is the possibility that the molecular weight of the liquid crystalline polyester may not reach a predetermined value. Further, the resulting compensation film is not preferable because of its inadequate mechanical strength. The content of the monofunctional structural unit is based on the amount of the monomer components charged.

As the liquid crystalline polymer exhibiting positive uniaxial anisotropy it is possible to employ not only the homeotropic orientation liquid crystalline polymer but also the composition having a suitable combination of liquid crystalline polymers exhibiting other orientation or non-liquid-crystalline polymers not exhibiting liquid crystallinity, as described above. Use of the polymer in a composition brings about the following advantages:
① The average tilt angle of the nematic hybrid orientation can be arbitrarily controlled by controlling the compounding ratio; and
② The nematic hybrid orientation can be stabilized.

However, if the liquid crystalline polymer mixed as a composition does not exhibit optically positive uniaxial anisotropy and the liquid crystalline polymer fails to form nematic hybrid orientation in a liquid crystalline state, then the compensation film used in the present invention cannot be obtained. For use in a composition, the homeotropic orientation liquid crystalline polymer described above is preferably contained in an amount of 5 % by weight or more. With an amount of less than 5 % by weight, there is the possibility that nematic hybrid orientation cannot be obtained.

From the viewpoint of compatibility with the homeotropic orientation liquid crystalline polymer, usually a liquid crystalline polymer exhibiting other orientation than homeotropic orientation is suitably mixed as a polymer composition. As the type of liquid crystalline polymer used, the following can be exemplified: main-chain type liquid crystalline polymers such as polyester, polyimide, polyamide, polyester, polycarbonate, polyester imide etc.; and side-chain type liquid crystalline polymers such as polyacrylate, polymethacrylate, polysiloxane, polymalonate etc. Polymers are not particularly limited insofar as they are compatible with the homeotropic orientation liquid crystalline polymer, and preferably used are homogeneous orientation liquid crystalline polymers, specifically homogeneous orientation polyester, polyacrylate, polymethacrylate etc. In particular, liquid crystalline polyesters having the previously exemplified (A) ortho-substituted aromatic unit as the main chain are the most preferable.

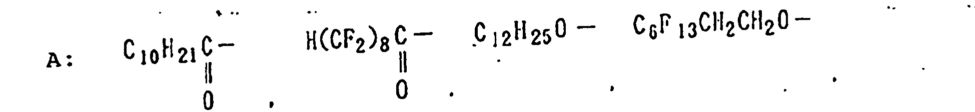

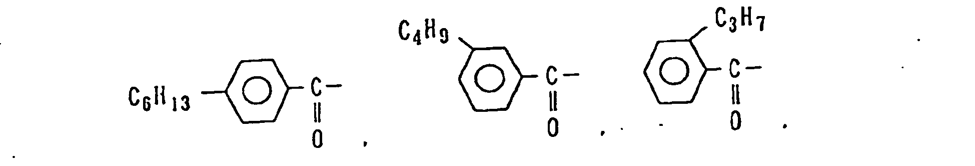

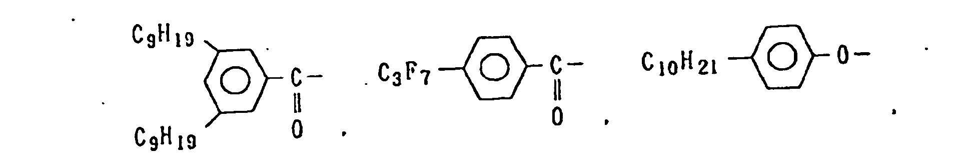

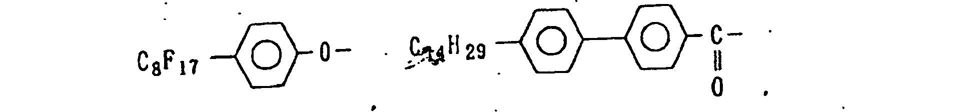

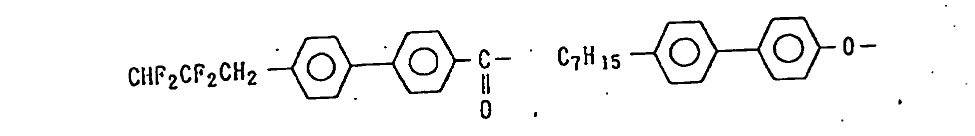

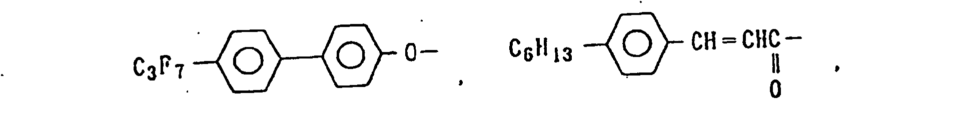

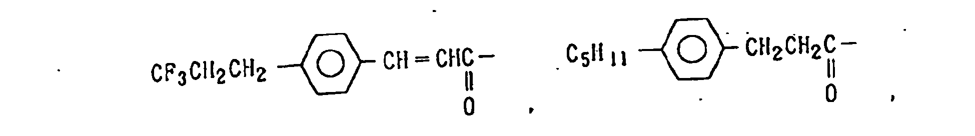

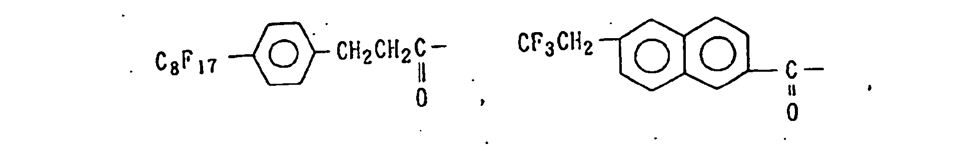

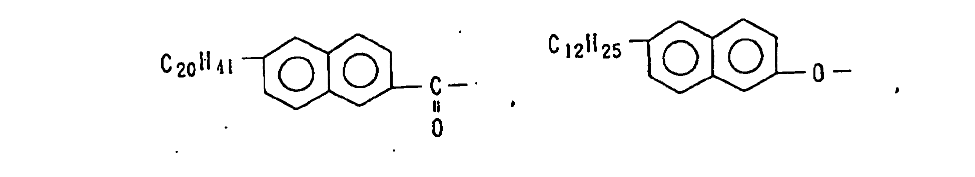

Concrete structural examples of liquid crystal forming polymers each of a homogeneous alignment are shown below. 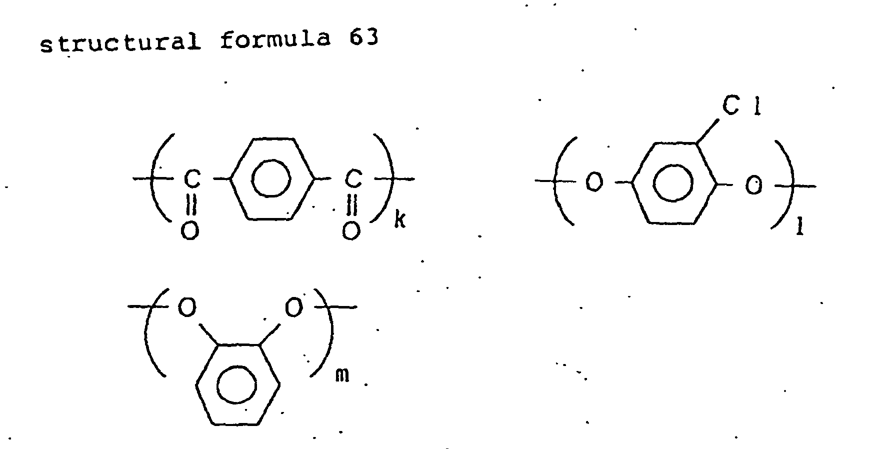 where k=l+m,
l/m=80/20~20/80, preferably 75/25~25/75,
and k, l and m represent, respectively, a molar ratio. 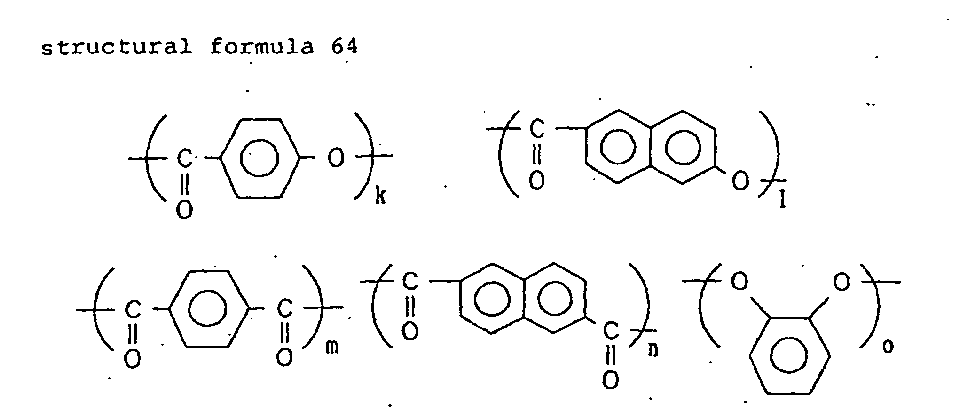 where o=m+n,
(k+l)/o=20/10~0/10, preferably 15/10~0/10, m/n=100/0~0/100, preferably 98/2~2/98,
and k, l, m, n and o represent, respectively, a molar
ratio. 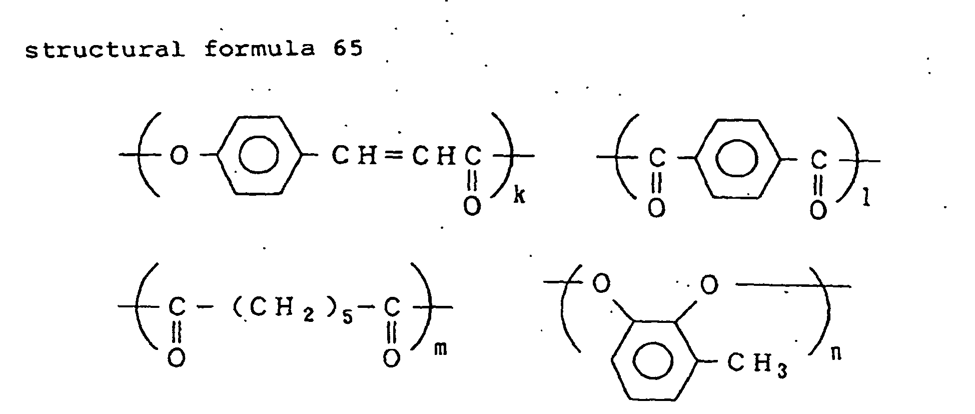 where n=l+m,
k/m=20/10~0/10, preferably 15/10~0/10,
and k, l, m and n represent, respectively, a molar ratio. 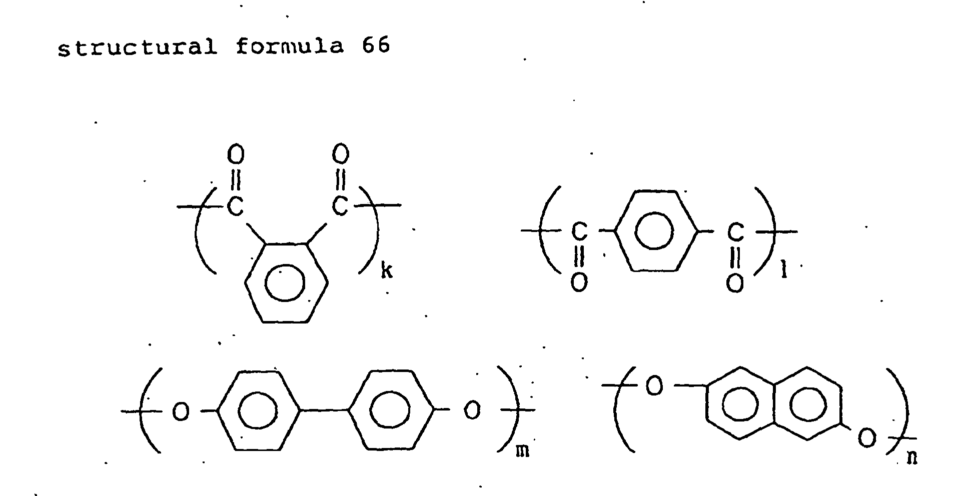 where k+l=m+n,
k/l=100/0~0/100, preferably 95/5~5/95, m/l=100/0~0/100, preferably 95/5~5/95,
and k, l, m and n represent, respectively, a molar ratio. 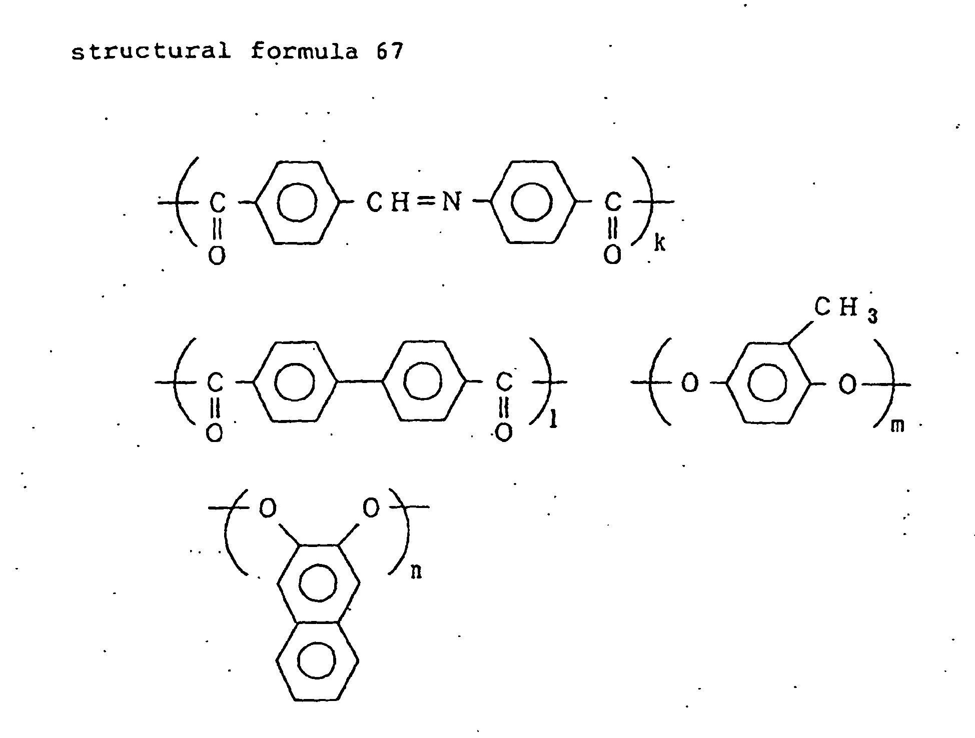 where k+l=m+n,
k/l=100/0~0/100, preferably 95/5~5/95,
m/n=100/0~0/100, preferably 95/5~5/95,
and k, l, m and n represent, respectively, a molar ratio. 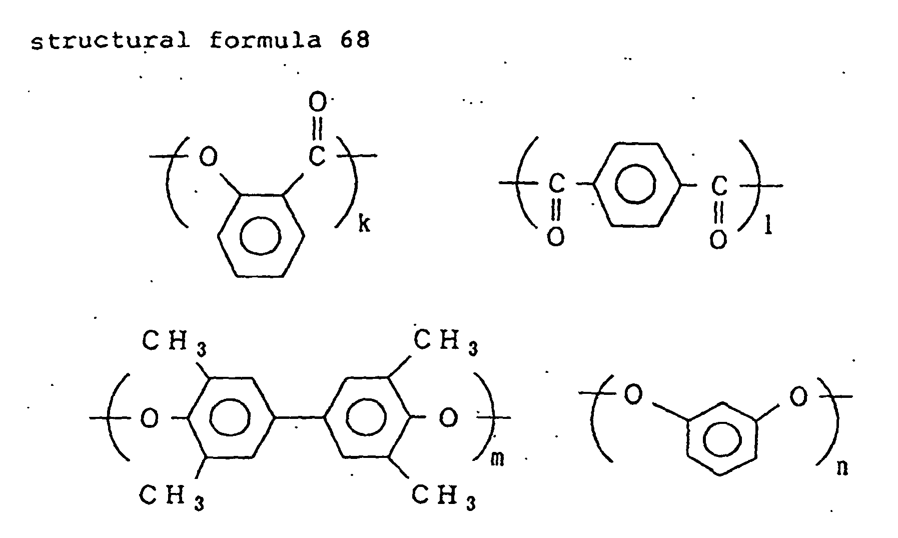 where l=m+n,
k/l=15/10~0/10, preferably 10/10~0/10, m/n=100/0~0/100, preferably 95/5~95,
and k, l, m and n represent, respectively, a molar ratio. 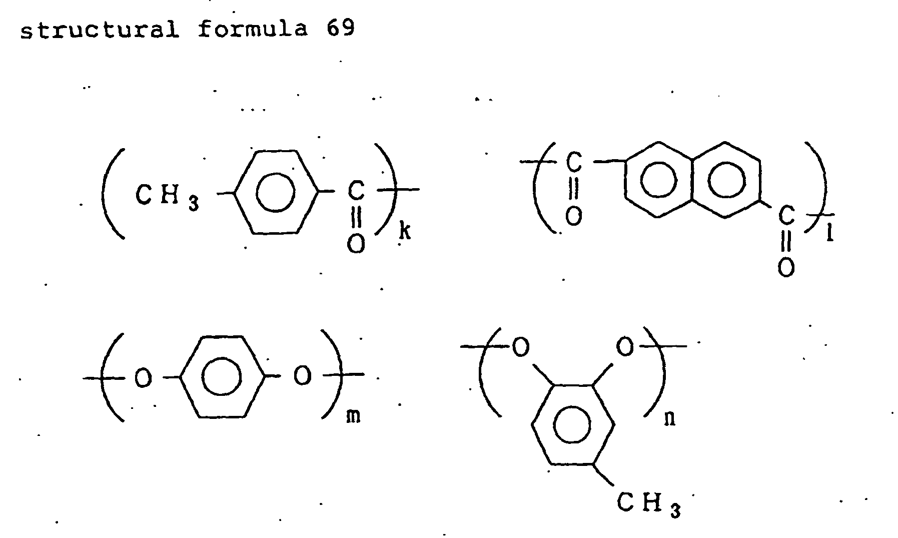 where m+n=κ/2+1
k/l=40/80~0/100, preferably 20/90~0/100
m/n=100/0~0/100, preferably 95/5~5/95,
and κ, l, m and n represent, respectively, a molar ratio. 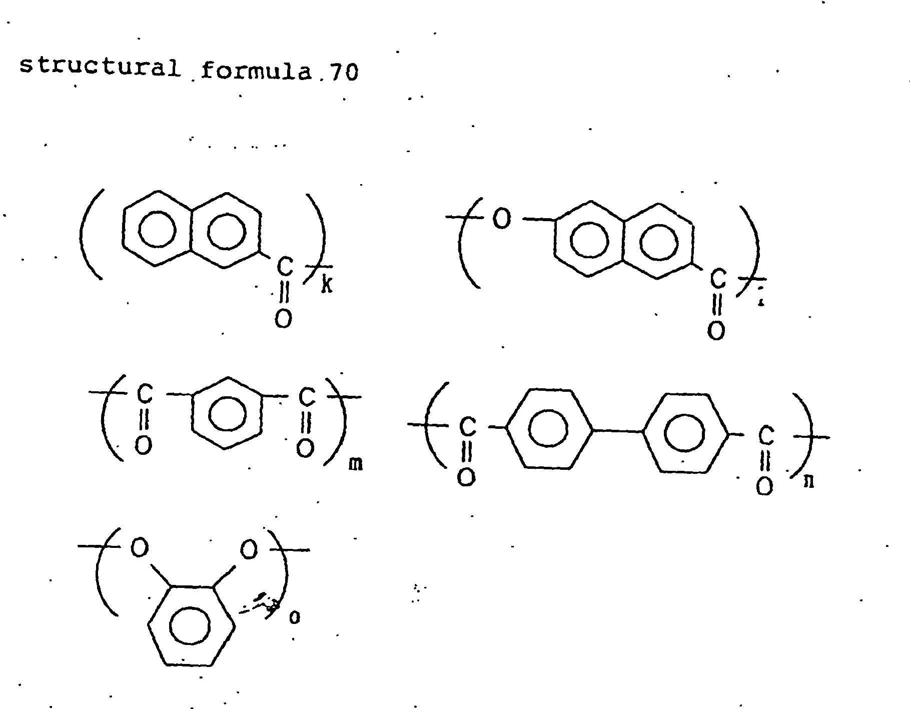 where o=k/2+n+n
k/(m+n)=40/80~0/100, preferably 20/90~0/100 m/n=100/0~0/100, preferably 95/5~5/95, l/o=20/10~0/10, preferably 15/10~5/10,
and k, l, m, n and o represent, respectively, a molar ratio. 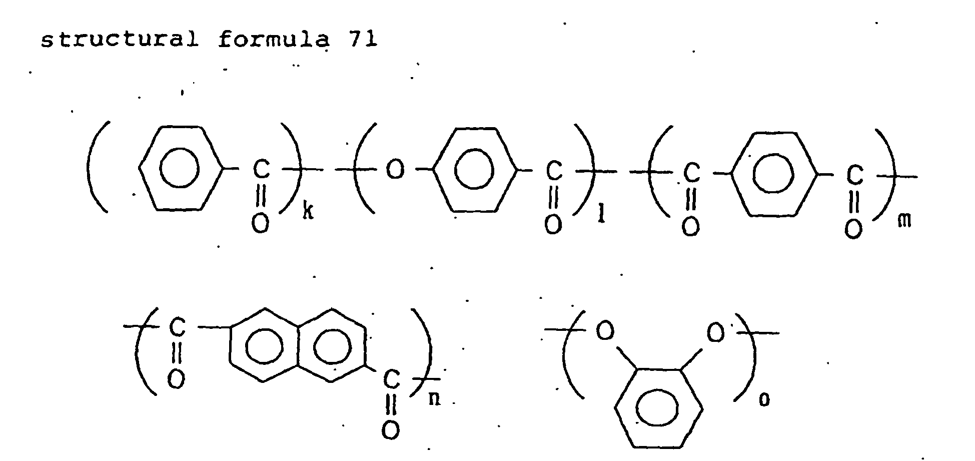 where o=k/2+m+n
k/(m+n)=40/80~0/100, preferably 20/90~0/100 m/n=100/0~0/100, preferably 95/5~5/95,
l/o=20/10~0/10, preferably 15/10~5/10,
and k, l, m, n and o represent, respectively, a molar ratio. 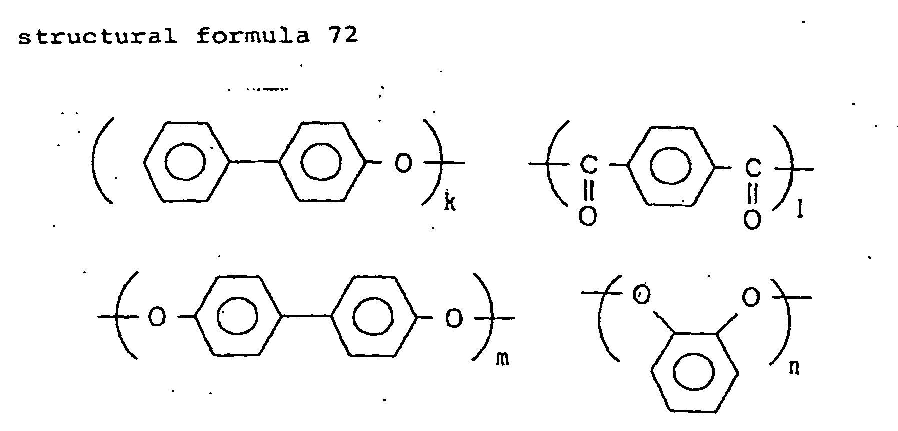 where l=k/2+m+n
k/(m+n)=40/80~0/100, preferably 20/90~0/100 n/m=100/0~0/100, preferably 95/5~5/95,
and k, l, m and n represent, respectively, a molar ratio. 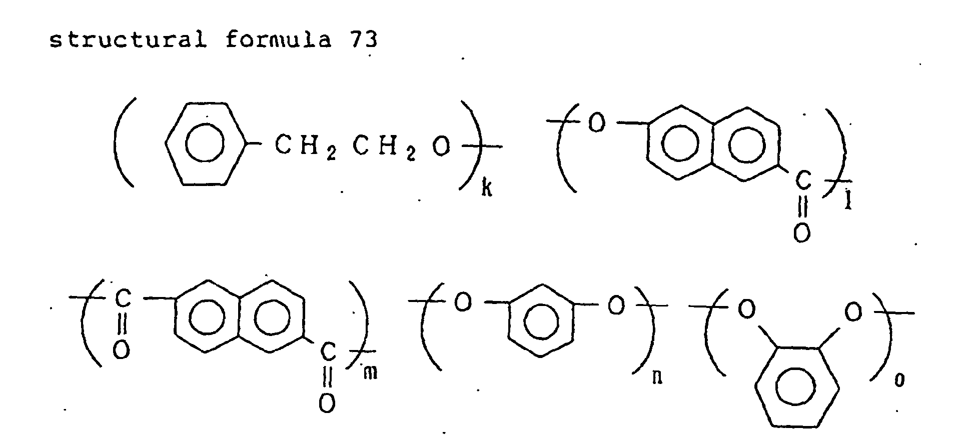 where m=k/2+n+o
k/(n+o)=40/80~0/100, preferably 20/90~0/100
n/o=100/0~0/100, preferably 95/5~5/95,
l/m=20/10~0/10, preferably 15/10~5/10,
and k, l, m, n and o represent, respectively, a molar ratio. 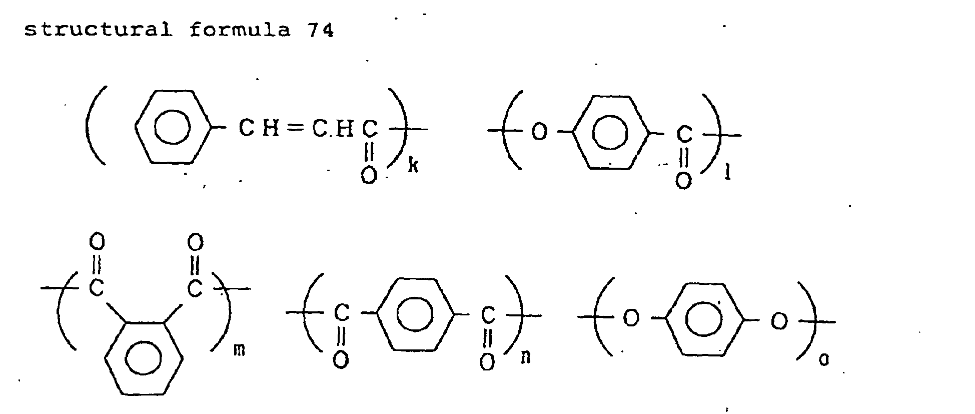 where o=k/2+m+n
k/(m+n)=40/80~0/100, preferably 20/90~0/100
m/n=100/0~0/100, preferable 95/5~5/95,
l/o=20/10~0/10, preferably 15/10~5/10,
and k, l, m, n and o represent, respectively, a molar ratio. 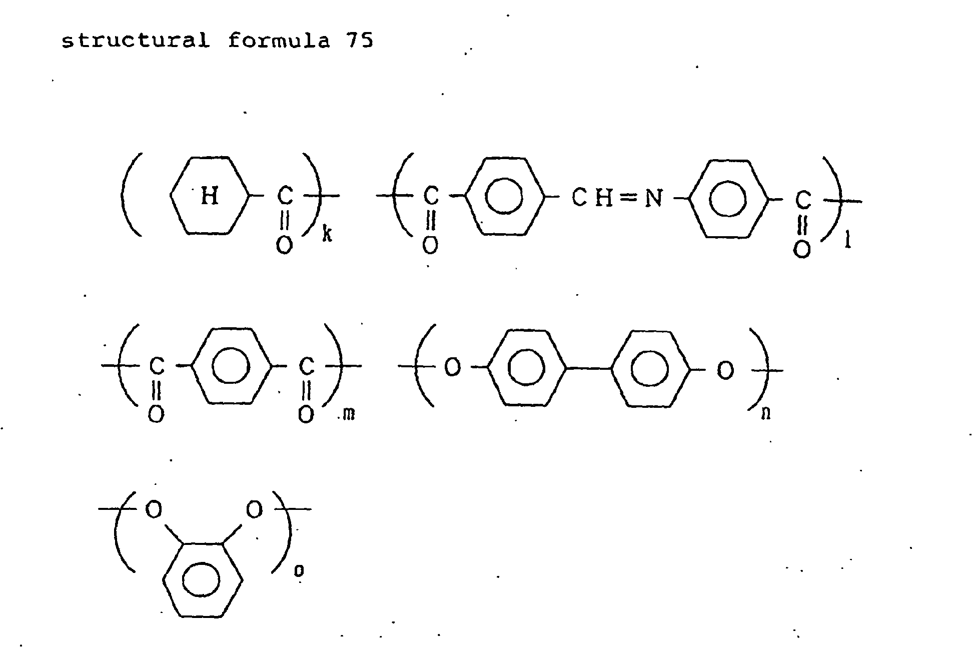 where n+o=k/2+l+m,
k/(l+m)=40/80~0/100, preferably 20/90~0/100 l/m=100/0~0/100, preferably 95/5~5/95,
n/o=100/0~0/100, preferably 95/5~5/95,
and k, l, m, n and o represent, respectively, a molar ratio.

In the case of the main chain type polymer, usually the molecular weight is preferably 0.05 to 3.0, more preferably 0.07 to 2.0, in terms of logarithmic viscosity as determined at 30 °C in a mixed solvent of phenol/tetrachloroethane (ratio of 60/40 by weight). If the logarithmic viscosity is less than 0.05, there is the possibility that the mechanical strength of the resulting compensation film may be lowered. Further, a logarithmic viscosity of more than 3.0 is not preferable because there is the possibility that the homeotropic orientation may be inhibited or the viscosity may become too high at the time of formation of liquid crystal, thus prolonging the time required for orientation.

In the case of the side chain type polymer liquid crystal, the weight average molecular weight is usually in the range of 5,000 to 200,000, preferably 10,000 to 150,000, as determined using polystyrene as standard. In the molecular weight is less than 5,000, there is the possibility that the mechanical strength of the compensation film may be lowered. A molecular weight of more than 200,000 is not preferable because there are the problems in film manufacturing that the solubility of the polymer in a solvent may be decreased and the viscosity of the polymer coating solution is rendered too high to prepare an uniform coating film.

Homogeneous orientation is judged in the same manner as for homeotropic orientation by use of the substrate not subjected to surface treatment such as silicon treatment, rubbing treatment, uniaxial orientation treatment etc. Whether homogeneous orientation is exhibited or not is judged by forming a film of the liquid crystalline polymer on the substrate and examining its orientation.

The method of synthesizing the above liquid crystalline polymer is not particularly limited. The liquid crystalline polymer can be synthesized by any polymerization method known in the art. By way of example, synthesis of polyester can be effected by melt polymerization or by an acid chloride method using an acid chloride of a corresponding dicarboxylic acid.

To obtain the compensation film having nematic hybrid orientation fixed uniformly in it from the liquid crystalline polymer having positive uniaxial anisotropy described above, the following orientation substrate subjected to the following steps is preferred in the present invention.

First, the orientation substrate is described.

To obtain nematic hybrid orientation from the positive uniaxial liquid crystalline polymer, a layer of the liquid crystalline polymer is preferably sandwiched above and below between different interfaces. If sandwiched above and below between the same interface, the upper and lower interfaces of the liquid crystalline polymer layer have the same orientation, thus making it difficult to obtain nematic hybrid orientation.

In one embodiment, one orientation substrate and an air interface are used. Specifically, the lower interface of the liquid crystalline polymer layer is contacted with the orientation substrate and the upper interface of the liquid crystalline polymer layer is contacted with air. Although upper and lower orientation substrates with different interfaces can also be used, one orientation substrate and an air interface are used preferably in the production process.

It is desirable that the orientation substrate which can be used in the present invention possesses anisotropy so as to be capable of regulate the tilt of the liquid crystal (projection of the director onto the orientation substrate). If the tilt of the liquid crystal cannot be regulated, it is merely possible to obtain only orientation declining in disordered directions (vector of the director projected onto the substrate becomes disordered).

The orientation substrate is specifically that having anisotropy in a face, and examples include plastic film substrates and uniaxially oriented plastic film substrates, such as polyimide, polyamide imide, polyamide, polyether imide, polyether ether ketone, polyether ketone, polyketone sulfide, polyether sulfone, polysulfone, polyphenylene sulfide, polyphenylene oxide, polyethylene terephthalate, polybutylene terephthalate, polyethylene naphthalate, polyacetal, polycarbonate, polyarylate, acrylic resin, polyvinyl alcohol, polypropylene, cellulose-based plastics, epoxy resin, phenol resin etc., metal substrates such as aluminum, iron, copper etc. provided with slit grooves on the surface, and glass substrates such as alkali glass, borosilicate glass, flint glass etc. slit-etched on the surface.

In the present invention, it is possible to use the plastic film substrates described above after subjected to rubbing treatment or plastic films after subjected to rubbing treatment, for examples the above various substrates having a rubbing polyimide film, a rubbing polyvinyl alcohol film etc., and the above various substrates having a deposited film of silicon oxide.

Out of the various orientation substrates described above, substrates suitable for forming nematic hybrid orientation therein include various substrates having a rubbing polyimide film, rubbing polyimide substrates, rubbing polyether ether ketone substrates, rubbing polyether ketone substrates, rubbing polyether sulfone substrates, rubbing polyphenylene sulfide substrates, rubbing polyethylene terephthalate substrates, rubbing polyethylene naphthalate substrates, rubbing polyarylate substrates, cellulose-based plastic substrates. The rubbing direction in these substrates usually corresponds to the tilt direction of the compensation film previously described.

In the compensation film used in the liquid crystal display of the invention, the upper and lower faces of the film are different in the angle between the director of the liquid crystalline polymer and the plane of the film, as described above. The angle in the vicinity of the interface of the film face in contact with the orientation substrate is regulated in the range of either 0 to 50° or 60 to 90° depending on the method of orientation treatment or the type of liquid crystalline polymer. Usually, the angle between the director of the liquid crystalline polymer in the vicinity of the film face in contact with the orientation substrate and the plane of the film is adjusted preferably in the range of 0 to 50° for the production process.

The compensation film is obtained by uniformly applying a liquid crystalline polymer exhibiting optically positive uniaxial anisotropy onto the orientation substrate described above, then uniformly orienting it, and fixing the orientation state. Application of the liquid crystalline polymer onto the orientation substrate can be conducted usually using a solution of the liquid crystalline polymer in various solvents or a melt of the liquid crystalline polymer. In the production process, application of the solution is preferable.

For application of the solution, the liquid crystalline polymer is dissolved in a suitable solvent to prepare a solution at predetermined concentration.

Although the solvent should be selected depending on the type of positive uniaxial liquid crystalline polymer (composition etc.), the following solvents are usually used: halogenated hydrocarbons such as chloroform, dichloromethane, carbon tetrachloride, dichloroethane, tetrachloroethane, trichloroethylene, tetrachloroethylene, chlorobenzene, orthodichlorobenzene etc., phenols such as phenol, parachlorophenol etc., aromatic hydrocarbons such as benzene, toluene, xylene, methoxybenzene, 1,2-dimethoxybenzene etc., acetone, ethyl acetate, tert-butyl alcohol, glycerin, ethylene glycol, triethylene glycol, ethylene glycol monomethyl ether, diethylene glycol dimethyl ether, ethyl Cellosolve, butyl Cellosolve, 2-pyrrolidone, N-methyl-2-pyrrolidone, pyridine, triethylamine, tetrahydrofurane, dimethylformamide, dimethylacetamine, dimethyl sulfoxide, acetonitrile, butyronitrile, carbon disulfide etc., and mixed solvents thereof such as a mixed solvent of halogenated hydrocarbons and phenols.

Although the concentration of the solution varies depending on the solubility of the positive uniaxial liquid crystalline polymer used and the thickness of the final objective compensation film, the concentration is in the range of usually 3 to 50 % by weight, preferably 7 to 30 % by weight

The solution of the positive uniaxial liquid crystalline polymer adjusted to a desired concentration in the above-enumerated solvent is applied to the orientation substrates described above. For application, it is possible to use spin coating, roll coating, printing, dipping coating, curtain coating etc.

After application, the solvent is removed to form a layer of the liquid crystalline polymer with uniform thickness on the orientation substrate. The conditions for removing the solvent are not particularly limited insofar as the solvent is almost removed and the layer of the liquid crystalline polymer is not fluidized or lost by flowing. Usually, drying at room temperature, drying in a drying oven, warm or hot air blow etc. are utilized to remove the solvent.

The object of these steps of application and drying is to first form a layer of the liquid crystalline polymer uniformly on the substrate, and the liquid crystalline polymer does still not form nematic hybrid orientation. Through the subsequent heat treatment step, monodomain nematic hybrid orientation is completed.

For formation of nematic hybrid orientation by heat treatment, the viscosity of the positive uniaxial liquid crystalline polymer should be lower to facilitate orientation by the interfacial effect. Accordingly, it is preferable for the temperature of thermal treatment to be higher. Further, depending on the liquid crystalline polymer, the resulting average tilt angle may vary depending on the temperature of heat treatment. In this case, it is necessary to set the temperature of heat treatment so as to attain an average tilt angle meeting the object. For example, if heat treatment at relatively low temperatures is necessary to achieve orientation having a certain tilt angle, the time necessary for orientation becomes longer because the viscosity of the liquid crystalline polymer is high at low temperatures. In a method effective for such a case, the liquid crystalline polymer is once thermally treated at high temperatures to achieve monodomain orientation and then the temperature for heat treatment is decreased stepwise or gradually to a desired temperature. Anyhow, according to the characteristics of the optically positive uniaxial liquid crystalline polymer used, heat treatment at a temperature of the glass transition point or more is preferable. The temperature for heat treatment is usually in the range of 50 to 300 °C, preferably 100 to 260 °C.

The time of heat treatment necessary for adequate orientation of the liquid crystalline polymer on the orientation substrate is usually in the range of 10 seconds to 120 minutes, particularly 30 seconds to 60 minutes although the time is varied depending on the type of liquid crystalline polymer (e.g. composition) and the temperature for heat treatment. In the case of less than 10 seconds, there is the possibility that orientation may be inadequate. Further, a time of more than 120 minutes is not preferable because productivity may be lowered.

In this manner it is possible to obtain uniform nematic hybrid orientation in a liquid crystalline state over the whole surface of the orientation substrate.

In the heat treatment step described above, a magnetic or electric field may be used for nematic hybrid orientation of the liquid crystalline polymer. However, if a magnetic or electric field is applied during heat treatment, the force of the uniform field acts on the liquid crystalline polymer during such application, and thus the director of the liquid crystal is easily directed toward a predetermined direction. That is, it is difficult to obtain the nematic hybrid orientation in which the director forms a different angle depending on the thickness direction of the film as shown in the present invention. Once orientation such as homeotropic or homogeneous orientation other than nematic hybrid orientation is formed, the force of the field is removed so that thermally stable nematic hybrid orientation can be obtained, but there is no particular merit in the process.

Then, by cooling the nematic hybrid orientation formed in a liquid crystalline state to a temperature of not more than the liquid crystalline transition point of the liquid crystalline polymer, the uniformity of the orientation can be fixed without deterioration.

The temperature for the cooling is not particularly limited insofar as it is a temperature of the liquid crystalline transition point or less. For example, by cooling the polymer at a temperature lower by 10 °C than the liquid crystalline transition point, uniform nematic hybrid orientation can be fixed. The means for cooling is not particularly limited, and the orientation can be fixed by transferring the polymer from the heating atmosphere in the heat treatment step to an atmosphere at a temperature lower than the liquid crystalline transition point, for example by merely placing it at room temperature. Further, forcible cooling such as air cooling, water cooling etc. or slow cooling may be conducted to improve production efficiency. However, the average tilt angle for some positive uniaxial liquid crystalline polymers may be different more or less depending on cooling rate. If there arises the necessity of regulating the average tilt angle strictly using the liquid crystalline polymer, the cooling operation is conducted preferably in consideration of the cooling conditions.

Now, regulation of the angle of the nematic hybrid orientation in the thickness direction of the film is described. The angle between the director of the liquid crystalline polymer and the plane of the film can be regulated as desired by suitably selecting the type of liquid crystalline polymer used, the composition, the orientation substrate, and the conditions for heat treatment. Further, even after the nematic hybrid orientation was fixed, the angle can be regulated as desired for example by uniformly removing the surface of the film or uniformly dissolving the surface of the film in a solvent. The solvent used should be selected suitably depending on the type of liquid crystalline polymer and the type of orientation substrate.

In the compensation film obtained in the above steps, the form of orientation i.e. nematic hybrid orientation has been uniformly oriented and fixed, and due to formation of this orientation, the upper and lower sides of the film are not equivalent and there is also anisotropy in the direction toward the inside of the face.

As described above, the form for use of the compensation film arranged between the TN liquid crystal cell and the upper and/or lower polarizing plate involves:
① use of only the compensation film after the orientation substrate is removed from the film;
② use of the compensation film as such formed on the orientation substrate; and
③ use of the compensation film after laminated on another substrate different from the orientation substrate.

In the case where the compensation film is used in the forms ② and ③, if the orientation substrate necessary for achieving nematic hybrid orientation can exert undesired effects on TN-LCD, the orientation substrate can be removed after the nematic hybrid orientation is fixed. After the orientation was fixed, the compensation film used in the present invention does not cause any orientational disturbance even if the orientation substrate is removed. As described above, any form of the compensation film can be used in the liquid crystal display of the invention.

The compensation film may also be provided with a protective layer such as transparent plastic film for the purpose of surface protection, strength enforcement, improvement of environmental reliability etc. It is possible to use the compensation film attached via an optical grade adhesive or self-adhesive to optically preferably substrates preferable as protective layers, for example plastic substrates such as polymethacrylate, polycarbonate, polyvinyl alcohol, polyether sulfone, polysulfone, polyarylate, polyimide, amorphous polyolefin, triacetyl cellulose etc.

Now, the arrangement for combination of the compensation film of the invention with the TN liquid crystal cell previously described is described in detail. The position of arrangement of this compensation film may be between the polarizing plate and the TN liquid crystal cell, and one or more compensation films can be arranged therebetween. In the present invention, it is practically preferable to compensate for viewing angles by one or two compensation films. Although it is also possible to compensate for viewing angles by three or more compensation films, such compensation leads to high costs and is thus not preferable. The position for specific arrangement is as follows. However, the following is a typical example, and is not intended to limit the present invention.

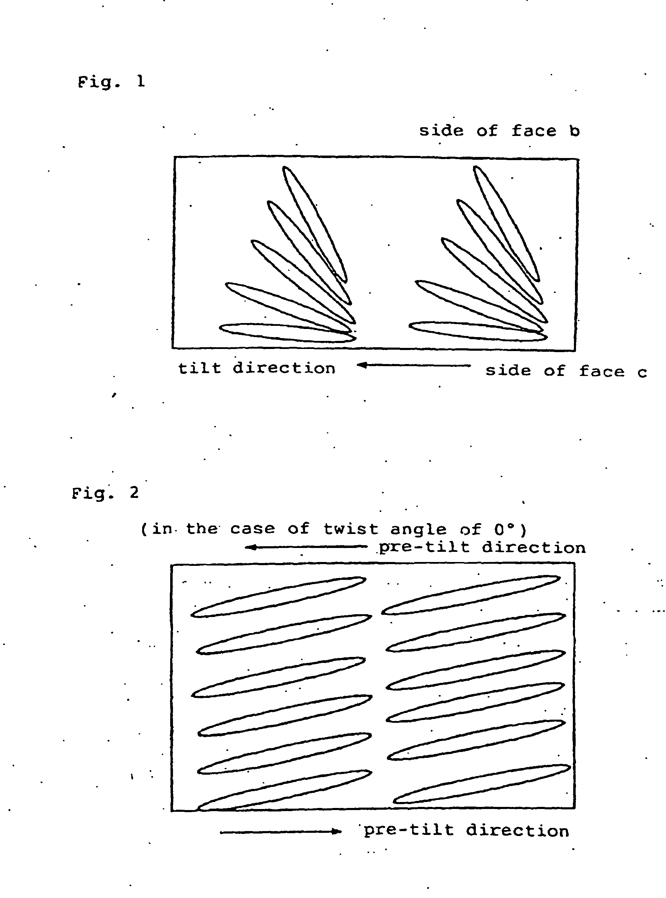

First, the tilt direction of the compensation film in the present invention is defined as the direction of the projection of the director of the liquid crystalline polymer toward a face which out of the 2 upper and lower faces of the film, has a smaller angle between the director of the liquid crystalline polymer and the plane of the film. For example, let us assume that the upper and lower 2 faces of the compensation film in Fig. 1 are faces b and c respectively. The angles between the plane of the film and the directors of the liquid crystalline polymer in the sides of faces b and c respectively in this compensation film indicate the relationship that the angle in the side of face b is larger than the angle in the side of face c. Then, when viewed from face b to face c in the thickness direction of the compensation film, the tilt direction of the compensation film in the present invention is defined as the direction in which while the angle between the director in the side of face b and the director in the side of face c is sharp, the director in the side of face b is parallel to a projected component of the director in the side of face c onto the plane of the film.

Then, the pre-tilt direction of the TN liquid crystal cell is defined as follows. Usually, the nematic liquid crystal in the TN liquid crystal cell is not parallel to the interface of the cell substrate but is tilted at a certain angle (when the twist angle of the nematic liquid crystal is 0°) as shown in Fig. 2. In this state, the pre-tilt direction in the present invention is defined as the direction in which while the angle between the director of the liquid crystal and the plane of the liquid crystal cell substrate is sharp, a projected component of the director is parallel. Accordingly, the pre-tilt direction is defined for each of the directions of the upper and lower liquid crystal cell substrates, as shown in Fig. 2.

First, arrangement of one compensation film is described. The compensation film is arranged between the polarizing plate and the TN liquid crystal cell, and the compensation film may be placed in the side of the upper face or the lower face of the liquid crystal cell. This arrangement is made such that the angle between the tilt direction of the compensation film and the pre-tilt direction in the cell substrate opposite to the liquid crystal cell substrate closest to the compensation film is in the range of usually 165 to 195° , preferably 170 to 190° , more preferably 175 to 185° . That is, they are arranged such that the above angle range is satisfied by the angle to the pre-tilt direction in the liquid crystal cell substrate in the lower side if the compensation film is arranged on the upper face of the TN liquid crystal cell, or by the angle to the pre-tilt direction in the liquid crystal cell substrate in the upper side if the compensation film is arranged in the lower face of the TN liquid crystal cell. If the above angle range is not satisfied, it is not possible to obtain an adequate effect of compensating for viewing angles.

Now, arrangement of 2 compensation films is described. For arrangement of the 2 compensation films, the films may be arranged in the same side; for example the 2 films may be arranged between the TN liquid crystal cell and the upper polarizing plate or between the liquid crystal cell and the lower polarizing plate, or the 1 film may be arranged between the TN liquid crystal cell and the upper polarizing plate or between the liquid crystal cell and the lower polarizing plate. The 2 compensation films may be those having the same or different optical parameters.

Arrangement of 1 compensation film between the TN liquid crystal cell and each of the upper and lower polarizing plates is described. In this arrangement, 1 compensation film is arranged in the same manner as in the above-described arrangement of 1 compensation film. That is, the angle between the tilt direction of each compensation film and the pre-tilt direction in the cell substrate opposite to the substrate of the TN liquid crystal cell closest to the compensation film is in the range of usually 165 to 195° , preferably 170 to 190° , more preferably 175 to 185° .

Now, arrangement of 2 compensation films between the TN liquid crystal cell and either the upper or lower polarizing plate is described. Here, the compensation film arranged closest to the TN liquid crystal cell is designated film 1, and the compensation film arranged between film 1 and the upper or lower polarizing plate is designated film 2. In this arrangement, film 1 arranged closest to the TN liquid crystal cell is arranged in the same manner as in the arrangement of one compensation film described above. That is, this arrangement is made such that the angle between the tilt direction of film 1 and the pre-tilt direction in the cell substrate opposite to the liquid crystal cell substrate closest to film 1 is in the range of usually 165 to 195° , preferably 170 to 190° , more preferably 175 to 185° . Then, arrangement of film 2 arranged between film 1 and the upper or lower polarizing plate is described. Film 2 is arranged such that the angle to the pre-tilt direction of the cell substrate of the TN liquid crystal cell closest to film 1, that is, the angle to the pre-tilt direction in the cell substrate opposite to the cell substrate used as the standard for the condition for arrangement of film 1, is in the range of usually 165 to 195° , preferably 170 to 190° , more preferably 175 to 185° .

Now, arrangement of the polarizing plates is described. Usually, the transmission axes of the upper and lower polarizing plates in TN-LCD are arranged to be perpendicular or parallel to each other in some cases. If the transmission axes of the upper and lower polarizing plates are arranged to be perpendicular to each other, the transmission axis of the polarizing plate and the rubbing direction in the TN liquid crystal cell substrate near the polarizing plate are arranged so as to be perpendicular, parallel, or at an angle of 45° in some cases. In the liquid crystal display of the present invention, when the polarizing plate is attached to the compensation film, its arrangement is not particularly limited and any arrangement described above may be used. In particular, it is desirable for the liquid crystal display of the invention that the transmission axes of the upper and lower polarizing plates are perpendicular to each other, while the transmission axis of the polarizing plate and the rubbing direction in the TN liquid crystal cell substrate near the polarizing plate are arranged to be perpendicular or parallel.

According to the present invention as described above, twisted nematic liquid crystal displays with higher contrast and wider viewing angles than ever can be obtained as twisted nematic liquid crystal displays using TFT or MIM elements by arrangement of a compensation film with nematic hybrid orientation fixed in a TN liquid crystal cell having specific optical parameters.

### EXAMPLES

Hereinafter, the present invention is described by reference to the Examples. Only Examples 1 and 2 represent embodiments of the invention.

Each analysis method used in the Examples is as follows.

### (1) Determination of the composition of the liquid crystalline polymer

The polymer was dissolved in deuterated chloroform or deuterated trifluoroacetic acid and measured in 400 MHz ¹H-NMR (JNM-GX 400, JEOL Ltd.).

### (2) Measurement of logarithmic viscosity

Measured at 30 °C in a mixed solvent of phenol/tetrachloroethane (ratio of 60/40 by weight) with an Ubbellohde viscometer.

### (3) Determination of liquid crystalline phase series

Determined by measurement with DSC (Perkin Elmer DSC-7) and observation under an optical microscope (BH2 polarization microscope, Olympus Optical Co., Ltd.).

### (4) Measurement of refractive index

Refractive index was measured by an Abbe refractometer (Type-4, Atago).

### (5) Analysis of polarization

Analyzed by Ellipsometer DVA-36VWLD (K. K. Mizojiri Kogaku Kogyo).

### (6) Measurement of film thickness

High-accuracy film level measuring instrument ET-10 (Kosaka Kenkyusho K. K.) was used. Additionally, the thickness of the film was also determined by interference-wave measurement (ultraviolet, visible, near infrared spectrophotometer V-570, Nippon Bunko K. K.) and from data on refractive index.

### Reference Example 1

### <Synthesis of Liquid Crystalline Polyester>

100 mmol 6-hydroxy-2-naphthoic acid, 100 mmol terephthalic acid, 50 mmol chlorohydroquinone, 50 mmol tert-butyl catechol, and 600 mmol acetic acid anhydride were used for acetylation at 140 °C for 2 hours in a nitrogen atmosphere. Subsequently, polymerization was conducted at 270 °C for 2 hours, at 280 °C for 2 hours and at 300 °C for 2 hours. The resulting reaction product was dissolved in tetrachloroethane and purified by recrystallization from ethanol to give 40.0 g liquid crystalline polyester (formula (1)). This liquid crystalline polyester possessed a logarithmic viscosity of 0.35, a nematic phase as the liquid crystalline phase, an isotropic phase-liquid crystalline phase transition temperature of 300 °C or more, and a glass transition point of 135 °C.

### <Orientation Test of Liquid Crystalline Polyester>

This liquid crystalline polyester was used to prepare a 10 wt% solution in a mixed solvent of phenol/tetrachloroethane (ratio of 6/4 by weight). This solution was applied onto a soda glass plate by screen printing, then dried and thermally treated at 230 °C for 30 minutes, and cooled and fixed at room temperature. A uniformly oriented film 1 of 20 µm in thickness was obtained. Conoscopic observation revealed that the liquid crystalline polyester has optically positive uniaxiality. It was also revealed that the polyester possesses homeotropic orientation.

### <Confirmation Operation ① of Orientation Structure>

A solution of 8 wt% liquid crystalline polyester of formula (1) in tetrachloroethane was prepared and applied by spin coating onto a glass plate having a rubbing polyimide film, dried, thermally treated at 250 °C for 30 minutes, cooled in air and fixed to give film 2. The resulting film 2 on the substrate was transparent, free of orientation defects and uniform, and had a film thickness of 2.0 µm.

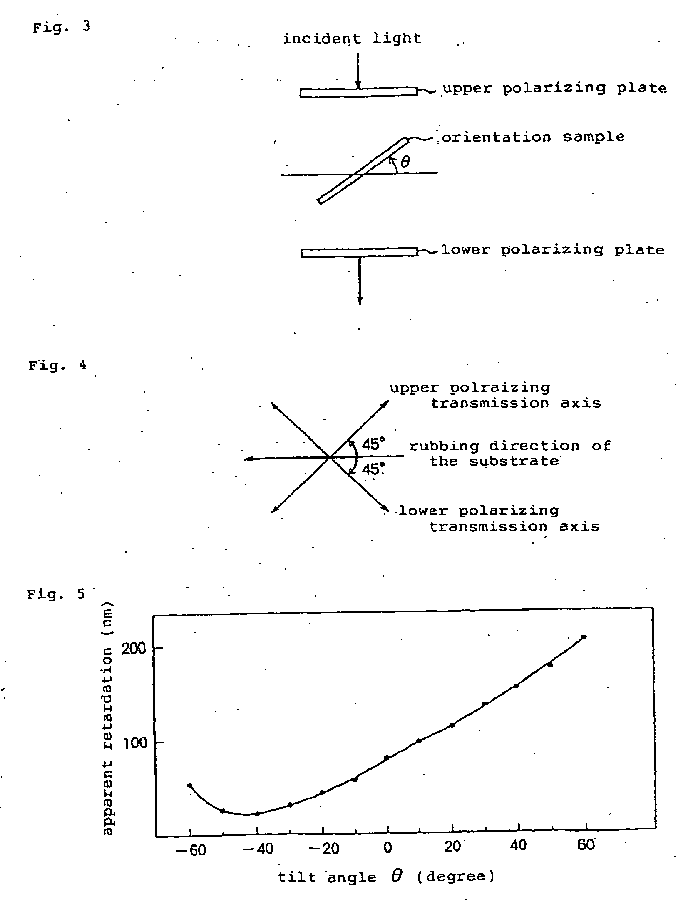

In the optical measurement system shown in Figs. 3 and 4, film 2 was tilted toward the rubbing direction of the orientation substrate to measure the retardation value. The result indicated that film 2 was unsymmetrical in the left and right and there was no angle at which the retardation value became 0, as shown in Fig. 5. From this result, it was found that the director of the liquid crystal polyester was tilted toward the substrate, and was not in the uniform tilt direction (the angle between the director and the surface of the substrate is in a constant orientation state in the thickness direction of the film).

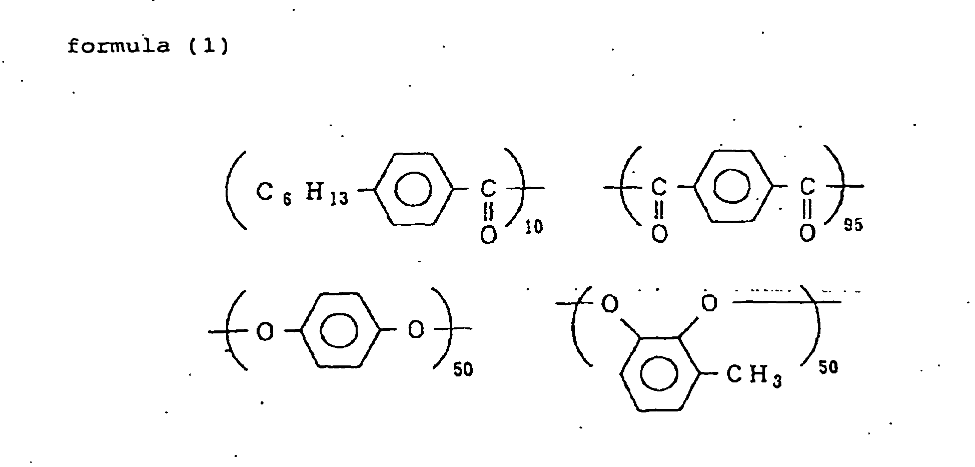

### <Confirmation Operation ② of Orientation Structure>

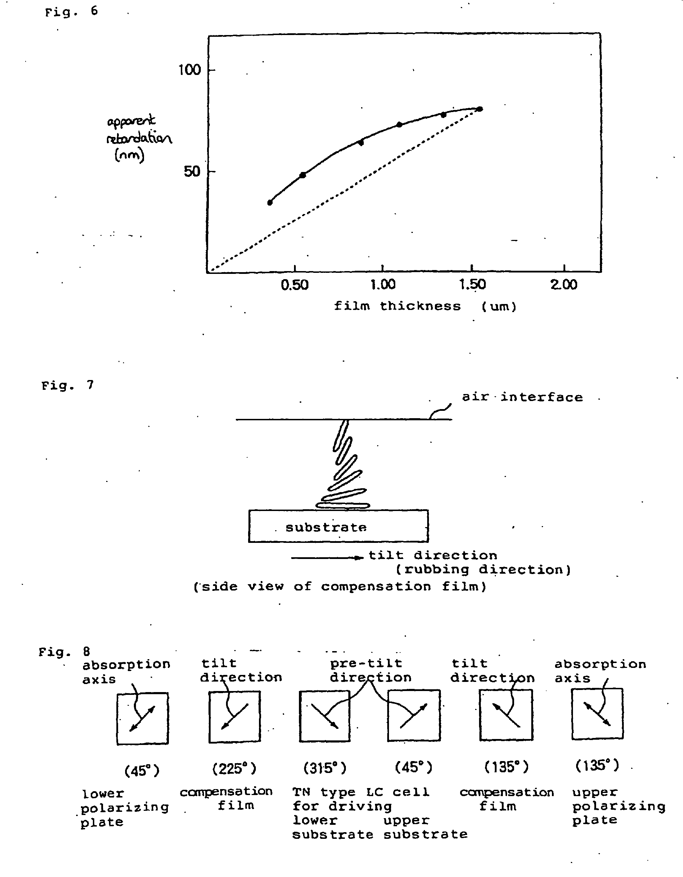

Then, film 2 on the substrate was cut into 5 pieces, and each piece was immersed in a methanol solution containing 5 wt% chloroform for a predetermined time and eluted from the upper face of the liquid crystalline layer. When the immersion time was 15 seconds, 30 seconds, 1 minute, 2 minutes, or 5 minutes, the thickness of the liquid crystal layer remaining without elution was 1.5 µm, 1.2 µm, 1.0 µm, 0.8 µm, or 0.5 µm respectively. The retardation value at θ = 0 (front retardation value) was measured in the optical system shown in Figs. 3 and 4, and the relationship between the film thickness and the retardation value was obtained (Fig. 6). As can be seen from Fig. 6, the film thickness and the retardation value are not in a linear relationship, thus revealing that the film is not in uniform tilt orientation. The dotted line in the graph is a straight line observed in a uniformly tilt oriented film.

### <Confirmation Operation ③ of Orientation Structure>

Then, the liquid crystalline polyester of formula (1) was oriented and fixed in the same manner as above on a glass substrate with a high refractive index (refractive index of 1.84) having a rubbing polyimide film to prepare film 3. The resulting film 3 was measured for its refractive index. When film 3 was arranged such that the glass substrate was brought into contact with the prism face of a refractometer, there was anisotropy in the refractive index in the face of the film, and the refractive index in a face perpendicular to the rubbing direction was 1.56, and the refractive index of a parallel face was 1.73, and the refractive index in the thickness direction was the constant value of 1.56 independent of the direction of film 3. From this, it was revealed that the bar-shaped liquid crystal molecules constituting the liquid crystalline polyesters in the side of the glass substrate were oriented in a plane parallel to the substrate. Then, when the side of the air interface of film 3 was arranged to be in contact with the prism face of the refractometer, the refractive index in the face had no anisotropy and the refractive index was the constant value of 1.56, and the refractive index in the thickness direction was the constant value of 1.73 independent of the direction of film 3. From this, it was revealed that the bar-shaped liquid crystal molecules constituting the liquid crystalline polyesters in the side of the air interface were oriented perpendicularly to the plane of the substrate.

From the operations ① to ③, it was estimated that the film formed from the liquid crystal polyester of formula (1) forms nematic hybrid orientation and is oriented as shown in Fig. 7 by the regulating force of the substrate interface due to rubbing and the regulating force of the air interface.

### <Analysis of Tilt Direction and Estimation of Angle between Director in Orientation Substrate Interface and Substrate Plane>

Film 3 formed on the highly refractive glass substrate having a rubbing imide film was covered closely with another glass substrate having a rubbing polyimide film. That is, film 3 was sandwiched between the 2 rubbing polyimide films. The rubbing directions in the upper and lower rubbing films were arranged to be at 180° to each other. In this state, it was thermally treated at 230 °C for 30 minutes. The sample film thus obtained was examined for its refractive index and analyzed for its polarization. The result of the refractive index measurement indicated that the same value was obtained with respect to the upper and lower sides of the sample film, and the refractive index in the face of the film was 1.56 in a face perpendicular to the rubbing direction, 1.73 in a parallel face, and 1.56 in the thickness direction of the film. From this, it was found in both the upper and lower sides of the sample film, the director was approximately parallel to the plane of the substrate in the vicinity of the interface of the substrate. Further, as a result of the polarization analysis, the refractive index structure had almost positive uniaxial anisotropy, and as a result of detailed analysis based on a crystal rotation method, the director was tilted slightly in the vicinity of the interface of the substrate. The angle between the plane of the substrate and the director was about 3° . Further, the tilt of the director agreed with the rubbing direction (the tilt direction of the film and the rubbing direction agreed).

From the foregoing, if it is assumed that the director in the interface of the substrate is determined almost by interaction between the liquid crystalline polyester and the interface of the orientation substrate, it is estimated that the angle between the director in film 3 in the substrate interface formed on 1 orientation substrate described above and the plane of the film is 3°.

### Comparative Example 1

A tetrachloroethane solution of 5 wt% liquid crystalline polyester (formula (1)) used in Reference Example 1 was prepared. This solution was applied by spin coating onto a glass substrate having a rubbing polyimide film, and the solvent was removed. Thereafter, it was thermally treated at 250 °C for 30 minutes. Thereafter, it was cooled to fix the orientation of the polyester. The resulting film 4 on the glass substrate had a nematic hybrid orientation structure, was transparent and free of orientation defects, and had uniform film thickness (0.85 µm). Further the average tilt angle was 44° , and the tilt direction agreed with the rubbing direction.

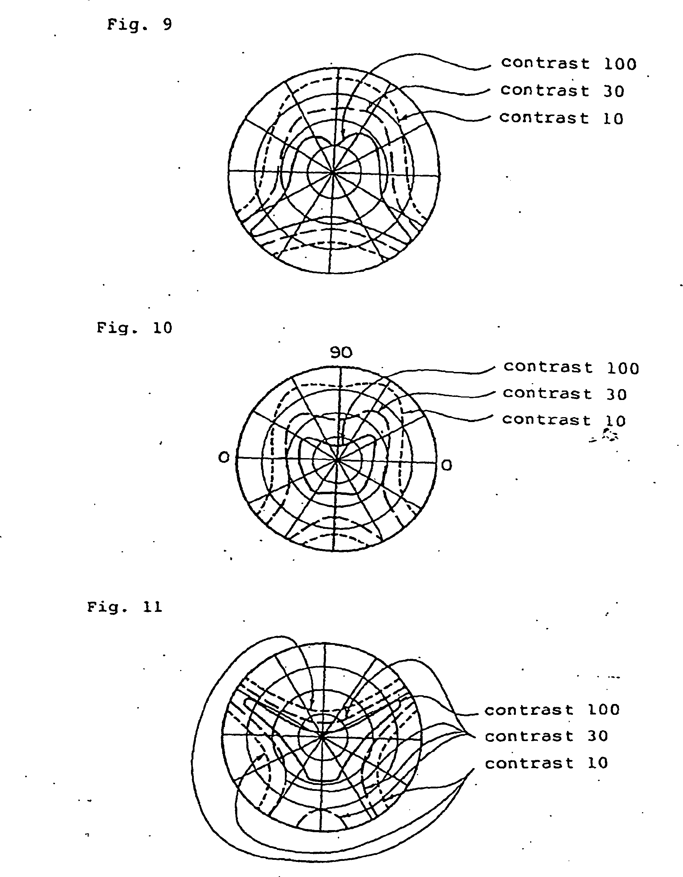

The two films 4 formed on the glass substrate having a rubbing polyimide film were arranged respectively in the upper and lower sides of the TN cell, as shown in the axial arrangement of Fig. 8. Both upper and lower films 1 on the cell were arranged such that the glass substrate side of both the films was placed near the cell substrate. The TN cell made use of ZLI-4792 (Δ n = 0.094) as the liquid crystal material, and the cell parameters were a cell gap of 4.2 µm, a Δ nd value of 395 nm, a twist angle of 90° (left twist) and a pre-tilt angle of 3° . The pre-tilt direction agreed with the rubbing direction in the liquid crystal cell substrate. Voltage (square wave at 300 Hz) was applied to the TN cell. The transmittance (white indication)/(black indication) of white indication at 0 V and black indication at 6 V was measured as a contrast ratio in all directions by use of FFP optical system DVS-3000 (Hamamatsu Photonix K. K.) to draw an iso-contrast curve. The results are shown in Fig. 9.

### Comparative Example 2

The liquid crystalline polyesters of formulae (2) and (3) were synthesized. The liquid crystalline polyester of formula (2) had a logarithmic viscosity of 0.10, a nematic phase as the liquid crystalline phase, and an isotropic phase-liquid crystalline phase transition temperature of 180 °C. The same orientation test as in Example 1 was conducted, and the result revealed that the liquid crystalline polyester of formula (2) exhibited homeotropic orientation and optically positive uniaxial anisotropy.

The liquid crystalline polyester of formula (3) had a logarithmic viscosity of 0.18, a nematic phase as the liquid crystalline phase, and an isotropic phase-liquid crystalline phase transition temperature of 300 °C or more. The same orientation test as in Example 1 was conducted, and the result revealed that the liquid crystalline polyester of formula (3) exhibited homogeneous orientation.

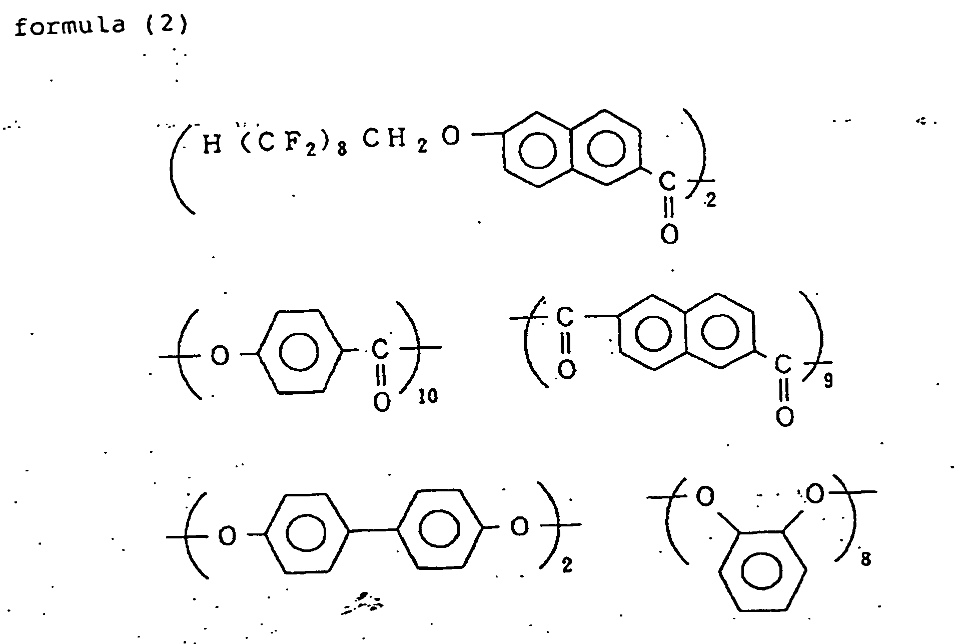

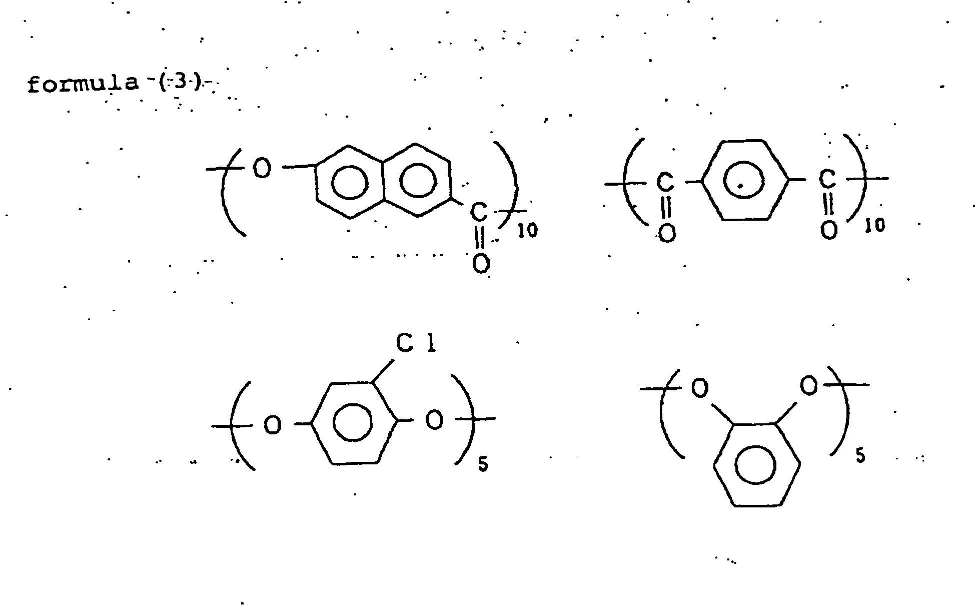

A N-methyl-2-pyrrolidone solution containing 8 wt% liquid crystalline polyesters of formulae (2) and (3) at the ratio of 50 : 50 (by weight) was prepared.

This solution was applied in a length of 10 m by die coating onto a polyether ether ketone film of 40 cm in width and dried with hot air at 120 °C and then thermally treated at 220 °C for 10 minutes. Thereafter, it was cooled to fix the orientation of the polyester composition (composition containing the polyesters of formulae (9) and (10) at the ratio of 50 : 50 (by weight)).

Triacetyl cellulose was attached via a self-adhesive onto the surface of film 5 thus obtained, and then the polyether ether ketone film used as the orientation substrate was peeled and removed, and film 5 was transferred onto the triacetyl cellulose film. The thickness of film 5 was 0.60 µm, and the average tilt angle in the thickness direction was 35° . Two films 5 transferred onto this triacetyl cellulose film were arranged respectively in the upper and lower sides of the TN cell, as shown in the structure of Fig. 8. The TN cell used was the same as in Comparative Example 1.

The contrast ratio in all directions was measured in the same manner as in Comparative Example 1, and the result is shown in Fig. 10.

### Comparative Example 3

An iso-contrast curve was drawn in the same manner as in Comparative Example 1 except that film 4 was not used. The results are shown in Fig. 11. Reference Example 2

### <Analysis of Tilt Angle of TN Liquid Crystal Cell>

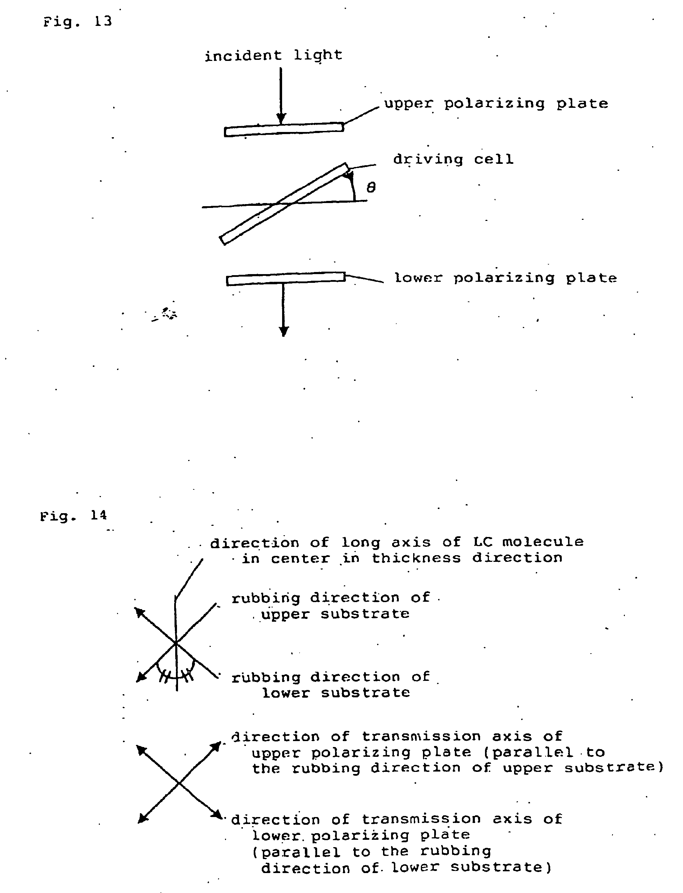

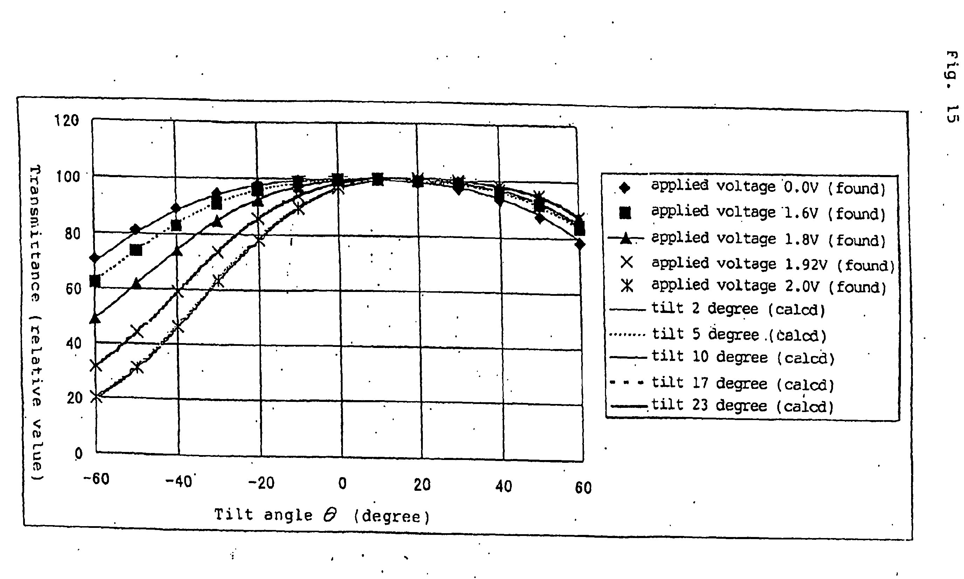

ZLI-4792 was used as the liquid crystal material to produce TN liquid crystal cell 1 with a cell gap of 4.8 µm, a Δnd value of 470 nm, a twist angle of 90° (left twist). Separately, the same liquid crystal material was used to produce twist-free liquid crystal cell 2 (the cell gap was the same as in the TN liquid crystal cell). As a result of detailed analysis of cell 2 based on a crystal rotation method, it was confirmed that the pre-tilt angle in the face of the orientation substrate on the prepared TN liquid crystal cell 1 was 3° . The liquid crystal cell 1 was measured for transmittance by use of the optical measuring instrument shown in Figs. 13 and 14, where under application of voltage, it was tilted toward the direction of the long axis of the liquid crystal molecule present in the center in the thickness direction of the cell. The result and the calculated value of the dependence of the transmittance on angle when the tilt angle of the liquid crystal molecule in the center in the thickness direction of the TN liquid crystal cell 1 was varied are shown in Fig. 15. From the correspondence between the measurement data and the calculated value, the tilt angle of the liquid crystal molecule present in the center in the thickness direction of the TN liquid crystal cell upon application of voltage was determined.

### Example 1

A tetrachloroethane solution of 5 wt% liquid crystalline polyester (formula (1)) used in Reference Example 1 was prepared. This solution was applied by spin coating onto a glass substrate having a rubbing polyimide film, and the solvent was removed. Thereafter, it was thermally treated at 250 °C for 30 minutes. Thereafter, it was cooled to fix the orientation of the liquid crystalline polyester. The resulting film 4 consisting of the liquid crystalline polyester on the glass substrate had nematic hybrid orientation, was transparent and free of orientation defects, and had a uniform film thickness (0.60 µm). Further, the average tilt angle of film 4 was 35° , and the tilt direction agreed with the rubbing direction.

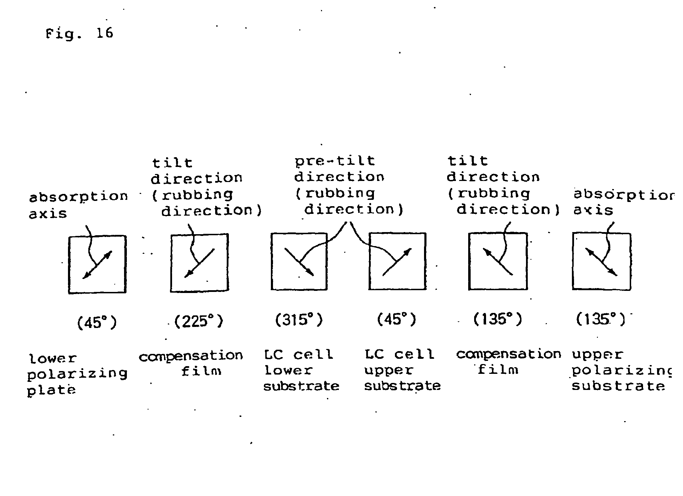

The two films 4 formed on the glass substrate having a rubbing polyimide film were arranged in the upper and lower sides of the TN cell, as shown in Fig. 16. Films 4 arranged on the upper and lower sides of the TN liquid crystal cell were arranged so that the glass substrate side of the film 4 was close to the cell substrate.

The TN liquid crystal cell was made of ZLI-4792 as the liquid crystal material and had a cell gap of 4.8 µm, a Δnd Δnd value of 470 nm, a twist angle of 90° (left twist), and a pre-tilt angle of 3° as cell parameters. The pre-tilt direction agreed with the rubbing direction of the cell substrates.

Voltage (square wave at 300 Hz) was applied to the liquid crystal cell. With indication in white at 1.92 V and in black at 6 V, the driving voltage of each tone was set such that the transmittance between the transmittance of white and the transmittance of black was divided into equal 8 parts. As a result of polarization analysis with tilted incident light of the TN liquid crystal cell upon application of voltage at 1.92 V, the tilt angle of the liquid crystal molecule in the center in the thickness direction of the liquid crystal cell was about 17° as determined in the same manner as in Reference Example 2 (Fig. 15).

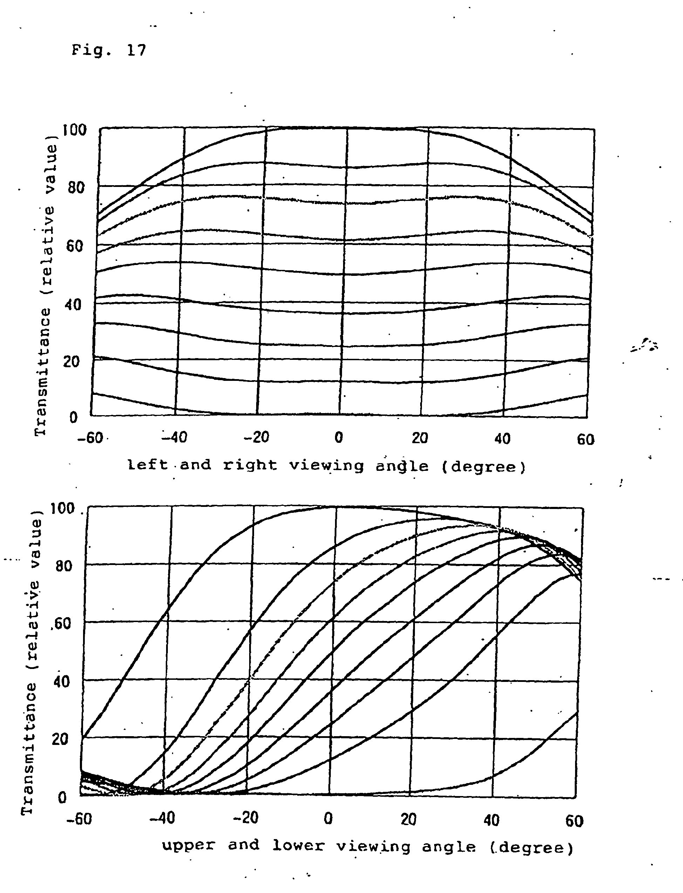

Transmittance measurement in all directions of the TN liquid crystal cell with the film arranged as shown in Fig. 16 was conducted by use of FEP optical system DVS-3000 (Hamamatsu Photonix K. K.), and the tone characteristics in the upper and lower sides and the left and right sides were evaluated. The results are shown in Fig. 17.

In the left and right directions, the tone inversion among the respective tones was not observed, and the tone inverse viewing angle at white level in the upper direction (viewing angle: positive) was widened by about 10° as compared with that at the driving voltage of 0 V for indication in white. Further, the reduction of the transmittance and the contrast on the front was limited to 0.5% or less as compared with that at the driving voltage of 0 V for indication in white.

### Example 2

A phenol/tetrachloroethane solution of 10 wt% liquid crystalline polyester (formula (1)) used in Reference Example 1 was prepared. This solution was applied by screen coating onto a glass substrate having a rubbing polyimide film, and the solvent was removed. Thereafter, it was thermally treated at 240 °C for 35 minutes. Thereafter, it was cooled to fix the orientation of the liquid crystalline polyester. The resulting film 5 on the glass substrate had nematic hybrid orientation, was transparent and free of orientation defects, and had a uniform film thickness (0.70 µm). Further, the average tilt angle was 45° , and the tilt direction agreed with the rubbing direction in the rubbing polyimide film.

The 2 films 5 formed on the glass substrate having the rubbing polyimide film were arranged respectively in the upper and lower sides of the TN liquid crystal cell, as shown in Fig. 16. Films 5 on the upper and lower sides of the TN liquid crystal cell were arranged such that the glass substrate sides of films 5 were close to the cell substrate.

The TN liquid crystal cell was made of ZLI-4792 as the liquid crystal material and had a cell gap of 4.4 µm, a Δnd value of 420 nm, a twist angle of 90° (left twist), and a pre-tilt angle of 3° as cell parameters. The pre-tilt direction agreed with the rubbing direction of the liquid crystal cell substrate.

Voltage (square wave at 300 Hz) was applied to the TN liquid crystal cell. With indication in white at 2 V and in black at 6 V, the driving voltage of each tone was set such that the transmittance between the transmittance of white and the transmittance of black was divided into equal 8 parts.

As a result of polarization analysis with tilted incident light of the TN liquid crystal cell upon application of voltage at 2 V, the tilt angle of the liquid crystal molecule in the center in the thickness direction of the liquid crystal cell was about 25° as determined in the same manner as in Reference Example 2.

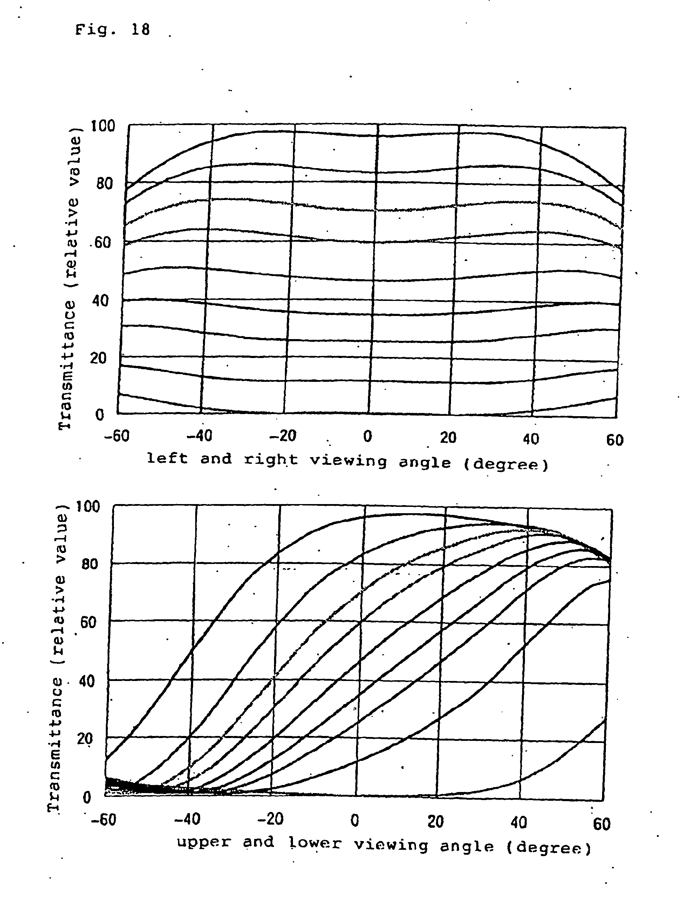

Transmittance measurement in all directions of the TN liquid crystal cell with the film arranged as shown in Fig. 16 was conducted, and the tone characteristics in the upper and lower sides and the left and right sides were evaluated. The results are shown in Fig. 18.

In the left and right directions, the inversion among the respective tones was not observed, and the tone inverse viewing angle at white level in the upper direction (viewing angle: positive) was widened by about 12° as compared with that at the driving voltage of 0 V for indication in white. Further, the reduction of the transmittance and the contrast on the front was limited to 5 % or less as compared with that at the driving voltage of 0 V for indication in white.

### Comparative Example 4

The tone characteristics of the TN liquid crystal cell were evaluated in the same manner as in Example 1 except that the driving voltage of white indication was 0 V. As a result of polarization analysis with tilted incident light of the TN liquid crystal cell, the tilt angle of the liquid crystal molecule in the center in the thickness direction of the liquid crystal cell was about 2° .

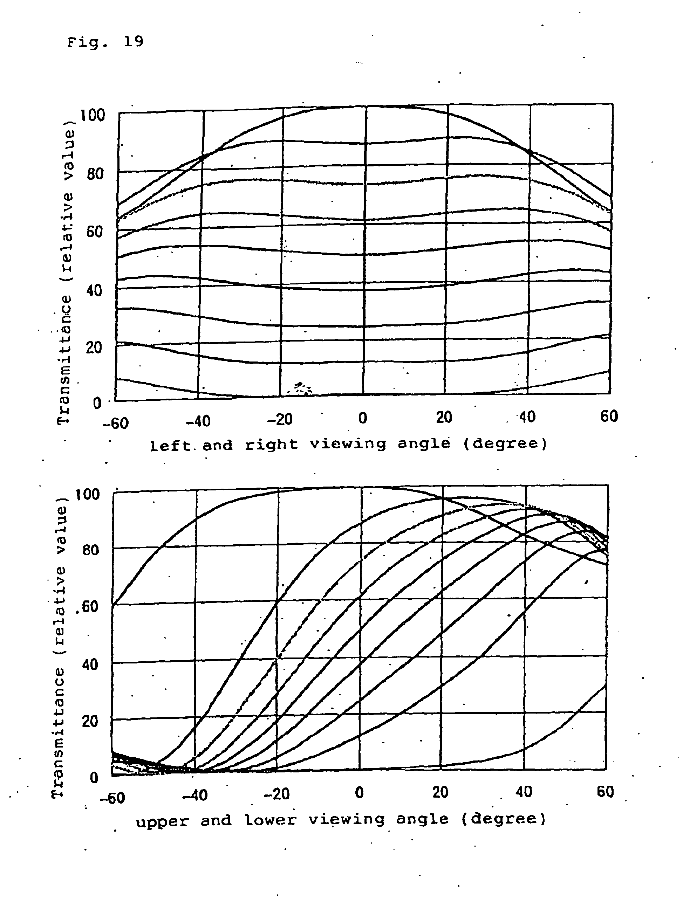

The evaluation results of tone characteristics are shown in Fig. 19. In the left and right directions, the tone inversion at white level was observed, and the inverse viewing angle at white level in the upper direction was also worsened by about 10° as compared with Example 1.

### Comparative Example 5

The tone characteristics of the TN liquid crystal cell were evaluated in the same manner as in Example 1 except that the driving voltage of white indication was 2.4 V. As a result of polarization analysis with tilted incident light of the TN liquid crystal cell, the tilt angle of the liquid crystal molecule in the center in the thickness direction of the liquid crystal cell was about 40° .

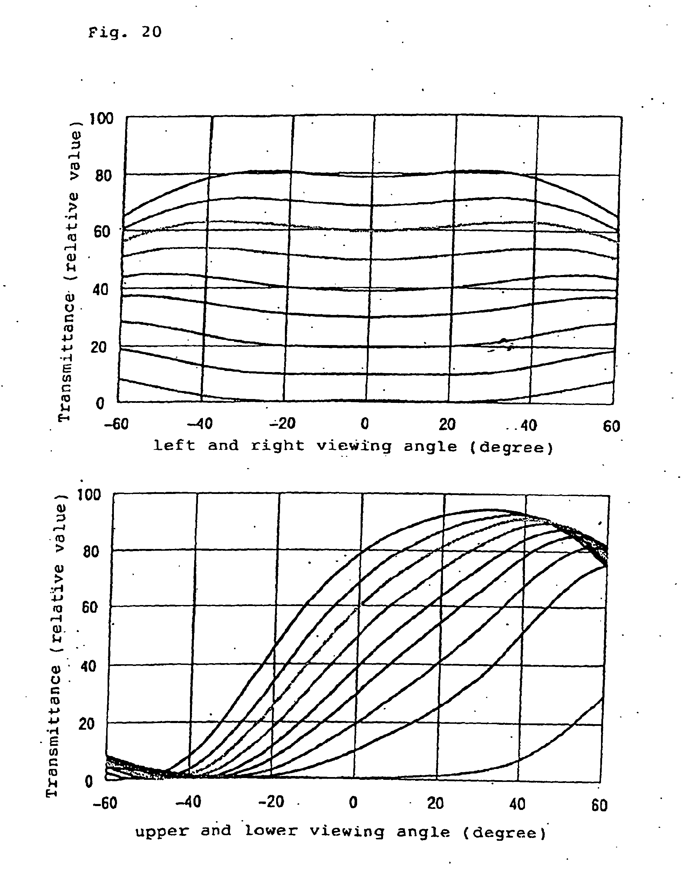

The evaluation results of tone characteristics are shown in Fig. 20. Tone characteristics in the left and right directions and the upper direction were improved, but the transmittance and the contrast on the front were worsened by about 20 % as compared with Comparative Example 4.

### Comparative Example 6

The tone characteristics of the TN liquid crystal cell were evaluated in the same manner as in Example 2 except that the driving voltage of white indication was 0 V. As a result of polarization analysis with tilted incident light of the TN liquid crystal cell, the tilt angle of the liquid crystal molecule in the center in the thickness direction of the liquid crystal cell was about 2°.

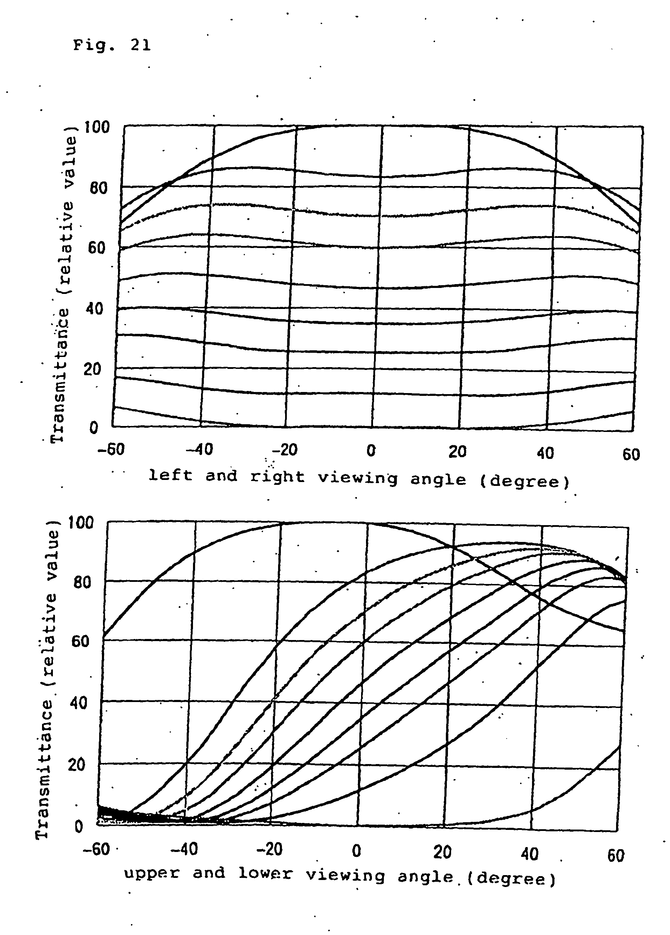

The evaluation results of tone characteristics are shown in Fig. 21. In the left and right directions, the tone inversion at white level was observed, and the inverse viewing angle at white level in the upper direction was worsened by about 12° as compared with the Example 2.

### Comparative Example 7

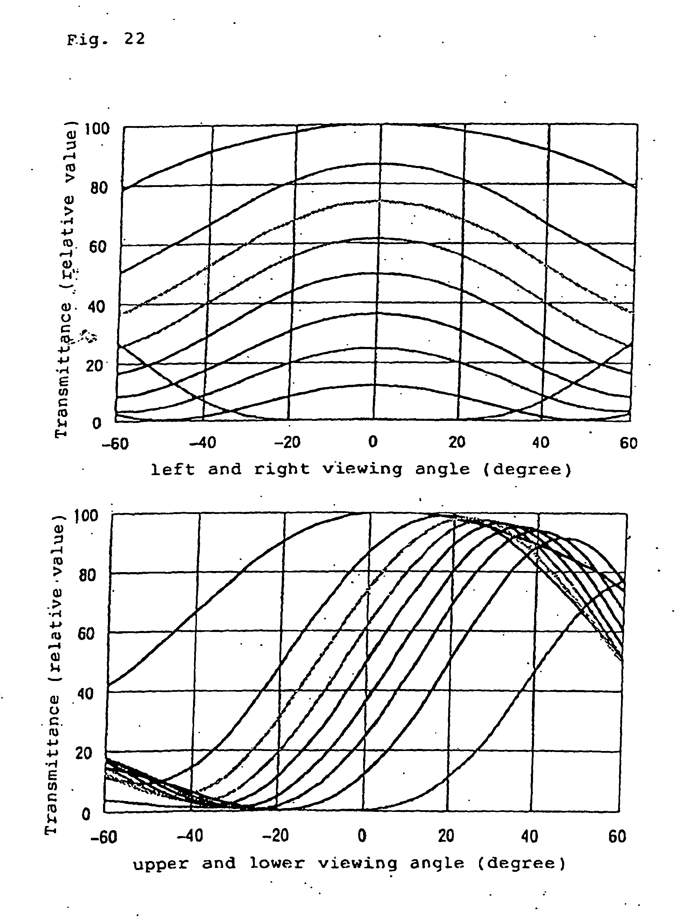

The tone characteristics of the TN liquid crystal cell were evaluated in the same manner as in Example 1 except that the film with fixed nematic hybrid orientation formed from the liquid crystal polyester was not used. The results are shown in Fig. 22. In the left and right directions, the tone inversion at black level was observed, and the inverse viewing angle at white level in the upper direction was worsened by about 15° as compared with Example 1.

## Claims

1. A twisted nematic liquid crystal display, comprising:
- at least one compensation film formed substantially from a liquid crystalline polymer, wherein nematic hybrid orientation formed by the liquid crystalline polymer in a liquid crystalline state has been fixed;
- a twisted nematic liquid crystal cell constituted of a pair of transparent substrates equipped with electrodes and nematic liquid crystals sandwiched between the substrates, two polarizing plates arranged above and below the liquid crystal cell; and
- a driving system for applying a driving voltage to the twisted nematic liquid crystal cell;
**characterised in that** the liquid crystalline polymer exhibits optically positive uniaxial anisotropy, and the driving system is adapted, in use, to apply a driving voltage to the twisted nematic liquid crystal cell when indicated in white, such that the tilt angle of the nematic liquid crystal molecule constituting the liquid crystal cell is in the range of 10 to 30°.

2. The twisted nematic liquid crystal display of Claim 1, wherein the product (Δnd) of the refractive anisotropy (Δn) of the nematic liquid crystals constituting the liquid crystal cell, multiplied by the thickness (d) of the liquid crystal layer in the liquid crystal cell, is in the range of 200 nm to 500 nm.

3. The twisted nematic liquid crystal display according to Claim 1 or Claim 2, having one or more C3 to C20 long chain substituted or monosubstituted alkyl groups or C2 to C20 long chain fluoroalkyl groups at one or both terminals of the liquid crystalline polymer or polymer molecule exhibiting optically positive uniaxial anisotropy.

4. The twisted nematic liquid crystal display of any preceding claim, wherein the liquid crystalline polymer is liquid crystalline polyester.

5. The twisted nematic liquid crystal display of any of Claims 2 to 4, wherein And is in the range of 250 nm to 470 nm.

6. The twisted nematic liquid crystal display according to any preceding claim, wherein the said angle is in the range of 15 to 25°.

7. A method for driving a twisted nematic liquid crystal display, comprising:
- at least one compensation film formed substantially from a liquid crystalline polymer, wherein nematic hybrid orientation formed by the liquid crystalline polymer in a liquid crystalline state has been fixed;
- a twisted nematic liquid crystal cell constituted of a pair of transparent substrates equipped with electrodes and nematic liquid crystals sandwiched between the substrates, two polarizing plates arranged above and below the liquid crystal cell; and
- a driving system for applying a driving voltage to the twisted nematic liquid crystal cell;
said method comprising applying a driving voltage to the twisted nematic liquid crystal cell, **characterised in that** when the cell is indicated in white, the driving voltage is set such that the tilt angle of the nematic liquid crystal molecule constituting the liquid crystal cell is in the range of 10 to 30°, and **in that** the liquid crystalline polymer exhibits optically positive uniaxial anisotropy.

## Patentansprüche

1. Verdrillte nematische Flüssigkristallanzeige, umfassend
- mindestens einen Kompensationsfilm, der im Wesentlichen aus einem Flüssigkristallpolymer gebildet ist, wobei die durch das Flüssigkristallpolymer in einem Flüssigkristallzustand gebildete nematische hybride Orientierung fixiert wurde;
- eine verdrillte nematische Flüssigkristallzelle, die aus einem mit Elektroden und sandwichartig zwischen den Substraten angeordneten nematischen Flüssigkristallen ausgestatteten transparenten Substratpaar gebildet wird, wobei zwei polarisierende Platten oberhalb und unterhalb der Flüssigkristallzelle angeordnet sind; und
- ein Antriebssystem zum Aufbringen einer Antriebsspannung auf die verdrillte nematische Flüssigkristallzelle,
**dadurch gekennzeichnet, dass** das Flüssigkristallpolymer eine optisch positive uniaxiale Anisotropie aufweist und das Antriebssystem dazu bestimmt ist, im Betrieb eine Antriebsspannung auf die verdrillte nematische Flüssigkristallzelle aufzubringen, wenn die Anzeige weiß ist, so dass der Neigungswinkel des die Flüssigkristallzelle bildenden nematischen Flüssigkristallmoleküls im Bereich von 10 bis 30° liegt.

2. Verdrillte nematische Flüssigkristallanzeige nach Anspruch 1, in der das Produkt (Δnd) der Brechungsanisotropie (Δn) der die Flüssigkristallzelle bildenden nematischen Flüssigkristalle multipliziert mit der Dicke (d) der Flüssigkristallschicht in der Flüssigkristallzelle im Bereich von 200 nm bis 500 nm liegt.

3. Verdrillte nematische Flüssigkristallanzeige nach Anspruch 1 oder 2 mit einer oder mehreren langkettigen substituierten oder monosubstituierten C₃-C₂₀-Alkylgruppen oder langkettigen C₂-C₂₀-Fluoralkylgruppen an einem oder beiden Enden des Flüssigkristallpolymers oder Polymermoleküls, das eine optisch positive uniaxiale Anisotropie aufweist.

4. Verdrillte nematische Flüssigkristallanzeige nach einem der vorstehenden Ansprüche, bei der das Flüssigkristallpolymer Flüssigkristallpolyester ist.

5. Verdrillte nematische Flüssigkristallanzeige nach einem der Ansprüche 2 bis 4, bei der Δnd im Bereich von 250 nm bis 470 nm liegt.

6. Verdrillte nematische Flüssigkristallanzeige nach einem der vorstehenden Ansprüche, bei der dieser Winkel im Bereich von 15 bis 25° liegt.

7. Verfahren zum Antrieb einer verdrillten nematischen Flüssigkristallanzeige, umfassend
- mindestens einen Kompensationsfilm, der im Wesentlichen aus einem Flüssigkristallpolymer gebildet ist, wobei die durch das Flüssigkristallpolymer in einem Flüssigkristallzustand gebildete nematische hybride Orientierung fixiert wurde;
- eine verdrillte nematische Flüssigkristallzelle, die aus einem mit Elektroden und sandwichartig zwischen den Substraten angeordneten nematischen Flüssigkristallen ausgestatteten transparenten Substratpaar gebildet wird, wobei zwei polarisierende Platten oberhalb und unterhalb der Flüssigkristallzelle angeordnet sind; und
- ein Antriebssystem zum Aufbringen einer Antriebsspannung auf die verdrillte nematische Flüssigkristallzelle,
wobei das Verfahren das Aufbringen einer Antriebsspannung auf die verdrillte nematische Flüssigkristallzelle umfasst, **dadurch gekennzeichnet, dass** dann, wenn die Anzeige in der Zelle weiß ist, die Antriebsspannung so eingestellt wird, dass der Neigungswinkel des die Flüssigkristallzelle bildenden nematischen Flüssigkristallmoleküls im Bereich von 10 bis 30° liegt, und dass das Flüssigkristallpolymer eine optisch positive uniaxiale Anisotropie aufweist.

## Revendications

1. Ecran à cristaux liquides nématiques en hélice, comprenant :
- au moins un film de compensation formé sensiblement d'un polymère cristallin liquide, dans lequel une orientation nématique hybride formée par le polymère cristallin liquide dans un état cristallin liquide a été fixée ;
- une cellule de cristaux liquides nématiques en hélice constituée d'une paire de substrats transparents équipée d'électrodes et de cristaux liquides nématiques pris en sandwich entre les substrats, deux plaques de polarisation disposées au-dessus et en dessous de la cellule de cristaux liquides ; et
- un système de commande pour appliquer une tension de commande à la cellule de cristaux liquides nématiques en hélice ;
**caractérisé en ce que** le polymère cristallin liquide montre une anisotropie uniaxiale optiquement positive, et le système de commande est adapté, en utilisation, pour appliquer une tension de commande à la cellule de cristaux liquides nématiques en hélice quand indiqué en blanc, de sorte que l'angle d'inclinaison de la molécule de cristal liquide nématique constituant la cellule de cristaux liquides soit dans la plage de 10 à 30°.

2. Ecran à cristaux liquides nématiques en hélice selon la revendication 1, dans lequel le produit (Δnd) de l'anisotropie réfractive (Δn) des cristaux liquides nématiques constituant la cellule de cristaux liquides, multiplié par l'épaisseur (d) de la couche de cristaux liquides dans la cellule de cristaux liquides, est dans la plage de 200 nm à 500 nm.

3. Ecran à cristaux liquides nématiques en hélice selon la revendication 1 ou la revendication 2, ayant un ou plusieurs groupes alkyl substitués ou monosubstitués à chaîne longue C3 à C20 ou groupes fluoro-alkyl à chaîne longue C2 à C20 à une ou plusieurs extrémités de la molécule de polymère ou de polymère cristallin liquide montrant une anisotropie uniaxiale optiquement positive.

4. Ecran à cristaux liquides nématiques en hélice selon l'une quelconque des revendications précédentes, dans lequel le polymère cristallin liquide est du polyester cristallin liquide.

5. Ecran à cristaux liquides nématiques en hélice selon l'une quelconque des revendications 2 à 4, dans lequel Δnd est dans la plage de 250 nm à 470 nm.

6. Ecran à cristaux liquides nématiques en hélice selon l'une quelconque des revendications précédentes, dans lequel ledit angle se situe dans la plage de 15 à 25°.

7. Procédé pour commander un écran à cristaux liquides nématiques en hélice, comprenant :
- au moins un film de compensation formé sensiblement à partir d'un polymère cristallin liquide, dans lequel une orientation hybride nématique formée par le polymère cristallin liquide à l'état cristallin liquide a été fixée ;
- une cellule de cristaux liquides nématiques en hélice constituée d'une paire de substrats transparents équipée d'électrodes et de cristaux liquides nématiques pris en sandwich entre les substrats, deux plaques de polarisation disposées au-dessus et en dessous de la cellule de cristaux liquides ; et
- un système de commande pour appliquer une tension de commande à la cellule de cristaux liquides nématiques en hélice ;
ledit procédé comprenant l'application d'une tension de commande à la cellule de cristaux liquides nématiques en hélice, **caractérisé en ce que** lorsque la cellule est indiquée en blanc, la tension de commande est définie de sorte que l'angle d'inclinaison de la molécule de cristaux liquides nématiques constituant la cellule de cristaux liquides soit dans la plage de 10 à 30°, et **en ce que** le polymère cristallin liquide montre une anisotropie uniaxiale optiquement positive.
